# EUROPEAN PATENT APPLICATION

(11) **EP 4 706 820 A1**
(43) Date of publication of application: **11.03.2026**
(21) Application number: 25177089.7
(22) Date of filing: 16.05.2025
(51) Int. Cl.: B01J 31/22

(54) **ENANTIOSELECTIVE C-H AMINATION WITH IRON PHTHALOCYANINE AND DIAMMONIUM TEMPLATE CATALYSTS**

(30) Priority: 16.05.2024 US 202418666416; 15.05.2025 EP 25176843
(71) Applicant: The University of Hong Kong, Pokfulam, Hong Kong (CN); Laboratory for Synthetic Chemistry and Chemical Biology Limited, Hong Kong Shatin (HK)
(72) Inventor: CHE, Chi Ming, Hong Kong (CN); AU, Long Hay, Hong Kong (CN)
(74) Representative: HGF

(57) **Abstract**

Described herein are catalytic systems that can catalyze enantioselective C-H functionalization reactions and methods of using thereof are described. These catalytic systems contain iron complexes as host catalysts and diammonium guest templates as cocatalysts. The iron-based host catalysts contain crown-ether phthalocyanine ligands. The diammonium guest templates are bidentate compounds with chirality. The iron-based host catalysts and the bidentate ammonium guest templates can provide a complex steric environment with the for stereospecific and site-selective C-H functionalization, such as C-H amination. For example, enantioselective C-H amination reaction performed using the disclosed methods can achieve high enantiomeric ratio (i.e., at least 2:1) and optionally high yield (i.e., at least 30%).

## Description

### FIELD OF THE INVENTION

The disclosed invention is generally in the field of C-H functionalization using catalytic systems containing iron-based catalysts and diammonium co-catalysts.

### BACKGROUND OF THE INVENTION

Dirhodium paddlewheel has dominated the field of C-H functionalization via metal-carbene/nitrene intermediates for four decades. The push within this catalysis community to replace precious metal catalysts with 3d transition metals due to sustainable and cost factors has led iron emerging as a candidate metals. While examples of iron catalyzed C-H amination are much reported (E.T. Hennessey and T. A. Betley, Science, 2013, 340, 591-595; Bagh, et al., J. Am. Chem. Soc. 2017, 139, 5117-5124), there are limited examples of iron catalysts that are commercially available. This is mainly due to the low stability of iron catalysts supported by low-coordinate ligand systems and the low valency of the iron center, which leads to spontaneous reactions upon contact with oxygen.

Stable iron catalysts for C-H functionalization under air atmosphere are often supported by polydentate ligands (e.g. porphyrin, phthalocyanine, oligopyridine), which usually lead to reduced reactivity. Further, these polydentate ligands supported iron catalysts struggle to control selectivity (site-selective, enantioselective, diastereoselectivity, etc) due to their planar ligand scaffold of most polydendate ligands. Current solutions for improving selectivity includes: (1) construction of three-dimensional covalent framework through often demanding and intensive organic synthesis. (H.-H. Wang et al., Angew. Chem. Int. Ed. 2023, 62, e202218577; W.-C. Lee and X. P. Zhang, Nat. Chem. 2023, 15, 1499); and (2) incorporation of transition metal chemistry in genetic edited biomolecules of protein, DNA and peptides (S. Gao et al., J. Am. Chem. Soc. 2023, 145, 20196; A. Rioz-Marinez et al., Angew. Chem. Int. Ed. 2016, 55, 14136; J. Serrano-Plana et al., J. Am. Chem. Soc. 2020, 142, 10617; X. Ren et al., 30 ACS Catal. 2020, 10, 2308.). Both solutions are of a high cost during mass production of such transition metal catalysts.

In addition, recent literature reports have highlighted the sensitivity of metal-ligand multiple bonded reaction intermediates (metal-carbene, -nitrene and -imido) in aqueous condition that have led to diminished reactivity or alternating pathways (Y. Tan et al., Angew. Chem. Int. Ed. 2020, 58, 21706; E. J. Meeus et al., Chem Catal. 2023, 3, 100700). Thus, there remains a need to develop catalysts that catalyze C-H functionalization reactions with selectivity under hydrophobic conditions.

Therefore, it is an object of the present invention to provide supramolecular catalytic systems containing iron-based catalysts and chiral diammonium guest co-catalysts.

It is a further object of the present invention to provide methods of using such catalytic systems in C-H functionalization reactions with selectivity.

### SUMMARY OF THE INVENTION

Catalytic systems that can catalyze C-H functionalization reactions with selectivity (such as enantioselectivity) and methods of using thereof are described. These catalytic systems contain iron complexes as host catalysts and diammonium guest templates as co-catalysts. The iron-based host catalysts contain crown-ether phthalocyanine ligands. The diammonium guest templates are bidentate compounds with chirality. The iron-based host catalysts and the bidentate ammonium guest templates can provide a complex steric environment with the for stereospecific and site-selective C-H functionalization, such as C-H amination. Without being bound to any theories, it is believed that the bidentate ammonium guest templates can spontaneously self-assemble with the crown-ether components of the iron-based host catalysts through non-covalent interactions to form a thermal stable structure.

The catalytic systems provide an approach for selective iron catalysis via supramolecular catalysis. The iron-based phthalocyanine host catalysts and chiral diammonium guest co-catalysts can self-assemble in a hydrophobic environment in a similar manner as biocatalytic systems to form a supramolecular catalytic system. Through engineering of a phthalocyanine ligand (which is readily available), the catalytic system can catalyze C-H functionalization reactions with high level of enantioselectivity, which is the first example in over 4000 publications.

The iron-based host catalysts can have the structure of Formula I: 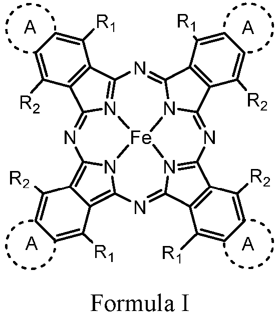 wherein: (i) each occurrence of A, together with the carbon atoms to which it is attached, can form a crown ether; (ii) each occurrence of R₁ and R₂ can be independently hydrogen, a substituted or unsubstituted alkyl, a substituted or unsubstituted alkenyl, a substituted or unsubstituted alkynyl, a substituted or unsubstituted aryl, a substituted or unsubstituted polyaryl, a substituted or unsubstituted heteroaryl, a substituted or unsubstituted heteropolyaryl, a substituted or unsubstituted cyclic group, a substituted or unsubstituted heterocyclic, a substituted or unsubstituted aralkyl, a halide, a hydroxyl, an alkoxyl, an amino, an amido, a carbonyl, a nitro, a nitrile, or a thiol; and (iii) the substituents can be independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

**In** some forms, each occurrence of A, together with the carbon atoms to which it is attached, can form a 12-crown-4 ether, a 15-crown-5-ether, an 18-crown-6 ether, a dibenzo-18-crown-6 ether, a 24-crown-8 ether, or an aza-crown ether.

**In** some forms, the host catalyst can have the structure of Formula II:

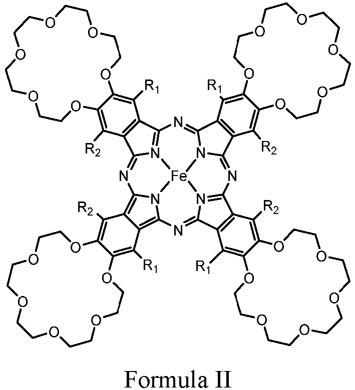

In some forms, each occurrence of R₁ and R₂ can be independently hydrogen, a substituted or unsubstituted alkyl, a substituted or unsubstituted alkenyl, a substituted or unsubstituted alkynyl, a hydroxyl, an alkoxyl, or a carbonyl. In some forms, each occurrence of R₁ and R₂ can be hydrogen.

The guest template can have the structure of Formula III: 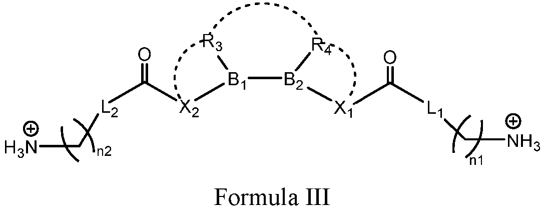 wherein: (i) B₁ and B₂ can be independently absent, a carbon atom, a substituted or unsubstituted aryl, a substituted or unsubstituted polyaryl, a substituted or unsubstituted heteroaryl, a substituted or unsubstituted heteropolyaryl, or a substituted or unsubstituted heterocyclic; (ii) R₃ and R₄ can be independently absent, hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic; (iii) ------ can be absent or a bond (single, double, or triple); (iv) X₁ and X₂ can be independently absent, oxygen atom, or NR₅, and R₅ is absent, hydrogen, or a substituted or unsubstituted alkyl; (v) L₁ and L₂ can be independently absent or 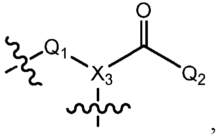 X₃ can be a nitrogen atom or CR₆, R₆ is hydrogen or a substituted or unsubstituted alkyl, Q₁ and Q₂ can be independently a substituted or unsubstituted alkyl, a substituted or unsubstituted alkenyl, or a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, a substituted or unsubstituted cycloalkyl, a substituted or unsubstituted cycloalkenyl, or a substituted or unsubstituted cycloalkynyl; (vi) n₁ and n₂ can be independently an integer from 0 to 20; and (vii) the substituents can be as described above for Formula I.

In some forms, B₁ and B₂ can be independently a carbon atom, a substituted or unsubstituted aryl, or a substituted or unsubstituted polyaryl; and R₃ and R₄ are independently absent, hydrogen, a substituted or unsubstituted alkyl, a substituted or unsubstituted aryl, or a substituted or unsubstituted aralkyl. In some forms, the moiety 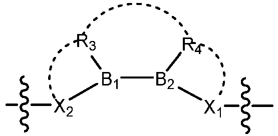 of the guest template can be: 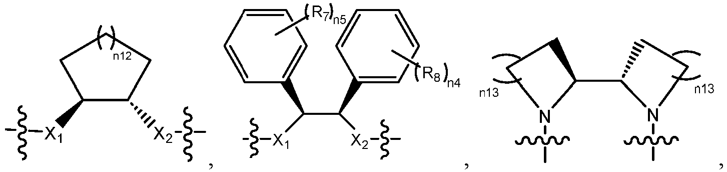 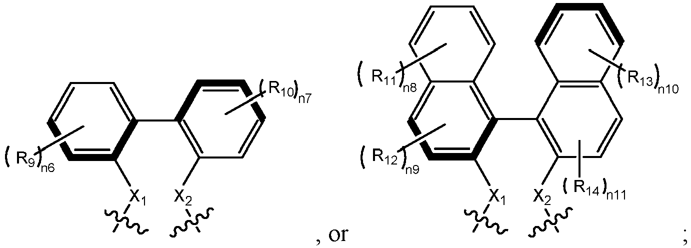 X₁ and X₂ can be independently an oxygen atom or NR₅, R₅ can be absent or hydrogen; n₄ and n₅ can be independently an integer from 0 to 5; n₆, n₇, n₈, and n₁₀ can be independently an integer from 0 to 4; n₉ and n₁₁ can be independently an integer from 0 to 2; n₁₂-n₁₄ can be independently an integer from 1 to 6; and R₇-R₁₄ can be independently hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic.

In some forms, L₁ and L₂ can be independently 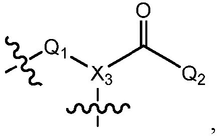 wherein X₃ can be a nitrogen atom, and wherein Q₁ and Q₂ can be independently a substituted or unsubstituted aryl, a substituted or unsubstituted polyaryl, a substituted or unsubstituted cycloalkyl, a substituted or unsubstituted cycloalkenyl, or a substituted or unsubstituted cycloalkynyl. In some forms, Q₁ and Q₂ can be unsubstituted phenyl.

The disclosed catalytic system contains a host catalyst and a guest template. The host catalyst can have any one of the structures described above for iron-based host catalysts; the guest template can have any one of the structures described above for diammonium guest templates. Generally, the host catalyst and the guest template in the catalytic system can have a molar ratio ranging from 1:10 to 1:1, from 1:5 to 1:1, such as 1:2.

In some forms, the host catalyst and the guest template of the catalytic system can be non-covalently bound to each other, such as via the crown ether of the host catalyst and the ammonium group of the guest template. The binding between the host catalyst and the guest template can have a log(K) of at least 4.0, such as in a range from 4.0 to about 8.0 or from 4.0 to about 6.0.

In some forms, the host catalyst and the guest template of the catalytic system can form a structure of:

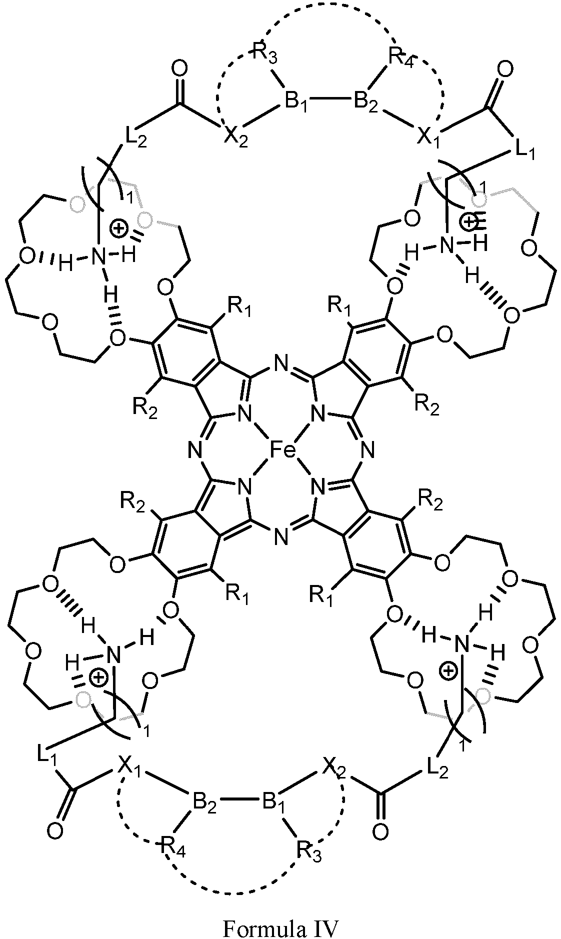

For example, the host catalyst and the guest template of the catalytic system can form a complex having a structure of:

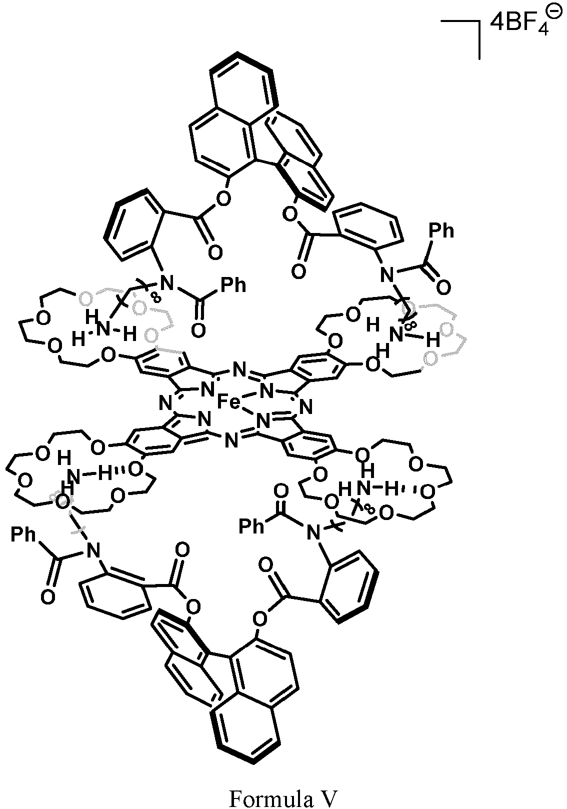

Methods for enantioselective C-H amination of a substrate using the disclosed catalytic systems are also disclosed. Enantioselective C-H amination reaction performed using the disclosed methods can achieve high enantiomeric ratio (i.e., at least 2:1) and optionally high yield (i.e., at least 30%). For example, the aminated product formed from the enantioselective C-H amination reaction catalyzed by the catalytic system disclosed herein can have an enantiomeric ratio of at least 2:1, such as in a range from 2:1 to 99:1, from 4:1 to 99:1, from 9:1 to 99:1, or from 19:1 to 99:1, as determined by chiral HPLC; and optionally a yield of at least 30%, at least 40%, at least 50%, in a range from about 30% to about 70%, from about 40% to about 70%, or from about 50% to about 70%.

Generally, the method includes: (i) maintaining a reaction mixture at room temperature for a period of time sufficient to form a product, wherein the reaction mixture contains the substrate, a nitrogen-source reactant, the disclosed catalytic system, and a solvent.

In some forms, the nitrogen-source reactant in the reaction mixture can be R'-NH₂ or R''IN-R', wherein R' can be -SO₂-R'₁ or -SO₃-R'₂; R'₁ and R'₂ can be independently a substituted or unsubstituted phenyl or a substituted or an unsubstituted alkyl (e.g., an unsubstituted linear or branched C1-C10 alkyl, an unsubstituted linear or branched C1-C8 alkyl, an unsubstituted linear or branched C1-C6 alkyl, an unsubstituted linear or branched C1-C4 alkyl, etc., such as a tert-butyl, or a haloalkyl, such as - CH₂CCl₃, -CCl₃, -CH₂CH₂CCl₃, -CH₂CCl₂CCl₃, etc.); R'' can be a substituted or unsubstituted phenyl; and the substituents, when present, can be independently an unsubstituted alkyl (e.g., any one of those described above, such as a methyl), a halide (such as chloride), a nitro, a cyano, a nitrile, or a carbonyl. In some forms, the nitrogen-source reactant in the reaction mixture can be R'-NH₂ or R''IN-R', wherein R' can be Tces, Ts, Ns, or o/p/m-halobenzene sulfonyl or sulfonate (such as a p-chlorobenzene sulfonyl or p-chlorobenzene sulfonate); and R'' can be an unsubstituted phenyl or a phenyl substituted with alkyl or halide (such as a chlorobenzene or alkylbenzene) at any suitable position(s) on the benzene ring. In some forms, the nitrogen-source reactant in the reaction mixture can be PhINTces.

In some forms, the substrate in the reaction mixture can have the structure of R-H, and the product formed by the enantioselective C-H amination reaction can have the structure of R-NHR', wherein R can be a substituted or unsubstituted aryl (e.g., a substituted or unsubstituted tetralin, a substituted or unsubstituted indane, a substituted or unsubstituted aralkyl, etc.), a substituted or unsubstituted polyaryl, a substituted or unsubstituted heteroaryl, a substituted or unsubstituted heteropolyaryl, a substituted or unsubstituted heterocyclyl (e.g., a substituted or unsubstituted chromane, a substituted or unsubstituted isochromane, a substituted or unsubstituted thiochromane, a substituted or unsubstituted isothiochromane, dihydrobenzofuran, dihydroisobenzofuran, dihydrobenzothiophene, dihydroisobenzothiophene, etc.), a substituted or unsubstituted cycloalkyl (monocyclic or polycyclic, such as a fused cycloalkyl ring), a substituted or unsubstituted cycloalkenyl (monocyclic or polycyclic, such as a fused cycloalkenyl ring), or a substituted or unsubstituted cycloalkynyl (monocyclic or polycyclic, such as a fused cycloalkynyl ring); the substituents can be independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a siloxy, a sulfinyl, a sulfonyl, a sulfonic acid, a phosphonium, a phosphanyl, a phosphoryl, a phosphonyl, or a thiol, or a combination thereof; and R' can be any one of those described above for R'-NH₂ or R''IN-R', such as Tces, Ts, Ns, or o/p/m-halobenzene sulfonyl or sulfonate (such as a p-chlorobenzene sulfonyl or p-chlorobenzene sulfonate). In some forms, R can be a substituted or unsubstituted aryl (e.g., a substituted or unsubstituted tetralin, a substituted or unsubstituted indane, a substituted or unsubstituted aralkyl, etc.), a substituted or unsubstituted polyaryl, a substituted or unsubstituted heteroaryl, a substituted or unsubstituted heteropolyaryl, or a substituted or unsubstituted heterocyclyl (e.g., a substituted or unsubstituted chromane, a substituted or unsubstituted isochromane, a substituted or unsubstituted thiochromane, a substituted or unsubstituted isothiochromane, dihydrobenzofuran, dihydroisobenzofuran, dihydrobenzothiophene, dihydroisobenzothiophene, etc.).

In some forms, the substrate in the reaction mixture can have the structure of Formula VI, and the product formed by the enantioselective C-H amination reaction can have the structure of Formula VII: 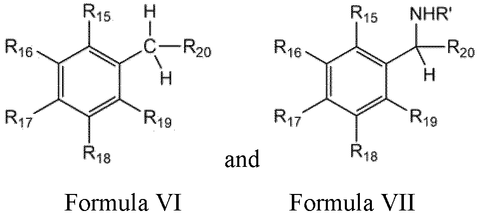 wherein R₁₅-R₂₀ can be independently hydrogen, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted alkenyl, a substituted or unsubstituted alkynyl, a substituted or unsubstituted aryl (e.g., a substituted or unsubstituted phenyl or benzyl), an alkoxyl (e.g., a methoxyl, an ethoxyl, etc.), a halide, a hydroxyl, a carbonyl, an amino, an amido, a silyl, or a siloxyl, or R₂₀ and R₁₅ together or R₂₀ and R₁₉ together, with the carbon atoms to which they are attached, can form a substituted or unsubstituted cycloalkyl (including monocyclic, such as a substituted or unsubstituted cyclopentyl and cyclohexyl, and polycyclic, such as a substituted or unsubstituted fused cycloalkyl ring), a substituted or unsubstituted cycloalkenyl (monocyclic or polycyclic, such as a fused cycloalkenyl ring), a substituted or unsubstituted cycloalkynyl (monocyclic or polycyclic, such as a fused cycloalkynyl ring), a substituted or unsubstituted aryl, a substituted or unsubstituted polyaryl, a substituted or unsubstituted heterocyclyl (e.g., a substituted or unsubstituted oxanyl, a substituted or unsubstituted thianyl, a substituted or unsubstituted oxolanyl, a substituted or unsubstituted thiolanyl, etc.), a substituted or unsubstituted heteroaryl, or a substituted or unsubstituted heteropolyaryl; the substituents, when present, can be independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a siloxy, a sulfinyl, a sulfonyl, a sulfonic acid, a phosphonium, a phosphanyl, a phosphoryl, a phosphonyl, or a thiol, or a combination thereof, such as a substituted or unsubstituted alkyl, a substituted or unsubstituted aryl, a carbonyl, an oxo, an amino, or an alkoxyl; and R' can be any one of those described above for R'-NH₂ or R"IN-R', such as Tces, Ts, Ns, or o/p/m-halobenzene sulfonyl or sulfonate (such as a p-chlorobenzene sulfonyl or p-chlorobenzene sulfonate).

In some forms, R₁₉ can be hydrogen and R₂₀ can be a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), or R₂₀ and R₁₉ together, with the carbon atoms to which they are attached, can form a substituted or unsubstituted cycloalkyl (including monocyclic, such as a substituted or unsubstituted cyclopentyl and cyclohexyl, and polycyclic, such as a substituted or unsubstituted fused cycloalkyl ring) or a substituted or unsubstituted heterocyclyl (e.g., a substituted or unsubstituted oxanyl, a substituted or unsubstituted thianyl, a substituted or unsubstituted oxolanyl, a substituted or unsubstituted thiolanyl, etc.). In these forms, R₁₅-R₁₈ can be independently hydrogen, a halide, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstitude aryl (e.g., substituted or unsubstituted phenyl or benzyl), n alkoxyl (e.g., a methoxyl, an ethoxyl, etc.), a carbonyl, or a siloxyl.

In some forms, the substrate in the reaction mixture can have the structure of: 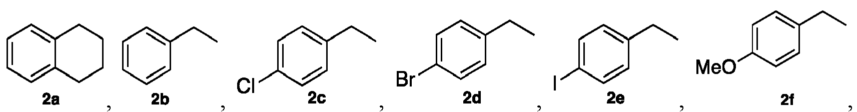 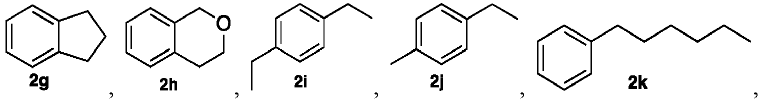 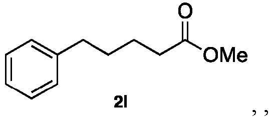 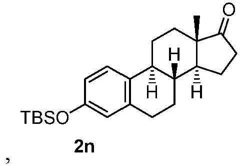 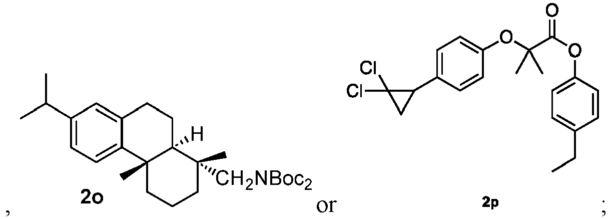 and the product formed by the enantioselective C-H amination reaction can have the structure of: 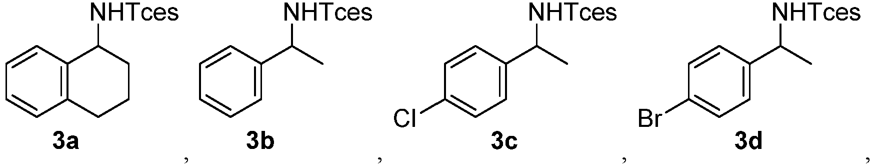 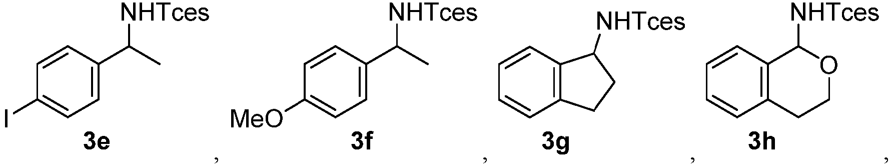 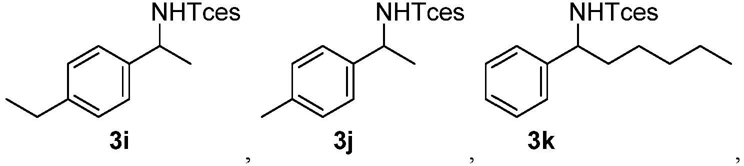 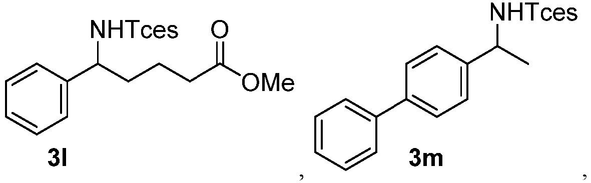 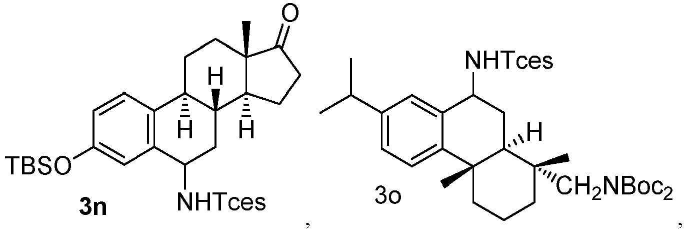 or

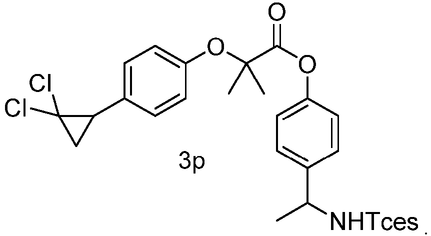

In some forms, the substrate and the nitrogen-source reactant in the reaction mixture can have a molar ratio in a range from 10:1 to 1:1 or from 10:1 to 5:1, such as 8: 1. In some forms, the host catalyst in the reaction mixture can have a loading in a range from about 5 mol% to about 30 mol% or from about 10 mol% to about 20 mol%, such as about 15 mol%. In some forms, the solvent forming the reaction mixture can be CH₃CN, THF, HFIP, or C₆H₆, preferably wherein the solvent can be CH₃CN. In some forms, the reaction mixture further contains a molecular sieve, such as a 3Å molecular sieve, a 4Å molecular sieve, or a 5Å molecular sieve.

The enantioselective C-H amination reaction using the disclosed methods can be performed at room temperature for a period of time in a range from about 30 minutes to about 24 hours, from about 1 hour to about 20 hours, or from about 2 hours to about 18 hours, such as about 16 hours, to form the aminated product. Optionally, the reaction can be performed under an inert gas environment, such as argon.

### BRIEF DESCRIPTION OF THE DRAWINGS

**FIG. 1** is a schematic showing the binding of a guest template with host catalyst Fe(^{18-Crown-6}PC) to form a supramolecular catalytic system.
**FIG. 2** shows the structures of exemplary guest tempates grouped by base structure, chiral backbone, and alkyl linker.
**FIG. 3A** is a graph showing the ¹H NMR spectra of reaction between **Fe-1** and **4c, 4d** and **4e.** **FIG. 3B** is a graph showing the UV-vis spectra of reaction between **Fe-1** and **4c, 4e** and **1** in CH₃CN.
**FIG. 4A** is a scheme that shows the control experiments employed with a 1:2:4 ratio of **Fe-1**:**T2h**:Ba(OTf)₂ and a 1:2 ratio of **Fe-2:T2h** as the catalytic system. **FIG. 4B** is a schematic showing the rationale behind the non-enantioselective processes.

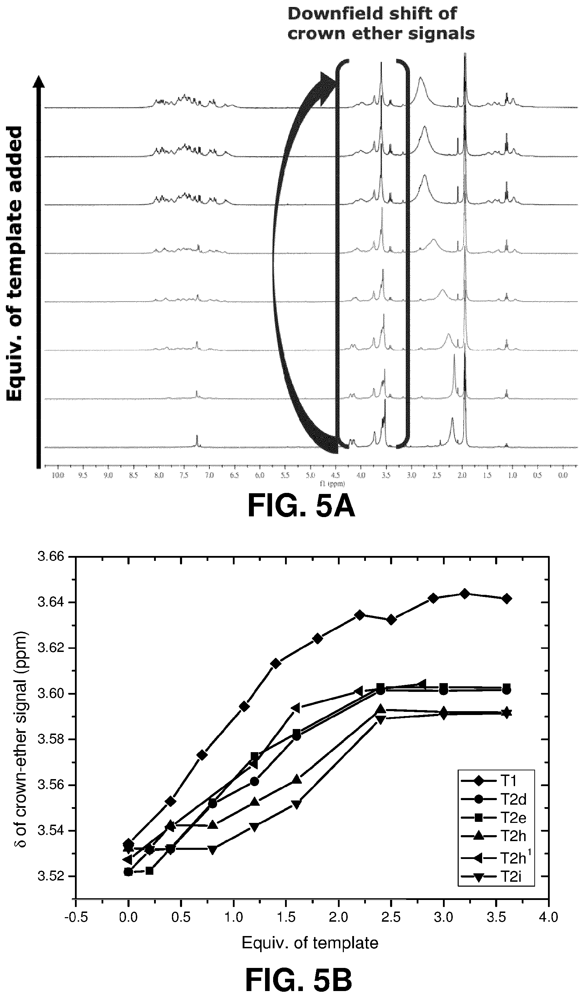

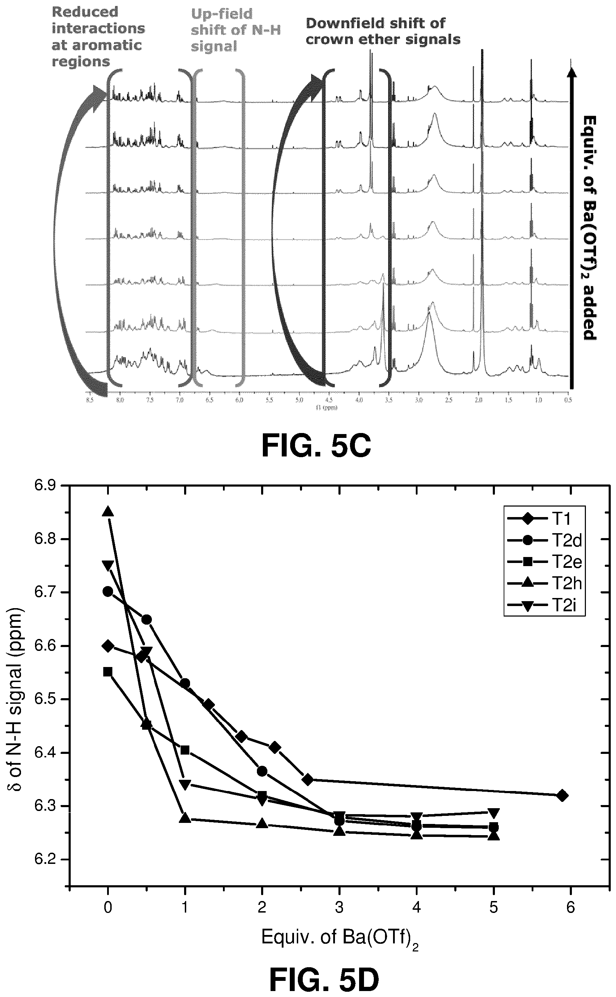

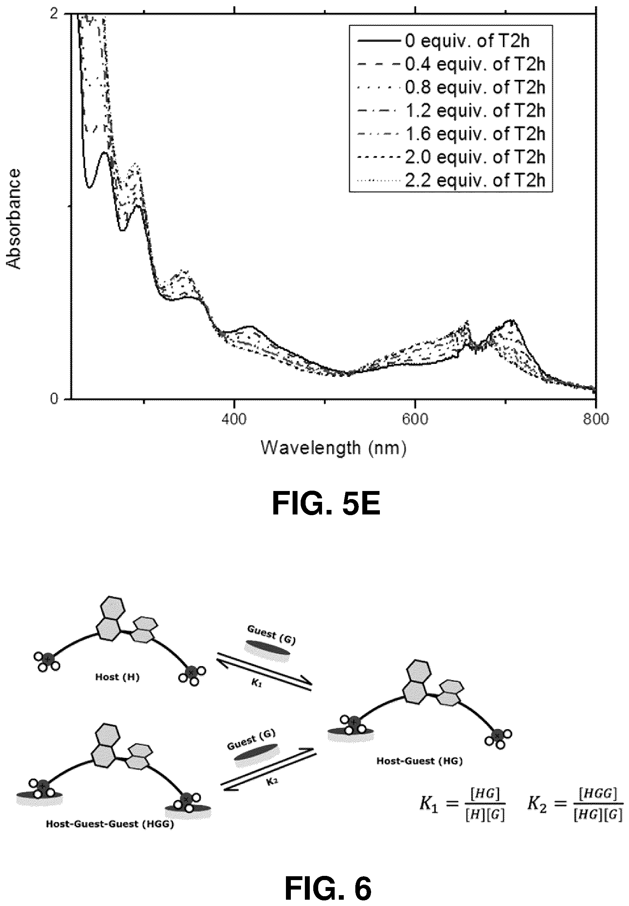

**FIGs. 5A-5E** are graphs showing the results of titration studies: change in ¹H-NMR signal for titration between **H₂(^{18-Crown-6}PC)** and **T2h (****FIG. 5A****);** change of chemical shift of crown ether signal versus the amount of template for **T1, T2d, T2e, T2h** and **T2i (****FIG. 5B****);** change in ¹H-NMR signal for titration between **H₂(^{18-Crown- 6}PC)/(T2h)₂** and Ba(OTf)₂ **(****FIG. 5C****);** change of chemical shift of N-H signal versus the amount of Ba(OTf)₂ for **T1, T2d,** T2e, **T2h** and **T2i (****FIG. 5D****);** change in UV-vis signal for titration between **Fe-1** and **T2h (****FIG. 5E****).**
**FIG. 6** **is** a schematic showing the binding between a host catalyst and a guest template for calculating the binding constants.
**FIG. 7A** is a graph showing the ¹H-¹H NOSEY NMR of supramolecular catalyst **H₂(^{18-Crown-6}PC)/(T2h)₂**. **FIG. 7B** **is** a graph showing the ¹H-¹H NOSEY NMR of supramolecular catalyst **H₂(^{18-Crown-6}PC)/(T2h)₂**/(Ba(OTf)₂)₄. **FIG. 7C** is a graph showing the ¹H DOSY NMR of supramolecular catalyst **H₂(^{18-Crown-6}PC)/(T2h)₂**.
**FIG. 8A** is a graph showing the CD spectra of **T2e** from concentration 4.73 x 10⁻⁴ to 0.59 x 10⁻⁴ M. **FIG. 8B** is a graph showing the CD spectra of **T2d** from concentration 4.73 x 10⁻⁴ to 1.48 x 10⁻⁴ M. **FIG. 8C** is a graph showing the change of maximum Δε of **T2h** with the addition of **Fe-1** and **Ba(OTf)₂** to the diluted solution of **T2h.**

### DETAILED DESCRIPTION OF THE INVENTION

### I. Definitions

It is to be understood that the disclosed compounds, compositions, and methods are not limited to specific synthetic methods, specific analytical techniques, or to particular reagents unless otherwise specified, and, as such, may vary. It is also to be understood that the terminology used herein is for the purpose of describing particular forms and embodiments only and is not intended to be limiting.

"Substituted," as used herein, refers to all permissible substituents of the compounds or functional groups described herein. In the broadest sense, the permissible substituents include acyclic and cyclic, branched and unbranched, carbocyclic and heterocyclic, aromatic and nonaromatic substituents of organic compounds. Illustrative substituents include, but are not limited to, halogens, hydroxyl groups, or any other organic groupings containing any number of carbon atoms, preferably 1-14 carbon atoms, and optionally include one or more heteroatoms such as oxygen, sulfur, or nitrogen grouping in linear, branched, or cyclic structural formats. Representative substituents include a substituted or unsubstituted alkyl, a substituted or unsubstituted alkenyl, a substituted or unsubstituted alkynyl, a substituted or unsubstituted heterocyclyl, a substituted or unsubstituted phenyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a halogen, a hydroxyl, an alkoxy, a phenoxy, an aroxy, a silyl, a thiol, an alkylthio, a substituted alkylthio, a phenylthio, an arylthio, a cyano, an isocyano, a nitro, a substituted or unsubstituted carbonyl, a carboxyl, an amino, an amido, an oxo, a sulfinyl, a sulfonyl, a sulfonic acid, a phosphonium, a phosphanyl, a phosphoryl, a phosphonyl, an amino acid. Such a substituted or unsubstituted alkyl, a substituted or unsubstituted alkenyl, a substituted or unsubstituted alkynyl, a substituted or unsubstituted heterocyclyl, a substituted or unsubstituted phenyl, a substituted or unsubstituted aryl, a substituted or unsubstituted heteroaryl, a substituted or unsubstituted polyaryl, a substituted or unsubstituted polyheteroaryl, a substituted or unsubstituted aralkyl, a halogen, a hydroxyl, an alkoxy, a phenoxy, an aroxy, a silyl, a thiol, an alkylthio, a substituted alkylthio, a phenylthio, an arylthio, a cyano, an isocyano, a nitro, a substituted or unsubstituted carbonyl, a carboxyl, an amino, an amido, an oxo, a sulfinyl, a sulfonyl, a sulfonic acid, a phosphonium, a phosphanyl, a phosphoryl, a phosphonyl, and an amino acid can be further substituted.

Heteroatoms such as nitrogen may have hydrogen substituents and/or any permissible substituents of organic compounds described herein which satisfy the valences of the heteroatoms. It is understood that "substitution" or "substituted" includes the implicit proviso that such substitution is in accordance with permitted valence of the substituted atom and the substituent, and that the substitution results in a stable compound, *i.e.,* a compound that does not spontaneously undergo transformation such as by rearrangement, cyclization, elimination, etc.

"Alkyl," as used herein, refers to the radical of saturated aliphatic groups, including straight-chain alkyl groups, branched-chain alkyl, and cycloalkyl (alicyclic). In some forms, a straight chain or branched chain alkyl has 30 or fewer carbon atoms in its backbone (e.g., C₁-C₃₀ for straight chains, C₃-C₃₀ for branched chains), 20 or fewer, 15 or fewer, or 10 or fewer. Alkyl includes methyl, ethyl, n-propyl, isopropyl, n-butyl, isobutyl, t-butyl, pentyl, hexyl, heptyl, octyl, decyl, tetradecyl, hexadecyl, eicosyl, tetracosyl and the like. Likewise, a cycloalkyl is a non-aromatic carbon-based ring composed of at least three carbon atoms, such as a nonaromatic monocyclic or nonaromatic polycyclic ring containing 3-30 carbon atoms, 3-20 carbon atoms, or 3-10 carbon atoms in their ring structure, and have 5, 6 or 7 carbons in the ring structure. Cycloalkyls containing a polycyclic ring system can have two or more non-aromatic rings in which two or more carbons are common to two adjoining rings (i.e., "fused cycloalkyl rings"). Examples of cycloalkyl groups include, but are not limited to, cyclopropyl, cyclobutyl, cyclopentyl, cyclohexyl, cycloheptyl, cyclooctanyl, etc.

"Substituted alkyl" refers to alkyl moieties having one or more substituents replacing a hydrogen on one or more carbons of the hydrocarbon backbone. Such substituents can be any substituents described above, e.g., halogen (such as fluorine, chlorine, bromine, or iodine), hydroxyl, carbonyl (such as a carboxyl, alkoxycarbonyl, formyl, or an acyl), thiocarbonyl (such as a thioester, a thioacetate, or a thioformate), aryl, alkoxyl, aralkyl, phosphonium, phosphanyl, phosphonyl, phosphoryl, phosphate, phosphonate, a phosphinate, amino, amido, amidine, imine, cyano, nitro, azido, oxo, sulfhydryl, thiol, alkylthio, silyl, sulfinyl, sulfate, sulfonate, sulfamoyl, sulfonamido, sulfonyl, heterocyclyl, an aromatic or heteroaromatic moiety. -NRR', wherein R and R' are independently hydrogen, alkyl, or aryl, and wherein the nitrogen atom is optionally quaternized; -SR, wherein R is a phosphonyl, a sulfinyl, a silyl a hydrogen, an alkyl, or an aryl; -CN; -NO₂; -COOH; carboxylate; -COR, -COOR, or -CON(R)₂, wherein R is hydrogen, alkyl, or aryl; imino, silyl, ether, haloalkyl (such as -CF3, -CH₂-CF₃, -CCl₃); -CN; -NCOCOCH₂CH₂; -NCOCOCHCH; and -NCS; and combinations thereof.

It will be understood by those skilled in the art that the moieties substituted on the hydrocarbon chain can themselves be substituted, if appropriate. For instance, the substituents of a substituted alkyl may include halogen, hydroxy, nitro, thiols, amino, aralkyl, azido, imino, amido, phosphonium, phosphanyl, phosphoryl (including phosphonate and phosphinate), oxo, sulfonyl (including sulfate, sulfonamido, sulfamoyl and sulfonate), and silyl groups, as well as ethers, alkylthios, carbonyls (including ketones, aldehydes, carboxylates, and esters), haloalkyls, -CN and the like. Cycloalkyls can be substituted in the same manner.

Unless the number of carbons is otherwise specified, "lower alkyl" as used herein means an alkyl group, as defined above, but having from one to ten carbons, more preferably from one to six carbon atoms in its backbone structure. Likewise, "lower alkenyl" and "lower alkynyl" have similar chain lengths.

"Heteroalkyl," as used herein, refers to straight or branched chain, or cyclic carbon-containing alkyl radicals, or combinations thereof, containing at least one heteroatom on the carbon backbone. Suitable heteroatoms include, but are not limited to, O, N, Si, P and S, wherein the nitrogen, phosphorous and sulfur atoms are optionally oxidized, and the nitrogen heteroatom is optionally quaternized. For example, the term "heterocycloalkyl group" is a cycloalkyl group as defined above where at least one of the carbon atoms of the ring is substituted with a heteroatom such as, but not limited to, nitrogen, oxygen, sulphur, or phosphorus.

The term "alkenyl" as used herein is a hydrocarbon group of from 2 to 24 carbon atoms and structural formula containing at least one carbon-carbon double bond. Alkenyl groups include straight-chain alkenyl groups, branched-chain alkenyl, and cycloalkenyl. A cycloalkenyl is a non-aromatic carbon-based ring composed of at least three carbon atoms and at least one carbon-carbon double bond, such as a nonaromatic monocyclic or nonaromatic polycyclic ring containing 3-30 carbon atoms and at least one carbon-carbon double bond, 3-20 carbon atoms and at least one carbon-carbon double bond, or 3-10 carbon atoms and at least one carbon-carbon double bond in their ring structure, and have 5, 6 or 7 carbons and at least one carbon-carbon double bond in the ring structure. Cycloalkenyls containing a polycyclic ring system can have two or more non-aromatic rings in which two or more carbons are common to two adjoining rings (i.e., "fused cycloalkenyl rings") and contain at least one carbon-carbon double bond. Asymmetric structures such as (AB)C=C(C'D) are intended to include both the E and Z isomers. This may be presumed in structural formulae herein wherein an asymmetric alkene is present, or it may be explicitly indicated by the bond symbol C. The term "alkenyl" as used throughout the specification, examples, and claims is intended to include both "unsubstituted alkenyls" and "substituted alkenyls," the latter of which refers to alkenyl moieties having one or more substituents replacing a hydrogen on one or more carbons of the hydrocarbon backbone. The term "alkenyl" also includes "heteroalkenyl."

The term "substituted alkenyl" refers to alkenyl moieties having one or more substituents replacing one or more hydrogen atoms on one or more carbons of the hydrocarbon backbone. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, oxo, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof.

"Heteroalkenyl," as used herein, refers to straight or branched chain, or cyclic carbon-containing alkenyl radicals, or combinations thereof, containing at least one heteroatom. Suitable heteroatoms include, but are not limited to, O, N, Si, P and S, wherein the nitrogen, phosphorous and sulfur atoms are optionally oxidized, and the nitrogen heteroatom is optionally quaternized. For example, the term "heterocycloalkenyl group" is a cycloalkenyl group where at least one of the carbon atoms of the ring is substituted with a heteroatom such as, but not limited to, nitrogen, oxygen, sulphur, or phosphorus.

The term "alkynyl group" as used herein is a hydrocarbon group of 2 to 24 carbon atoms and a structural formula containing at least one carbon-carbon triple bond. Alkynyl groups include straight-chain alkynyl groups, branched-chain alkynyl, and cycloalkynyl. A cycloalkynyl is a non-aromatic carbon-based ring composed of at least three carbon atoms and at least one carbon-carbon triple bond, such as a nonaromatic monocyclic or nonaromatic polycyclic ring containing 3-30 carbon atoms and at least one carbon-carbon triple bond, 3-20 carbon atoms and at least one carbon-carbon triple bond, or 3-10 carbon atoms and at least one carbon-carbon triple bond in their ring structure, and have 5, 6 or 7 carbons and at least one carbon-carbon triple bond in the ring structure. Cycloalkynyls containing a polycyclic ring system can have two or more non-aromatic rings in which two or more carbons are common to two adjoining rings (i.e., "fused cycloalkynyl rings") and contain at least one carbon-carbon triple bond. Asymmetric structures such as (AB)C≡C(C"D) are intended to include both the E and Z isomers. This may be presumed in structural formulae herein wherein an asymmetric alkyne is present, or it may be explicitly indicated by the bond symbol C. The term "alkynyl" as used throughout the specification, examples, and claims is intended to include both "unsubstituted alkynyls" and "substituted alkynyls," the latter of which refers to alkynyl moieties having one or more substituents replacing a hydrogen on one or more carbons of the hydrocarbon backbone. The term "alkynyl" also includes "heteroalkynyl."

The term "substituted alkynyl" refers to alkynyl moieties having one or more substituents replacing one or more hydrogen atoms on one or more carbons of the hydrocarbon backbone. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof.

"Heteroalkynyl," as used herein, refers to straight or branched chain, or cyclic carbon-containing alkynyl radicals, or combinations thereof, containing at least one heteroatom. Suitable heteroatoms include, but are not limited to, O, N, Si, P and S, wherein the nitrogen, phosphorous and sulfur atoms are optionally oxidized, and the nitrogen heteroatom is optionally quaternized. For example, the term "heterocycloalkynyl group" is a cycloalkynyl group where at least one of the carbon atoms of the ring is substituted with a heteroatom such as, but not limited to, nitrogen, oxygen, sulphur, or phosphorus.

"Aryl," as used herein, refers to C₄-C₂₆-membered aromatic rings or fused ring systems containing one aromatic ring and optionally one or more non-aromatic rings. Examples of aryl groups are benzene, tetralin, indane, etc.

The term "substituted aryl" refers to an aryl group, wherein one or more hydrogen atoms on one or more aromatic rings are substituted with one or more substituents including, but not limited to, halogen, azide, alkyl, aralkyl, alkenyl, alkynyl, cycloalkyl, hydroxyl, alkoxy, carbonyl (such as a ketone, aldehyde, carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (or quarternized amino), amido, amidine, imine, cyano, nitro, azido, sulfhydryl, imino, alkylthio, sulfate, sulfonate, sulfamoyl, sulfoxide, sulfonamido, sulfonyl, heterocyclyl, alkylaryl, haloalkyl (such as CF₃, -CH₂-CF₃, -CCl₃), -CN, aryl, heteroaryl, and combinations thereof.

"Heterocyclo" and "heterocyclyl" are used interchangeably, and refer to a cyclic radical attached via a ring carbon or nitrogen atom of a monocyclic ring or polycyclic ring system containing 3-30 ring atoms, 3-20 ring atoms, 3-10 ring atoms, or 5-6 ring atoms, where the polycyclic ring system contains one or more non-aromatic rings and optionally one or more aromatic rings, where at least one non-aromatic ring contains carbon and one to four heteroatoms each selected from the group consisting of non-peroxide oxygen, sulfur, and N(Y) wherein Y is absent or is H, O, C₁-C₁₀ alkyl, phenyl or benzyl, and optionally containing 1-3 double bonds and optionally substituted with one or more substituents. Heterocyclyl are distinguished from heteroaryl by definition. Heterocycles can be a heterocycloalkyl, a heterocycloalkenyl, a heterocycloalkynyl, etc, such as piperazinyl, piperidinyl, piperidonyl, 4-piperidonyl, dihydrofuro[2,3-b]tetrahydrofuran, morpholinyl, piperazinyl, piperidinyl, piperidonyl, 4-piperidonyl, piperonyl, pyranyl, 2H-pyrrolyl, 4H-quinolizinyl, quinuclidinyl, tetrahydrofuranyl, 6H-1,2,5-thiadiazinyl. Heterocyclic groups can optionally be substituted with one or more substituents as defined above for alkyl and aryl.

The term "heteroaryl" refers to C₃-C₂₆-membered aromatic rings or fused ring systems containing one aromatic ring and optionally one or more non-aromatic rings, in which one or more carbon atoms on the aromatic ring structure have been substituted with a heteroatom. Suitable heteroatoms include, but are not limited to, oxygen, sulfur, and nitrogen. Examples of heteroaryl groups pyrrole, furan, thiophene, imidazole, oxazole, thiazole, triazole, tetrazole, pyrazole, pyridine, pyrazine, pyridazine and pyrimidine, and the like. Examples of heteroaryl rings include, but are not limited to, benzimidazolyl, benzofuranyl, benzothiofuranyl, benzothiophenyl, benzoxazolyl, benzoxazolinyl, benzthiazolyl, benztriazolyl, benztetrazolyl, benzisoxazolyl, benzisothiazolyl, benzimidazolinyl, carbazolyl, 4aH-carbazolyl, carbolinyl, chromanyl, chromenyl, cinnolinyl, decahydroquinolinyl, 2H,6H-1,5,2-dithiazinyl, furanyl, furazanyl, imidazolidinyl, imidazolinyl, imidazolyl, 1H-indazolyl, indolenyl, indolinyl, indolizinyl, indolyl, 3H-indolyl, isatinoyl, isobenzofuranyl, isochromanyl, isoindazolyl, isoindolinyl, isoindolyl, isoquinolinyl, isothiazolyl, isoxazolyl, methylenedioxyphenyl, naphthyridinyl, octahydroisoquinolinyl, 1,2,3-oxadiazolyl, 1,2,4-oxadiazolyl, 1,2,5-oxadiazolyl, 1,3,4-oxadiazolyl, oxazolidinyl, oxazolyl, oxindolyl, pyrimidinyl, phenanthridinyl, phenanthrolinyl, phenazinyl, phenothiazinyl, phenoxathinyl, phenoxazinyl, phthalazinyl, pteridinyl, purinyl, pyrazinyl, pyrazolidinyl, pyrazolinyl, pyrazolyl, pyridazinyl, pyridooxazole, pyridoimidazole, pyridothiazole, pyridinyl, pyridyl, pyrimidinyl, pyrrolidinyl, pyrrolinyl, pyrrolyl, quinazolinyl, quinolinyl, quinoxalinyl, tetrahydroisoquinolinyl, tetrahydroquinolinyl, tetrazolyl, 1,2,3-thiadiazolyl, 1,2,4-thiadiazolyl, 1,2,5-thiadiazolyl, 1,3,4-thiadiazolyl, thianthrenyl, thiazolyl, thienyl, thienothiazolyl, thienooxazolyl, thienoimidazolyl, thiophenyl and xanthenyl. One or more of the rings can be substituted as defined below for "substituted heteroaryl."

The term "substituted heteroaryl" refers to a heteroaryl group in which one or more hydrogen atoms on one or more heteroaromatic rings are substituted with one or more substituents including, but not limited to, halogen, azide, alkyl, aralkyl, alkenyl, alkynyl, cycloalkyl, hydroxyl, alkoxy, carbonyl (such as a ketone, aldehyde, carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (or quarternized amino), amido, amidine, imine, cyano, nitro, azido, sulfhydryl, imino, alkylthio, sulfate, sulfonate, sulfamoyl, sulfoxide, sulfonamido, sulfonyl, heterocyclyl, alkylaryl, haloalkyl (such as CF₃, -CH₂-CF₃, -CCl₃), -CN, aryl, heteroaryl, and combinations thereof.

The term "polyaryl" refers to a fused ring system that includes two or more aromatic rings and optionally one or more non-aromatic rings. Examples of polyaryl groups are naphthalene, anthracene, phenanthrene, chrysene, pyrene, corannulene, coronene, etc. When a fused ring system containing two or more aromatic rings and optionally one or more non-aromatic rings, in which one or more carbon atoms on one or more aromatic ring structures have been substituted with a heteroatom, the fused ring system can be referred to as a "polyheteroaryl". When a fused ring system containing two or more aromatic rings and optionally one or more non-aromatic rings, in which one or more carbon atoms in the fused ring system is substituted with a heteroatom it can be referred to as a "heteropolyaryl." The term "substituted polyaryl" refers to a polyaryl in which one or more of the aryls are substituted, with one or more substituents including, but not limited to, halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (or quarternized amino), amido, amidine, imine, cyano, nitro, azido, sulfhydryl, alkylthio, sulfate, sulfonate, sulfamoyl, sulfoxide, sulfonamido, sulfonyl, heterocyclyl, alkylaryl, haloalkyl, -CN, aryl, heteroaryl, and combinations thereof. When a polyheteroaryl is involved, the chemical moiety can be referred to as a "substituted polyheteroaryl."

The term "cyclic ring" or "cyclic group" refers to a substituted or unsubstituted monocyclic ring or a substituted or unsubstituted polycyclic ring (such as those formed from single or fused ring systems), such as a substituted or unsubstituted cycloalkyl, a substituted or unsubstituted cycloalkenyl, a substituted or unsubstituted cycloalkynyl, or a substituted or unsubstituted heterocyclyl, that have from three to 30 carbon atoms, as geometric constraints permit. The substituted cycloalkyls, cycloalkenyls, cycloalkynyls, and heterocyclyls are substituted as defined above for the alkyls, alkenyls, alkynyls, and heterocyclyls, respectively.

The term "aralkyl" as used herein is an aryl group or a heteroaryl group having an alkyl, alkynyl, or alkenyl group as defined above attached to the aromatic group, such as an aryl, a heteroaryl, a polyaryl, or a polyheteroaryl. An example of an aralkyl group is a benzyl group.

The terms "alkoxyl" or "alkoxy," "aroxy" or "aryloxy," generally describe compounds represented by the formula -OR^{v}, wherein R^{v} includes, but is not limited to, a substituted or unsubstituted alkyl, a substituted or unsubstituted alkenyl, a substituted or unsubstituted alkynyl, a substituted or unsubstituted cycloalkyl, a substituted or unsubstituted heterocyclyl, a substituted or unsubstituted cycloalkenyl, a substituted or unsubstituted heterocycloalkenyl, a substituted or unsubstituted aryl, a substituted or unsubstituted heteroaryl, a substituted or unsubstituted polyaryl, a substituted or unsubstituted polyheteroaryl, a substituted or unsubstituted arylalkyl, a substituted or unsubstituted heteroalkyl, a substituted or unsubstituted alkylaryl, a substituted or unsubstituted alkylheteroaryl, a substituted or unsubstituted aralkyl, a substituted or unsubstituted carbonyl, a phosphonium, a phosphanyl, a phosphonyl, a sulfinyl, a silyl, a thiol, an amido, and an amino. Exemplary alkoxyl groups include methoxy, ethoxy, propyloxy, tert-butoxy and the like. A "lower alkoxy" group is an alkoxy group containing from one to six carbon atoms. An "ether" is two functional groups covalently linked by an oxygen as defined below. Accordingly, the substituent of an alkyl that renders that alkyl an ether is or resembles an alkoxyl, such as can be represented by one of -O-alkyl, -O-alkenyl, -O-alkynyl, -O-arakyl, -O-aryl, -O-heteroaryl, -O-polyaryl, -O-polyheteroaryl, -O-heterocyclyl, etc.

The term "substituted alkoxy" refers to an alkoxy group having one or more substituents replacing one or more hydrogen atoms on one or more carbons of the alkoxy backbone. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, alkylthio, oxo, sulfate, sulfonate, sulfamoyl, sulfonamido, sulfonyl, heterocyclyl, alkylaryl, haloalkyl, -CN, aryl, heteroaryl, and combinations thereof.

The term "ether" as used herein is represented by the formula A²OA¹, where A² and A¹ can be, independently, a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted aralkyl, a substituted or unsubstituted polyaryl, a substituted or unsubstituted polyheteroaryl, a phosphonium, a phosphanyl, a phosphonyl, a sulfinyl, a silyl, a thiol, a substituted or unsubstituted carbonyl, an alkoxy, an amido, or an amino, described above.

The term "polyether" as used herein is represented by the formula: 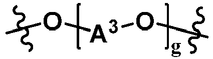 where A³ can be, independently, a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted aralkyl, a substituted or unsubstituted polyaryl, a substituted or unsubstituted polyheteroaryl, a phosphonium, a phosphanyl, a substituted or unsubstituted carbonyl, an alkoxy, an amido, or an amino, described above; g can be a positive integer from 1 to 30.

The term "phenoxy" is art recognized and refers to a compound of the formula -OR^{v} wherein R^{v} is C₆H₅ (*i.e.,* -O-C₆H₅). One of skill in the art recognizes that a phenoxy is a species of the aroxy genus.

The term "substituted phenoxy" refers to a phenoxy group, as defined above, having one or more substituents replacing one or more hydrogen atoms on one or more carbons of the phenyl ring. Such substituents include, but are not limited to, halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, and combinations thereof.

The terms "aroxy" and "aryloxy," as used interchangeably herein, are represented by -O-aryl or -O-heteroaryl, wherein aryl and heteroaryl are as defined herein.

The terms "substituted aroxy" and "substituted aryloxy," as used interchangeably herein, represent -O-aryl or -O-heteroaryl, having one or more substituents replacing one or more hydrogen atoms on one or more ring atoms of the aryl and heteroaryl, as defined herein. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof.

The term "amino" as used herein includes the group 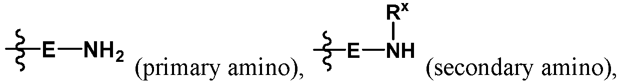 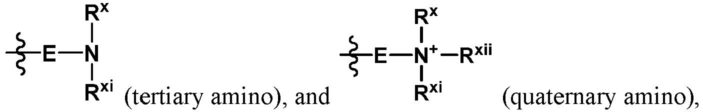 wherein, E is absent, or E is substituted or unsubstituted alkyl, substituted or unsubstituted alkenyl, substituted or unsubstituted alkynyl, substituted or unsubstituted aralkyl, substituted or unsubstituted aryl, substituted or unsubstituted heteroaryl, a substituted or unsubstituted polyaryl, a substituted or unsubstituted polyheteroaryl, substituted or unsubstituted heterocyclyl, wherein independently of E, R^{x}, R^{xi}, and R^{xii} each independently represent a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or -(CH₂)ₘ-R'''; R'" represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8. The term "quaternary amino" also includes the groups where the nitrogen, R^{x}, R^{xi}, and R^{xii} with the N⁺ to which they are attached complete a heterocyclyl or heteroaryl having from 3 to 14 atoms in the ring structure. It is understood by those of ordinary skill in the art, that the E groups listed above are divalent (e.g., methylene, ethane-1,2-diyl, ethene-1,2-diyl, 1,4-phenylene, cyclohexane-1,2-diyl).

The terms "amide" or "amido" are used interchangeably, refer to both "unsubstituted amido" and "substituted amido" and are represented by the general formula: 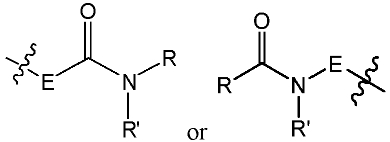 wherein, E is absent, or E is a substituted or unsubstituted alkyl, a substituted or unsubstituted alkenyl, a substituted or unsubstituted alkynyl, a substituted or unsubstituted aralkyl, a substituted or unsubstituted aryl, substituted or unsubstituted heteroaryl, a substituted or unsubstituted polyaryl, a substituted or unsubstituted polyheteroaryl, or a substituted or unsubstituted heterocyclyl, wherein independently of E, R and R' each independently represent a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or -(CH₂)ₘ-R"', or R and R' taken together with the N atom to which they are attached complete a heterocycle having from 3 to 14 atoms in the ring structure; R"' represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8. In some forms, when E is oxygen, a carbamate is formed. It is understood by those of ordinary skill in the art, that the E groups listed above are divalent (e.g., methylene, ethane-1,2-diyl, ethene-1,2-diyl, 1,4-phenylene, cyclohexane-1,2-diyl).

"Carbonyl," as used herein, is art-recognized and includes such moieties as can be represented by the general formula: 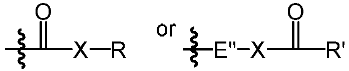 wherein X is a bond, or represents an oxygen or a sulfur, and R represents a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, an amido, an amino, or -(CH₂)ₘ-R", or a pharmaceutical acceptable salt; E" is absent, or E" is a substituted or unsubstituted alkyl, a substituted or unsubstituted alkenyl, a substituted or unsubstituted alkynyl, a substituted or unsubstituted aralkyl, a substituted or unsubstituted aryl, a substituted or unsubstituted heteroaryl, a substituted or unsubstituted polyaryl, a substituted or unsubstituted polyheteroaryl, a substituted or unsubstituted heterocyclyl; R' represents a hydrogen, a substituted or unsubstituted alkyl, a substituted or unsubstituted alkenyl, a substituted or unsubstituted alkynyl, a substituted or unsubstituted heterocyclyl, a substituted or unsubstituted aralkyl (e.g. a substituted or unsubstituted alkylaryl, a substituted or unsubstituted arylalkyl), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, an amido, an amino, or -(CH₂)ₘ-R"; R" represents a hydroxyl group, a substituted orunsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphonium, phosphanyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, and combinations thereof. It is understood by those of ordinary skill in the art, that the E" groups listed above are divalent (e.g., methylene, ethane-1,2-diyl, ethene-1,2-diyl, 1,4-phenylene, cyclohexane-1,2-diyl). Where X is oxygen and R is defined as above, the moiety is also referred to as a carboxyl group. When X is oxygen and R is hydrogen, the formula represents a "carboxylic acid." Where X is oxygen and R' is hydrogen, the formula represents a "formate." Where X is oxygen and R or R' is not hydrogen, the formula represents an "ester." In general, where the oxygen atom of the above formula is replaced by a sulfur atom, the formula represents a "thiocarbonyl" group. Where X is sulfur and R or R' is not hydrogen, the formula represents a "thioester." Where X is sulfur and R is hydrogen, the formula represents a "thiocarboxylic acid." Where X is sulfur and R' is hydrogen, the formula represents a "thioformate." Where X is a bond and R is not hydrogen, the above formula represents a "ketone." Where X is a bond and R is hydrogen, the above formula represents an "aldehyde."

The term "phosphanyl" is represented by the formula 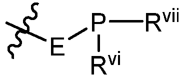 wherein, E is absent, or E is a substituted or unsubstituted alkyl, a substituted or unsubstituted alkenyl, a substituted or unsubstituted alkynyl, a substituted or unsubstituted aralkyl, a substituted or unsubstituted cycloalkyl, a substituted or unsubstituted aryl, a substituted or unsubstituted heteroaryl, a substituted or unsubstituted polyaryl, a substituted or unsubstituted polyheteroaryl, a substituted or unsubstituted heterocyclyl, wherein independently of E, R^{vi} and R^{vii} each independently represent a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g., a substituted or unsubstituted alkylaryl, a substituted or unsubstituted arylalkyl, etc.), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or -(CH₂)ₘ-R"', or R^{vi} and R^{vii} taken together with the P atom to which they are attached complete a heterocycle having from 3 to 14 atoms in the ring structure; R‴ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof. It is understood by those of ordinary skill in the art, that the E groups listed above are divalent (e.g., methylene, ethane-1,2-diyl, ethene-1,2-diyl, 1,4-phenylene, cyclohexane-1,2-diyl).

The term "phosphonium" is represented by the formula 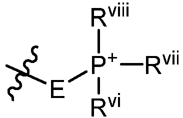 wherein, E is absent, or E is a substituted or unsubstituted alkyl, a substituted or unsubstituted alkenyl, a substituted or unsubstituted alkynyl, a substituted or unsubstituted aralkyl, a substituted or unsubstituted cycloalkyl, a substituted or unsubstituted aryl, a substituted or unsubstituted heteroaryl, a substituted or unsubstituted polyaryl, a substituted or unsubstituted polyheteroaryl, a substituted or unsubstituted heterocyclyl, wherein independently of E, R^{vi}, R^{vii}, and R^{viii} each independently represent a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl, etc.), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or -(CH₂)ₘ-R"', or R^{vi}, R^{vii}, and R^{viii} taken together with the P⁺ atom to which they are attached complete a heterocycle having from 3 to 14 atoms in the ring structure; R‴ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof. It is understood by those of ordinary skill in the art, that the E groups listed above are divalent (e.g., methylene, ethane-1,2-diyl, ethene-1,2-diyl, 1,4-phenylene, cyclohexane-1,2-diyl).

The term "phosphonyl" is represented by the formula 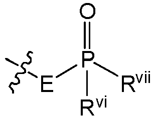 wherein E is absent, or E is a substituted or unsubstituted alkyl, a substituted or unsubstituted alkenyl, a substituted or unsubstituted alkynyl, a substituted or unsubstituted aralkyl (e.g., a substituted or unsubstituted alkylaryl, a substituted or unsubstituted arylalkyl, etc.), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, oxygen, alkoxy, aroxy, or substituted alkoxy or substituted aroxy, wherein, independently of E, R^{vi} and R^{vii} are independently a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl, etc.), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a sulfinyl, a silyl, a thiol, an amido, an amino, or -(CH₂)ₘ-R"', or R^{vi} and R^{vii} taken together with the P atom to which they are attached complete a heterocycle having from 3 to 14 atoms in the ring structure; R‴ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof. It is understood by those of ordinary skill in the art, that the E groups listed above are divalent (e.g., methylene, ethane-1,2-diyl, ethene-1,2-diyl, 1,4-phenylene, cyclohexane-1,2-diyl).

The term "phosphoryl" defines a phosphonyl in which E is absent, oxygen, alkoxy, aroxy, substituted alkoxy or substituted aroxy, as defined above, and independently of E, R^{vi} and R^{vii} are independently hydroxyl, alkoxy, aroxy, substituted alkoxy or substituted aroxy, as defined above. When E is oxygen, the phosphoryl cannot be attached to another chemical species, such as to form an oxygen-oxygen bond, or other unstable bonds, as understood by one of ordinary skill in the art. When E, R^{vi} and R^{vii} are substituted, the substituents include, but are not limited to, halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof. It is understood by those of ordinary skill in the art, that the E groups listed above are divalent (e.g., methylene, ethane-1,2-diyl, ethene-1,2-diyl, 1,4-phenylene, cyclohexane-1,2-diyl).

The term "sulfinyl" is represented by the formula 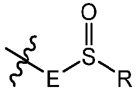 wherein E is absent, or E is a substituted or unsubstituted alkyl, a substituted or unsubstituted alkenyl, a substituted or unsubstituted alkynyl, a substituted or unsubstituted aralkyl (e.g., a substituted or unsubstituted alkylaryl, a substituted or unsubstituted arylalkyl, etc.), a substituted or unsubstituted aryl, a substituted or unsubstituted heteroaryl, a substituted or unsubstituted heterocyclyl, a substituted or unsubstituted polyaryl, a substituted or unsubstituted polyheteroaryl, wherein independently of E, R represents a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, a phosphonyl, a silyl, a thiol, an amido, an amino, or -(CH₂)ₘ-R‴, or E and R taken together with the S atom to which they are attached complete a heterocycle having from 3 to 14 atoms in the ring structure; R‴ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof. It is understood by those of ordinary skill in the art, that the E groups listed above are divalent (e.g., methylene, ethane-1,2-diyl, ethene-1,2-diyl, 1,4-phenylene, cyclohexane-1,2-diyl).

The term "sulfonyl" is represented by the formula 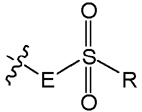 wherein E is absent, or E is a substituted or unsubstituted alkyl, a substituted or unsubstituted alkenyl, a substituted or unsubstituted alkynyl, a substituted or unsubstituted aralkyl (e.g., a substituted or unsubstituted alkylaryl, a substituted or unsubstituted arylalkyl, etc.), a substituted or unsubstituted aryl, a substituted or unsubstituted heteroaryl, a substituted or unsubstituted heterocyclyl, a substituted or unsubstituted polyaryl, a substituted or unsubstituted polyheteroaryl, wherein independently of E, R represents a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, an amido, an amino, or -(CH₂)ₘ-R"', or E and R taken together with the S atom to which they are attached complete a heterocycle having from 3 to 14 atoms in the ring structure; R‴ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof. It is understood by those of ordinary skill in the art, that the E groups listed above are divalent (e.g., methylene, ethane-1,2-diyl, ethene-1,2-diyl, 1,4-phenylene, cyclohexane-1,2-diyl).

The term "sulfonic acid" refers to a sulfonyl, as defined above, wherein R is hydroxyl, and E is absent, or E is substituted or unsubstituted cycloalkyl, substituted or unsubstituted heterocyclyl, substituted or unsubstituted alkylaryl, substituted or unsubstituted arylalkyl, substituted or unsubstituted aryl, a substituted or unsubstituted polyaryl, a substituted or unsubstituted polyheteroaryl, or substituted or unsubstituted heteroaryl. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof. It is understood by those of ordinary skill in the art, that the E groups listed above are divalent (e.g., methylene, ethane-1,2-diyl, ethene-1,2-diyl, 1,4-phenylene, cyclohexane-1,2-diyl).

The term "sulfate" refers to a sulfonyl, as defined above, wherein E is absent, oxygen, alkoxy, aroxy, substituted alkoxy or substituted aroxy, as defined above, and R is independently hydroxyl, alkoxy, aroxy, substituted alkoxy or substituted aroxy, as defined above. When E is oxygen, the sulfate cannot be attached to another chemical species, such as to form an oxygen-oxygen bond, or other unstable bonds, as understood by one of ordinary skill in the art. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof. It is understood by those of ordinary skill in the art, that the E groups listed above are divalent (e.g., methylene, ethane-1,2-diyl, ethene-1,2-diyl, 1,4-phenylene, cyclohexane-1,2-diyl).

The term "sulfonate" refers to a sulfonyl, as defined above, wherein E is oxygen, alkoxy, aroxy, substituted alkoxy or substituted aroxy, as defined above, and R is independently hydrogen, substituted or unsubstituted alkyl, substituted or unsubstituted alkenyl, substituted or unsubstituted alkynyl, substituted or unsubstituted amino, substituted or unsubstituted cycloalkyl, substituted or unsubstituted heterocyclyl, substituted or unsubstituted aralkyl, substituted or unsubstituted alkylaryl, substituted or unsubstituted arylalkyl, substituted or unsubstituted aryl, substituted or unsubstituted heteroaryl, a substituted or unsubstituted polyaryl, a substituted or unsubstituted polyheteroaryl, -(CH₂)ₘ-R"', R"' represents a hydroxy group, substituted or unsubstituted carbonyl group, an aryl, a cycloalkyl ring, a cycloalkenyl ring, a heterocycle, an amido, an amino, or a polycycle; and m is zero or an integer ranging from 1 to 8. When E is oxygen, sulfonate cannot be attached to another chemical species, such as to form an oxygen-oxygen bond, or other unstable bonds, as understood by one of ordinary skill in the art. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof. It is understood by those of ordinary skill in the art, that the E groups listed above are divalent (e.g., methylene, ethane-1,2-diyl, ethene-1,2-diyl, 1,4-phenylene, cyclohexane-1,2-diyl).

The term "sulfamoyl" refers to a sulfonamide or sulfonamide represented by the formula 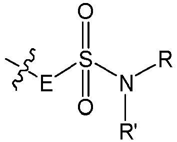 wherein E is absent, or E is substituted or unsubstituted alkyl, a substituted or unsubstituted alkenyl, a substituted or unsubstituted alkynyl, a substituted or unsubstituted aralkyl (e.g., a substituted or unsubstituted alkylaryl, a substituted or unsubstituted cycloalkyl, etc.), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, wherein independently of E, R and R' each independently represent a hydrogen, a substituted or unsubstituted alkyl, a substituted or unsubstituted alkenyl, a substituted or unsubstituted alkynyl, a substituted or unsubstituted carbonyl, a substituted or unsubstituted heterocyclyl, a substituted or unsubstituted aralkyl (e.g. a substituted or unsubstituted alkylaryl, a substituted or unsubstituted arylalkyl, etc.), a substituted or unsubstituted aryl, a substituted or unsubstituted heteroaryl, a substituted or unsubstituted polyaryl, a substituted or unsubstituted polyheteroaryl, a substituted or unsubstituted heterocyclyl, a hydroxyl, an alkoxy, a phosphonium, a phosphanyl, an amido, an amino, or -(CH₂)ₘ-R"', or R and R' taken together with the N atom to which they are attached complete a heterocycle having from 3 to 14 atoms in the ring structure; R‴ represents a hydroxyl group, a substituted or unsubstituted carbonyl group, a substituted or unsubstituted aryl, a substituted or unsubstituted cycloalkyl, a substituted or unsubstituted cycloalkenyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, an alkoxy, a phosphonium, a phosphanyl, an amido, or an amino; and m is zero or an integer ranging from 1 to 8. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof. It is understood by those of ordinary skill in the art, that the E groups listed above are divalent (e.g., methylene, ethane-1,2-diyl, ethene-1,2-diyl, 1,4-phenylene, cyclohexane-1,2-diyl).

The term "silyl group" as used herein is represented by the formula -SiRR'R," where R, R', and R" can be, independently, a hydrogen, a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted aralkyl (e.g. a substituted or unsubstituted alkylaryl, a substituted or unsubstituted arylalkyl, etc.), a substituted or unsubstituted polyaryl, a substituted or unsubstituted polyheteroaryl, a substituted or unsubstituted carbonyl, a phosphonium, a phosphanyl, a phosphonyl, a sulfinyl, a thiol, an amido, an amino, an alkoxy, or an oxo, described above. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof.

The terms "thiol" are used interchangeably and are represented by -SR, where R can be a hydrogen, a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted aralkyl (e.g. a substituted or unsubstituted alkylaryl, a substituted or unsubstituted arylalkyl, etc.), a substituted or unsubstituted polyaryl, a substituted or unsubstituted polyheteroaryl, a substituted or unsubstituted carbonyl, a phosphonium, a phosphanyl, an amido, an amino, an alkoxy, an oxo, a phosphonyl, a sulfinyl, or a silyl, described above. Such substituents can be any substituents described above, e.g., halogen, azide, alkyl, aralkyl, alkenyl, alkynyl, cycloalkyl, hydroxyl, carbonyl (such as a carboxyl, alkoxycarbonyl, formyl, or an acyl), silyl, ether, ester, thiocarbonyl (such as a thioester, a thioacetate, or a thioformate), alkoxyl, phosphoryl, phosphate, phosphonate, phosphinate, amino (e.g. quarternized amino), amido, amidine, imine, cyano, nitro, azido, sulfhydryl, alkylthio, sulfate, sulfonate, sulfamoyl, sulfonamido, sulfonyl, heterocyclyl, alkylaryl, haloalkyl, -CN, aryl, heteroaryl, polyaryl, polyheteroaryl, and combinations thereof.

The disclosed compounds and substituent groups, can, independently, possess two or more of the groups listed above. For example, if the compound or substituent group is a straight chain alkyl group, one of the hydrogen atoms of the alkyl group can be substituted with a hydroxyl group, an alkoxy group, etc. Depending upon the groups that are selected, a first group can be incorporated within second group or, alternatively, the first group can be pendant *(i.e.,* attached) to the second group. For example, with the phrase "an alkyl group comprising an ester group," the ester group can be incorporated within the backbone of the alkyl group. Alternatively, the ester can be attached to the backbone of the alkyl group. The nature of the group(s) that is (are) selected will determine if the first group is embedded or attached to the second group.

The compounds and substituents can be substituted, independently, with the substituents described above in the definition of "substituted."

The numerical ranges disclose individually each possible number that such a range could reasonably encompass, as well as any sub-ranges and combinations of sub-ranges encompassed therein. For example, in a given range carbon range of C₃-C₉, the range also discloses C₃, C₄, C₅, C₆, C₇, C₈, and C₉, as well as any subrange between these numbers (for example, C₄ -C₆), and any possible combination of ranges possible between these values. In yet another example, a given temperature range may be from about 25 °C to 30 °C, where the range also discloses temperatures that can be selected independently from about 25, 26, 27, 28, 29, and 30 °C, as well as any range between these numbers (for example, 26 to 28 °C), and any possible combination of ranges between these values.

Use of the term "about" is intended to describe values either above or below the stated value, which the term "about" modifies, to be within a range of approximately +/-10%. When the term "about" is used before a range of numbers *(i.e.,* about 1-5) or before a series of numbers *(i.e.,* about 1, 2, 3, 4, etc.) it is intended to modify both ends of the range of numbers and/or each of the numbers recited in the entire series, unless specified otherwise.

The disclosed compounds and substituent groups, can, independently, possess two or more of the groups listed above. For example, if the compound or substituent group is a straight chain alkyl group, one of the hydrogen atoms of the alkyl group can be substituted with a hydroxyl group, an alkoxy group, etc. Depending upon the groups that are selected, a first group can be incorporated within second group or, alternatively, the first group can be pendant *(i.e.,* attached) to the second group. For example, with the phrase "an alkyl group comprising an ester group," the ester group can be incorporated within the backbone of the alkyl group. Alternatively, the ester can be attached to the backbone of the alkyl group. The nature of the group(s) that is (are) selected will determine if the first group is embedded or attached to the second group.

The compounds and substituents can be substituted with, independently, with the substituents described above in the definition of "substituted."

### II. Compositions

Catalytic systems that can catalyze C-H functionalization reactions, such as C-H amination, with enantioselectivity have been developed. These catalytic systems contain iron complexes as host catalysts and diammonium guest templates as co-catalysts. The iron-based host catalysts contain crown-ether phthalocyanine as supporting ligands. The diammonium guest templates are bidentate compounds with chirality. The structures of the iron-based host catalysts and bidentate ammonium guest templates of the catalytic system allow them to interact with each other and thereby provide a complex steric environment, which allows for stereospecific and site-selective C-H functionalization, such as enantioselective C-H amination. The terms "enantioselective C-H amination" and "asymmetric C-H amination" are used interchangeably herein. For example, the disclosed catalytic systems can catalyze C-H amination with high enantioselectivity (i.e., at least 2:1) and optionally high yield (i.e., ≥30%), under mild reaction conditions, such as at room temperature.

Without being bound to any theories, it is believed that the bidentate ammonium guest template can spontaneously self-assemble with the iron-based host catalysts through non-covalent interactions between the ammonium groups and the crown-ether components of the host catalyst to form a supramolecular structure. The strong binding affinity (i.e., a log(K) of at least 4.0) of the bidentate ammonium guest templates for the crown-ether containing host catalysts stabilizes the overall supramolecular structure and provides thermal stability for the catalytic system. Such a thermal stable supramolecular structure can provide an advantageous steric environment for stereospecific and site-selective C-H functionalization, such as enantioselective C-H amination.

### A. Iron-Based Host Catalysts

The disclosed catalytic system contains an iron-based host catalyst (also referred to herein as the "host catalyst"). The host catalyst contains crown-ether phthalocyanine as supporting ligands. The π-accepting phthalocyanine scaffold of the ligands can provide elevated reactivity and stability for the iron-based host catalysts. The inclusion of crown-ether substituents onto the core phthalocyanine scaffold can provide supramolecular chemistry for creating structural complexity. For example, the crown-ether components of the supporting ligands allow for non-covalent interactions (such as ionic interactions, hydrogen bonding, Van der Waals forces, π effects, hydrophobic/hydrophilic effects, etc.) with a variety of functional groups (such as ammonium, for example, ammonium groups of a bidentate ammonium guest template as described herein) to create a complex steric environment for stereospecific and site-selective reactions (such as enantioselective C-H aminations).

The disclosed iron-based host catalyst can have the structure of Formula I: 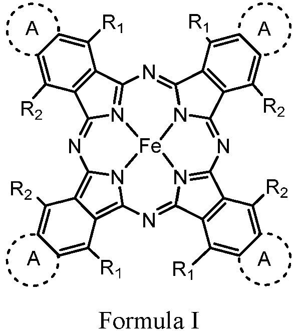 wherein: (i) each occurrence of A, together with the carbon atoms to which it is attached, can form a crown ether; (ii) each occurrence of R₁ and R₂ can be independently hydrogen, a substituted or unsubstituted alkyl, a substituted or unsubstituted alkenyl, a substituted or unsubstituted alkynyl, a substituted or unsubstituted aryl, a substituted or unsubstituted polyaryl, a substituted or unsubstituted heteroaryl, a substituted or unsubstituted heteropolyaryl, a substituted or unsubstituted cyclic group, a substituted or unsubstituted heterocyclic, a substituted or unsubstituted aralkyl, a halide, a hydroxyl, an alkoxyl, an amino, an amido, a carbonyl, a nitro, a nitrile, or a thiol; and (iii) the substituents can be independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

In some forms of Formula I, each occurrence of A, together with the carbon atoms to which it is attached, can form a 12-crown-4 ether, a 15-crown-5-ether, an 18-crown-6 ether, a dibenzo-18-crown-6 ether, a 24-crown-8 ether, or an aza-crown ether.

In some forms, the host catalyst can have the structure of Formula II: 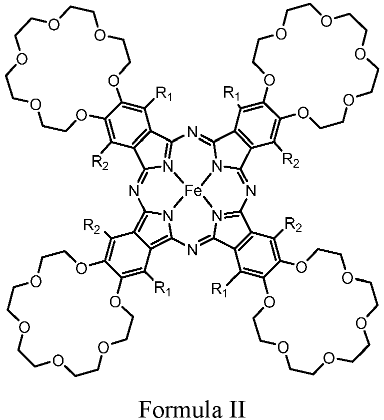 wherein R₁ and R₂ are as defined above for Formula I.

For any one of Formula I and Formula II, each occurrence of R₁ and R₂ can be independently hydrogen, a substituted or unsubstituted alkyl, a substituted or unsubstituted alkenyl, a substituted or unsubstituted alkynyl, a hydroxyl, an alkoxyl, or a carbonyl. For example, in some forms, each occurrence of R₁ and R₂ of Formula I and/or Formula II are hydrogen.

In some forms, the host catalyst can have the following structure:

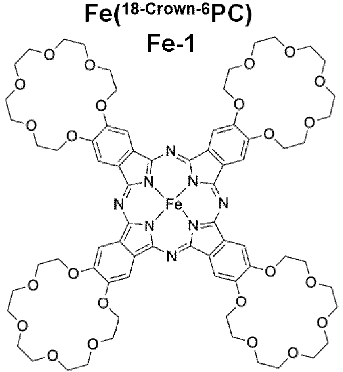

### B. Diammonium Guest Templates

The disclosed catalytic system further contains a bidentate ammonium guest template as a co-catalyst (also referred to herein as the "guest template" or "diammonium template"). The guest template contains a chiral backbone and at least two terminal ammonium groups that can bind to the crown-ether components of the host catalyst via non-covalent interactions, such as by hydrogen bonding.

The disclosed guest templates can have the structure of Formula III: 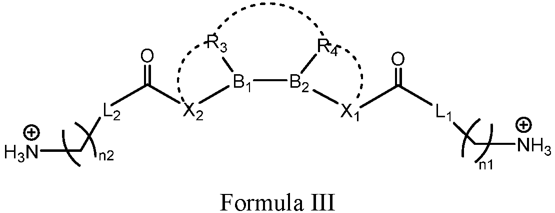 wherein: (i) B₁ and B₂ can be independently absent, a carbon atom, a substituted or unsubstituted aryl, a substituted or unsubstituted polyaryl, a substituted or unsubstituted heteroaryl, a substituted or unsubstituted heteropolyaryl, or a substituted or unsubstituted heterocyclic; (ii) R₃ and R₄ can be independently absent, hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic; (iii) ------ can be absent or a bond (single, double, or triple); (iv) X₁ and X₂ can be independently absent, oxygen atom, or NR₅, and R₅ is absent, hydrogen, or a substituted or unsubstituted alkyl; (v) L₁ and L₂ can be independently absent or 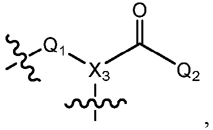 X₃ can be a nitrogen atom or CR₆, R₆ is hydrogen or a substituted or unsubstituted alkyl, Q₁ and Q₂ can be independently a substituted or unsubstituted alkyl, a substituted or unsubstituted alkenyl, or a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, a substituted or unsubstituted cycloalkyl, a substituted or unsubstituted cycloalkenyl, or a substituted or unsubstituted cycloalkynyl; (vi) n₁ and n₂ can be independently an integer from 0 to 20; and (vii) the substituents can be independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

**In** some forms of Formula **III,** B₁ and B₂ can be independently a carbon atom, a substituted or unsubstituted aryl, or a substituted or unsubstituted polyaryl; and R₃ and R₄ are independently absent, hydrogen, a substituted or unsubstituted alkyl, a substituted or unsubstituted aryl, or a substituted or unsubstituted aralkyl.

Typically, the 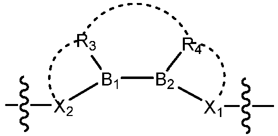 of Formula III contains one or more chiral centers. For example, in some forms of Formula III, 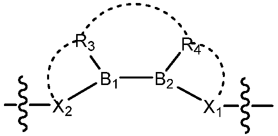 can be one of the following: 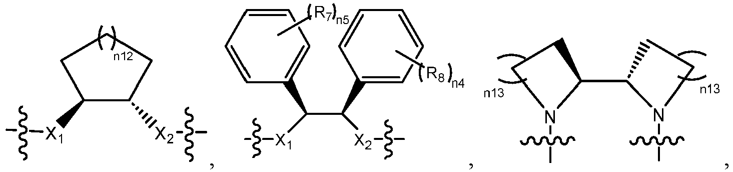 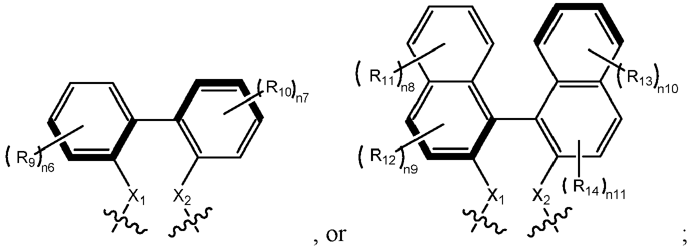 wherein X₁ and X₂ can be independently an oxygen atom or NR₅, R₅ can be absent or hydrogen; n₄ and n₅ can be independently an integer from 0 to 5; n₆, n₇, n₈, and n₁₀ can be independently an integer from 0 to 4; n₉ and n₁₁ can be independently an integer from 0 to 2; n₁₂-n₁₄ can be independently an integer from 1 to 6; and R₇-R₁₄ can be independently hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic.

In some forms of Formula III, L₁ and L₂ can be independently 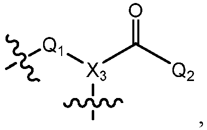 wherein X₃ can be a nitrogen atom, and wherein Q₁ and Q₂ can be independently a substituted or unsubstituted aryl, a substituted or unsubstituted polyaryl, a substituted or unsubstituted cycloalkyl, a substituted or unsubstituted cycloalkenyl, or a substituted or unsubstituted cycloalkynyl. For example, Q₁ and Q₂ are unsubstituted phenyl.

In some forms, the guest template is in a salt form of the structure of Formula III. In these forms, the guest template contains a cationic component having the structure of Formula III and an anion. Any suitable anions can be used to form the guest template, for example, tetrafluoroborate, acetate, aspartate, benzoate, besylate, bicarbonate/carbonate, bisulphate/sulphate, borate, camsylate, citrate, edisylate, esylate, formate, fumarate, gluceptate, gluconate, glucuronate, hexafluorophosphate, hibenzate, hydrochloride/chloride, hydrobromide/bromide, hydroiodide/iodide, isethionate, lactate, malate, maleate, malonate, mesylate, methylsulphate, naphthylate, 2-napsylate, nicotinate, nitrate, orotate, oxalate, palmitate, pamoate, phosphate/hydrogen phosphate/dihydrogen phosphate, saccharate, stearate, succinate, tartrate, tosylate and trifluoroacetate salts. In some forms, the guest template contains a cationic component having the structure of Formula III and tetrafluoroborate anions.

In some forms, the guest template can have the structure of any one of the following:

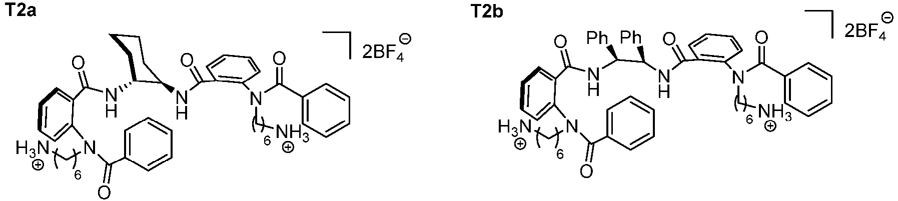

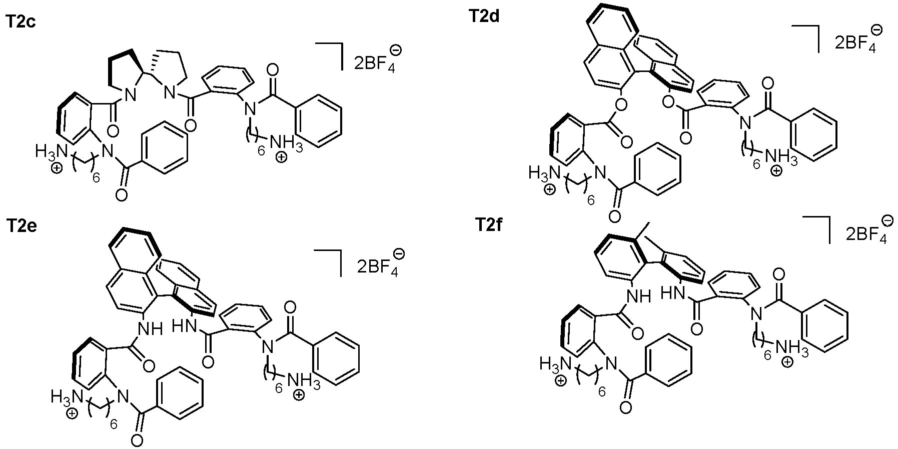

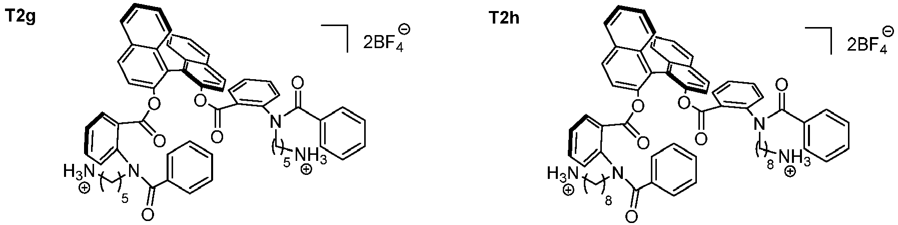

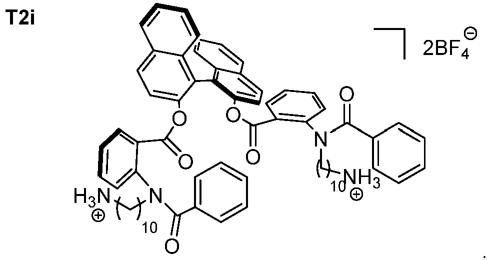

### C. Catalytic Systems

The catalytic systems disclosed herein contain an iron-based host catalyst and a bidentate ammonium guest template, such as any one of the host catalysts and any one of the guest templates described above. Generally, the host catalyst and the guest template of the catalytic system can have a molar ratio ranging from 1:10 to 1:1, from 1:5 to 1:1, such as 1:2.

The structures of the host catalyst and the guest template allow them to interact with each other, such as by non-covalent interactions, and thereby provide a complex steric environment suitable for stereospecific and site-selective C-H functionalization, such as C-H aminations. For example, without being bound to any theories, it is believed that the bidentate ammonium guest template can spontaneously self-assemble with the iron-based host catalysts through non-covalent interactions between the ammonium groups and the crown-ether components of the host catalyst to form a supramolecular structure, such as the structure of Formula IV shown below. The supramolecular structures formed by the host catalyst and guest template can be examined using spectroscopic methods, for example, by using NMR, UV-vis, and/or CD spectroscopies.

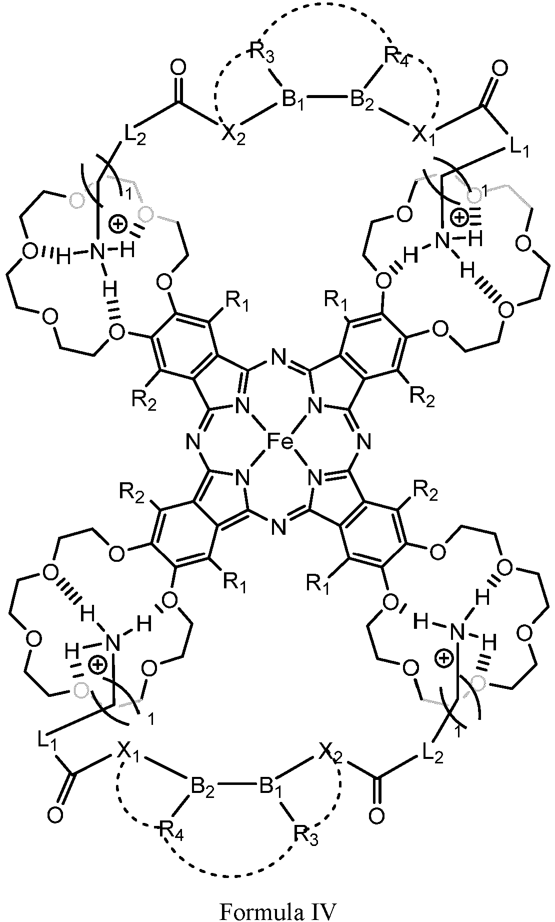

The supramolecular structure can provide a steric environment for stereospecific and site-selective C-H functionalization, such as C-H aminations. For example, the disclosed catalytic systems can catalyze C-H amination with high enantioselectivity (i.e., at least 2:1).

Further, the bidentate ammonium guest templates can bind the crown-ether containing host catalysts with a strong binding affinity (i.e., a log(K) of at least 4.0). For example, the binding between the host catalyst and the guest template has a log(K) of at least 4.0, such as in a range from 4.0 to about 8.0 or from 4.0 to about 6.0. Such a binding affinity can stabilize the overall supramolecular structure and thereby provide thermal stability for the catalytic system. This allows for enantioselective chemical reactions, such as enantioselective C-H aminations, under room temperature, as compared to the low temperatures (typically from -10°C to -35°C) required in enantioselective C-H aminations using art-known Rhodium catalysts *(see,* for example, C. Liang, et al., Angew. Chem. Int. Ed. 2006, 45, 4641-4644; C. Liang, et al., J. Am. Chem. Soc. 2008, 130, 343-350). For example, the disclosed catalytic systems can catalyze C-H aminations with high enantioselectivity (i.e., at least 2:1) and optionally high yield (i.e., ≥30%), under mild reaction conditions, such as at room temperature.

In some forms, the host catalyst and guest template can form any one of the following supramolecular structures:

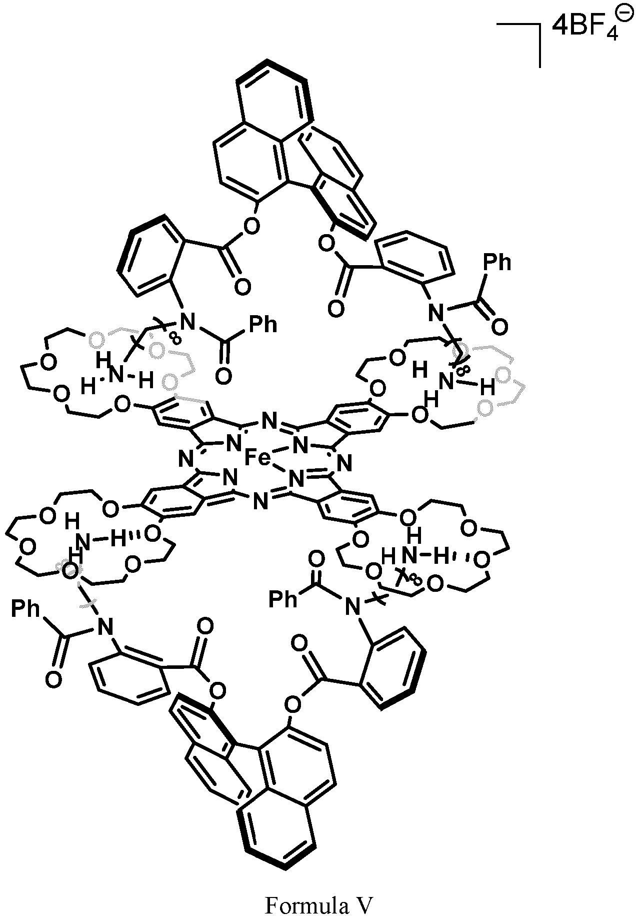

In some forms, for any of Formulae I-V described above, the substituents, when present, can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted alkylaryl (e.g. benzyl), a carbonyl (e.g. carboxyl, ester, etc.), an alkoxy (e.g. methoxy, ethoxy, aryloxy, benzoether, etc.), a halide, a hydroxyl, or a haloalkyl, or a combination thereof.

For any of Formulae I-V described above, the alkyl can be a linear alkyl, a branched alkyl, or a cyclic alkyl (either monocyclic or polycyclic). The terms "cyclic alkyl" and "cycloalkyl" are used interchangeably herein. Exemplary alkyl include a linear C₁-C₃₀ alkyl, a branched C₄-C₃₀ alkyl, a cyclic C₃-C₃₀ alkyl, a linear C₁-C₂₀ alkyl, a branched C₄-C₂₀ alkyl, a cyclic C₃-C₂₀ alkyl, a linear C₁-C₁₀ alkyl, a branched C₄-C₁₀ alkyl, a cyclic C₃-C₁₀ alkyl, a linear C₁-C₆ alkyl, a branched C₄-C₆ alkyl, a cyclic C₃-C₆ alkyl, a linear C₁-C₄ alkyl, cyclic C₃-C₄ alkyl, such as a linear C₁-C₁₀, C₁-C₉, C₁-C₈, C₁-C₇, C₁-C₆, C₁-C₅, C₁-C₄, C₁-C₃, or C₁-C₂ alkyl group, a branched C₃-C₉, C₃-C₉, C₃-C₈, C₃-C₇, C₃-C₆, C₃-C₅, or C₃-C₄ alkyl group, or a cyclic C₃-C₉, C₃-C₉, C₃-C₈, C₃-C₇, C₃-C₆, C₃-C₅, or C₃-C₄ alkyl group. The cyclic alkyl can be a monocyclic or polycyclic alkyl, such as a C₄-C₃₀, C₄-C₂₅, C₄-C₂₀, C₄-C₁₈, C₄-C₁₆, C₄-C₁₅, C₄-C₁₄, C₄-C₁₃, C₄-C₁₂, C₄-C₁₀, C₄-C₉, C₄-C₈, C₄-C₇, C₄-C₆, or C₄-C₅ monocyclic or polycyclic alkyl group.

For any of Formulae I-V described above, the alkenyl can be a linear alkenyl, a branched alkenyl, or a cyclic alkenyl (either monocyclic or polycyclic). The terms "cyclic alkenyl" and "cycloalkenyl" are used interchangeably herein. Exemplary alkenyl include a linear C₂-C₃₀ alkenyl, a branched C₄-C₃₀ alkenyl, a cyclic C₃-C₃₀ alkenyl, a linear C₂-C₂₀ alkenyl, a branched C₄-C₂₀ alkenyl, a cyclic C₃-C₂₀ alkenyl, a linear C₂-C₁₀ alkenyl, a branched C₄-C₁₀ alkenyl, a cyclic C₃-C₁₀ alkenyl, a linear C₂-C₆ alkenyl, a branched C₄-C₆ alkenyl, a cyclic C₃-C₆ alkenyl, a linear C₂-C₄ alkenyl, cyclic C₃-C₄ alkenyl, such as a linear C₂-C₁₀, C₂-C₉, C₂-C₈, C₂-C₇, C₂-C₆, C₂-C₅, C₂-C₄, C₂-C₃, C₂ alkenyl group, a branched C₃-C₉, C₃-C₉, C₃-C₈, C₃-C₇, C₃-C₆, C₃-C₅, C₃-C₄ alkenyl group, or a cyclic C₃-C₉, C₃-C₉, C₃-C₈, C₃-C₇, C₃-C₆, C₃-C₅, C₃-C₄ alkenyl group. The cyclic alkenyl can be a monocyclic or polycyclic alkenyl, such as a C₄-C₃₀, C₄-C₂₅, C₄-C₂₀, C₄-C₁₈, C₄-C₁₆, C₄-C₁₅, C₄-C₁₄, C₄-C₁₃, C₄-C₁₂, C₄-C₁₀, C₄-C₉, C₄-C₈, C₄-C₇, C₄-C₆, or C₄-C₅ monocylcic or polycyclic alkenyl group.

For any of Formulae I-V described above, the alkynyl can be a linear alkynyl, a branched alkynyl, or a cyclic alkynyl (either monocyclic or polycyclic). The terms "cyclic alkynyl" and "cycloalkynyl" are used interchangeably herein. Exemplary alkynyl include a linear C₂-C₃₀ alkynyl, a branched C₄-C₃₀ alkynyl, a cyclic C₃-C₃₀ alkynyl, a linear C₂-C₂₀ alkynyl, a branched C₄-C₂₀ alkynyl, a cyclic C₃-C₂₀ alkynyl, a linear C₂-C₁₀ alkynyl, a branched C₄-C₁₀ alkynyl, a cyclic C₃-C₁₀ alkynyl, a linear C₂-C₆ alkynyl, a branched C₄-C₆ alkynyl, a cyclic C₃-C₆ alkynyl, a linear C₂-C₄ alkynyl, cyclic C₃-C₄ alkynyl, such as a linear C₂-C₁₀, C₂-C₉, C₂-C₈, C₂-C₇, C₂-C₆, C₂-C₅, C₂-C₄, C₂-C₃, C₂ alkynyl group, a branched C₃-C₉, C₃-C₉, C₃-C₈, C₃-C₇, C₃-C₆, C₃-C₅, C₃-C₄ alkynyl group, or a cyclic C₃-C₉, C₃-C₉, C₃-C₈, C₃-C₇, C₃-C₆, C₃-C₅, C₃-C₄ alkynyl group. The cyclic alkynyl can be a monocyclic or polycyclic alkynyl, such as a C₄-C₃₀, C₄-C₂₅, C₄-C₂₀, C₄-C₁₈, C₄-C₁₆, C₄-C₁₅, C₄-C₁₄, C₄-C₁₃, C₄-C₁₂, C₄-C₁₀, C₄-C₉, C₄-C₈, C₄-C₇, C₄-C₆, or C₄-C₅ monocyclic or polycyclic alkynyl group.

It is understood that any of the exemplary alkyl, alkenyl, and alkynyl groups can be heteroalkyl, heteroalkenyl, and heteroalkynyl, respectively.

For any of Formulae I-V described above, the aryl group can be a C₅-C₃₀ aryl, a C₅-C₂₀ aryl, a C₅-C₁₂ aryl, a C₅-C₁₁ aryl, a C₅-C₉ aryl, a C₆-C₂₀ aryl, a C₆-C₁₂ aryl, a C₆-C₁₁ aryl, or a C₆-C₉ aryl. It is understood that the aryl can be a heteroaryl, such as a C₅-C₃₀ heteroaryl, a C₅-C₂₀ heteroaryl, a C₅-C₁₂ heteroaryl, a C₅-C₁₁ heteroaryl, a C₅-C₉ heteroaryl, a C₆-C₃₀ heteroaryl, a C₆-C₂₀ heteroaryl, a C₆-C₁₂ heteroaryl, a C₆-C₁₁ heteroaryl, or a C₆-C₉ heteroaryl. For any of Formulae I, Ia, II, III, and IV, the polyaryl group can be a C₁₀-C₃₀ polyaryl, a C₁₀-C₂₀ polyaryl, a C₁₀-C₁₂ polyaryl, a C₁₀-C₁₁ polyaryl, or a C₁₂-C₂₀ polyaryl. It is understood that the aryl can be a polyheteroaryl, such as a C₁₀-C₃₀ polyheteroaryl, a C₁₀-C₂₀ polyheteroaryl, a C₁₀-C₁₂ polyheteroaryl, a C₁₀-C₁₁ polyheteroaryl, or a C₁₂-C₂₀ polyheteroaryl.

### III. Methods of Making and Reagents Thereof

The iron-based host catalysts, the ligands forming the host catalysts, and the diammonium templates described herein can be synthesized using methods known in the art of organic chemical synthesis.

The target host catalysts can be synthesized by reacting a corresponding crown-ether phthalocyanine ligand with an iron precursor in a suitable solvent. The corresponding ligand(s) can be prepared using methods known in the art, such as those described in the Examples. The reaction solution containing the corresponding crown-ether phthalocyanine ligand and the iron precursor can be stirred at room temperature and optionally under an inert gas atmosphere, such as nitrogen atmosphere, for a suitable time to form a product containing the target iron-based host catalysts. The product containing the target iron-based host catalysts can be purified and optionally recrystallized to provide the target iron-based host catalysts.

The diammonium templates can be prepared using methods known in the art, such as those described in the Examples.

More specific reagents, reaction conditions, and iron-based host catalysts and diammonium templates formed are described in the Examples.

### IV. Methods of Using

The catalytic systems described herein are thermal stable and can provide a steric environment for chemical reactions. For example, the supramolecular structure formed by non-covalent interactions between the host catalyst and guest template can provide a steric environment for stereospecific and site-selective C-H functionalization, such as C-H aminations. Further, the bidentate ammonium guest templates can bind the crown-ether containing host catalysts with a strong binding affinity (i.e., a log(K) of at least 4.0), and thereby provide thermal stability for the catalytic system. This allows for enantioselective chemical reactions, such as enantioselective C-H aminations, under room temperature, as compared to the low temperatures (typically from -10°C to -35°C) required in enantioselective C-H aminations using art-known Rhodium catalysts *(see,* for example, C. Liang, et al., Angew. Chem. Int. Ed. 2006, 45, 4641-4644; C. Liang, et al., J. Am. Chem. Soc. 2008, 130, 343-350). Accordingly, the catalytic systems disclosed herein are particularly suitable for use in enantioselective reactions, such as enantioselective C-H functionalization reactions, under mild reaction conditions, such as at room temperature (i.e., 20-22 °C at 1 atm). For example, the disclosed catalytic systems can catalyze C-H amination of a variety of substrates to produce aminated products with high enantioselectivity (i.e., at least 2:1) and optionally high yield (i.e., ≥30%), at room temperature.

Generally, the methods of catalyzing an enantioselective C-H amination of a substrate using the catalytic system disclosed herein include: (i) maintaining a reaction mixture at room temperature for a period of time sufficient to form an aminated product, wherein the reaction mixture contains the substrate, a nitrogen-source reactant, the catalytic system described herein, and a solvent.

Typically, the host catalyst of the catalytic system used in the method for catalyzing enantioselective C-H amination reaction can have a loading in a range from about 5 mol% to about 30 mol% or from about 10 mol% to about 20 mol%, such as about 15 mol% in the reaction mixture. The loading of the host catalyst in the reaction mixture can be calculated using the formula: mol% of the host catalyst = [(the no. of moles of the host catalyst)/(the no. of moles of limiting reagent]×100%. For example, if 1. equiv. PhINTces is the limiting reagent, then 0.15 equiv. of the Fe catalysts can be used.

The nitrogen-source reactant in the reaction mixture of the disclosed method can be any suitable compounds capable of supplying nitrogen atom(s) or a functional group containing nitrogen atom(s) that replaces a hydrogen of the substrate to form the aminated product. In some forms, the nitrogen-source reactant in the reaction mixture can be R'-NH₂ or R''IN-R', wherein R' can be -SO₂-R'₁ or -SO₃-R'₂; R'₁ and R'₂ can be independently a substituted or unsubstituted phenyl or a substituted or an unsubstituted alkyl (e.g., an unsubstituted linear or branched C1-C10 alkyl, an unsubstituted linear or branched C1-C8 alkyl, an unsubstituted linear or branched C1-C6 alkyl, an unsubstituted linear or branched C1-C4 alkyl, etc., such as a tert-butyl, or a haloalkyl, such as - CH₂CCl₃, -CCl₃, -CH₂CH₂CCl₃, -CH₂CCl₂CCl₃, etc.); R'' can be a substituted or unsubstituted phenyl; and the substituents, when present, can be independently an unsubstituted alkyl (e.g., any one of those described above, such as a methyl), a halide (such as chloride), a nitro, a cyano, a nitrile, or a carbonyl. In some forms, the nitrogen-source reactant in the reaction mixture can be R'-NH₂ or R''IN-R', wherein R' can be Tces, Ts, Ns, or o/p/m-halobenzene sulfonyl or sulfonate (such as a p-chlorobenzene sulfonyl or p-chlorobenzene sulfonate); and R'' can be an unsubstituted phenyl or a phenyl substituted with alkyl or halide (such as a chlorobenzene or alkylbenzene) at any suitable position(s) on the benzene ring. In some forms, the nitrogen-source reactant in the reaction mixture can be PhINTces.

In some forms of the method, the substrate used in the reaction mixture for enantioselective C-H amination reaction can have a structure of R-H, and the aminated product formed by enantioselective C-H amination reaction the can have a structure of R-NHR', wherein R can be a substituted or unsubstituted aryl (e.g., a substituted or unsubstituted tetralin, a substituted or unsubstituted indane, a substituted or unsubstituted aralkyl, etc.), a substituted or unsubstituted polyaryl, a substituted or unsubstituted heteroaryl, a substituted or unsubstituted heteropolyaryl, a substituted or unsubstituted heterocyclyl (e.g., a substituted or unsubstituted chromane, a substituted or unsubstituted isochromane, a substituted or unsubstituted thiochromane, a substituted or unsubstituted isothiochromane, dihydrobenzofuran, dihydroisobenzofuran, dihydrobenzothiophene, dihydroisobenzothiophene, etc.), a substituted or unsubstituted cycloalkyl (monocyclic or polycyclic, such as a fused cycloalkyl ring), a substituted or unsubstituted cycloalkenyl (monocyclic or polycyclic, such as a fused cycloalkenyl ring), or a substituted or unsubstituted cycloalkynyl (monocyclic or polycyclic, such as a fused cycloalkynyl ring); the substituents can be independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a siloxy, a sulfinyl, a sulfonyl, a sulfonic acid, a phosphonium, a phosphanyl, a phosphoryl, a phosphonyl, or a thiol, or a combination thereof; and R' can be any one of those described above for R'-NH₂ or R"IN-R', such as Tces, Ts, Ns, or o/p/m-halobenzene sulfonyl or sulfonate (such as a p-chlorobenzene sulfonyl or p-chlorobenzene sulfonate). In some forms, R can be a substituted or unsubstituted aryl (e.g., a substituted or unsubstituted tetralin, a substituted or unsubstituted indane, a substituted or unsubstituted aralkyl, etc.), a substituted or unsubstituted polyaryl, a substituted or unsubstituted heteroaryl, a substituted or unsubstituted heteropolyaryl, or a substituted or unsubstituted heterocyclyl (e.g., a substituted or unsubstituted chromane, a substituted or unsubstituted isochromane, a substituted or unsubstituted thiochromane, a substituted or unsubstituted isothiochromane, dihydrobenzofuran, dihydroisobenzofuran, dihydrobenzothiophene, dihydroisobenzothiophene, etc.).

In some forms of the method, the substrate used in the reaction mixture for enantioselective C-H amination reaction can have the structure of Formula VI and the aminated product formed by enantioselective C-H amination reaction can have the structure of Formula VII: 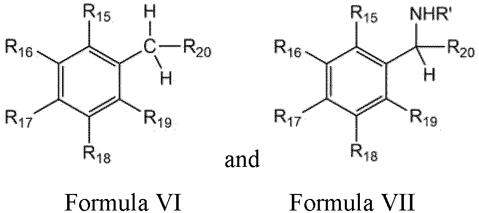 wherein R₁₅-R₂₀ can be independently hydrogen, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted alkenyl, a substituted or unsubstituted alkynyl, a substituted or unsubstituted aryl (e.g., a substituted or unsubstituted phenyl or benzyl), an alkoxyl (e.g., a methoxyl, an ethoxyl, etc.), a halide, a hydroxyl, a carbonyl, an amino, an amido, a silyl, or a siloxyl, or R₂₀ and R₁₅ together or R₂₀ and R₁₉ together, with the carbon atoms to which they are attached, can form a substituted or unsubstituted cycloalkyl (including monocyclic, such as a substituted or unsubstituted cyclopentyl and cyclohexyl, and polycyclic, such as a substituted or unsubstituted fused cycloalkyl ring), a substituted or unsubstituted cycloalkenyl (monocyclic or polycyclic, such as a fused cycloalkenyl ring), a substituted or unsubstituted cycloalkynyl (monocyclic or polycyclic, such as a fused cycloalkynyl ring), a substituted or unsubstituted aryl, a substituted or unsubstituted polyaryl, a substituted or unsubstituted heterocyclyl (e.g., a substituted or unsubstituted oxanyl, a substituted or unsubstituted thianyl, a substituted or unsubstituted oxolanyl, a substituted or unsubstituted thiolanyl, etc.), a substituted or unsubstituted heteroaryl, or a substituted or unsubstituted heteropolyaryl; the substituents, when present, can be independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a siloxy, a sulfinyl, a sulfonyl, a sulfonic acid, a phosphonium, a phosphanyl, a phosphoryl, a phosphonyl, or a thiol, or a combination thereof, such as a substituted or unsubstituted alkyl, a substituted or unsubstituted aryl, a carbonyl, an oxo, an amino, or an alkoxyl; and R' can be any one of those described above for R'-NH₂ or R"IN-R', such as Tces, Ts, Ns, or o/p/m-halobenzene sulfonyl or sulfonate (such as a p-chlorobenzene sulfonyl or p-chlorobenzene sulfonate).

In some forms, R₁₉ can be hydrogen and R₂₀ can be a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), or R₂₀ and R₁₉ together, with the carbon atoms to which they are attached, can form a substituted or unsubstituted cycloalkyl (including monocyclic, such as a substituted or unsubstituted cyclopentyl and cyclohexyl, and polycyclic, such as a substituted or unsubstituted fused cycloalkyl ring) or a substituted or unsubstituted heterocyclyl (e.g., a substituted or unsubstituted oxanyl, a substituted or unsubstituted thianyl, a substituted or unsubstituted oxolanyl, a substituted or unsubstituted thiolanyl, etc.). In these forms, R₁₅-R₁₈ can be independently hydrogen, a halide, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted aryl (e.g., a substituted or unsubstituted phenyl or benzyl), an alkoxyl (e.g., a methoxyl, an ethoxyl, etc.), a carbonyl, or a siloxyl. For example, R₁₅, R₁₆, and R₁₈ are hydrogen and R₁₇ is independently hydrogen, a halide, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted aryl (e.g., a substituted or unsubstituted phenyl or benzyl), an alkoxyl (e.g., a methoxyl, an ethoxyl, etc.), a carbonyl, or a siloxyl.

In some forms of Formula VI and VII, R₁₇ and R₂₀ can be independently hydrogen, a substituted or unsubstituted alkyl (e.g., an unsubstituted C₁-C₁₀, C₁-C₈, or C₁-C₆ linear or branched alkyl), a carbonyl, an alkoxyl (e.g., methoxy, ethoxy, aryloxy, benzoether, etc.), a substituted or unsubstituted alkylaryl (e.g. benzyl), a haloalkyl, or a halide (e.g., fluoride, chloride, bromide, or iodide). In some forms of Formula VI and VII, R₂₀ and R₁₅ together or R₂₀ and R₁₉ together, with the carbon atoms to which they are attached, can form a substituted or unsubstituted cycloalkyl, a substituted or unsubstituted aryl, a substituted or unsubstituted heterocyclyl, a substituted or unsubstituted heteroaryl, such as an unsubstituted C₃-C₆ cycloalkyl or an unsubstituted C₃-C₆ heterocycloalkyl, e.g., piperidine, piperazine, tetrahydropyran, 1,4-dioxane, thiane, 1,3-dithiane, 1,4-dithiane, morpholine, or thiomorpholine.

In some forms, for any one of R-H, R-NHR', Formula VI, and Formula VII, the substituents can be independently a substituted or unsubstituted alkyl, a substituted or unsubstituted alkenyl, a substituted or unsubstituted alkynyl, a substituted or unsubstituted heterocyclyl, a substituted or unsubstituted aryl, a substituted or unsubstituted heteroaryl, a substituted or unsubstituted polyaryl, a substituted or unsubstituted polyheteroaryl, a substituted or unsubstituted alkylaryl (e.g. benzyl), a carbonyl (e.g. carboxyl, ester, etc.), an alkoxy (e.g. methoxy, ethoxy, aryloxy, benzoether, etc.), an oxo, an amino, a halide, a hydroxyl, or a haloalkyl, or a combination thereof.

For any one of R-H, R-NHR', Formula VI, and Formula VII, the alkyl can be a linear alkyl, a branched alkyl, or a cyclic alkyl (either monocyclic or polycyclic). The terms "cyclic alkyl" and "cycloalkyl" are used interchangeably herein. Exemplary alkyl include a linear C₁-C₃₀ alkyl, a branched C₄-C₃₀ alkyl, a cyclic C₃-C₃₀ alkyl, a linear C₁-C₂₀ alkyl, a branched C₄-C₂₀ alkyl, a cyclic C₃-C₂₀ alkyl, a linear C₁-C₁₀ alkyl, a branched C₄-C₁₀ alkyl, a cyclic C₃-C₁₀ alkyl, a linear C₁-C₆ alkyl, a branched C₄-C₆ alkyl, a cyclic C₃-C₆ alkyl, a linear C₁-C₄ alkyl, cyclic C₃-C₄ alkyl, such as a linear C₁-C₁₀, C₁-C₉, C₁-C₈, C₁-C₇, C₁-C₆, C₁-C₅, C₁-C₄, C₁-C₃, or C₁-C₂ alkyl group, a branched C₃-C₉, C₃-C₉, C₃-C₈, C₃-C₇, C₃-C₆, C₃-C₅, or C₃-C₄ alkyl group, or a cyclic C₃-C₉, C₃-C₉, C₃-C₈, C₃-C₇, C₃-C₆, C₃-C₅, or C₃-C₄ alkyl group. The cyclic alkyl can be a monocyclic or polycyclic alkyl, such as a C₄-C₃₀, C₄-C₂₅, C₄-C₂₀, C₄-C₁₈, C₄-C₁₆, C₄-C₁₅, C₄-C₁₄, C₄-C₁₃, C₄-C₁₂, C₄-C₁₀, C₄-C₉, C₄-C₈, C₄-C₇, C₄-C₆, or C₄-C₅ monocyclic or polycyclic alkyl group.

For any one of R-H, R-NHR', Formula VI, and Formula VII, the alkenyl can be a linear alkenyl, a branched alkenyl, or a cyclic alkenyl (either monocyclic or polycyclic). The terms "cyclic alkenyl" and "cycloalkenyl" are used interchangeably herein. Exemplary alkenyl include a linear C₂-C₃₀ alkenyl, a branched C₄-C₃₀ alkenyl, a cyclic C₃-C₃₀ alkenyl, a linear C₂-C₂₀ alkenyl, a branched C₄-C₂₀ alkenyl, a cyclic C₃-C₂₀ alkenyl, a linear C₂-C₁₀ alkenyl, a branched C₄-C₁₀ alkenyl, a cyclic C₃-C₁₀ alkenyl, a linear C₂-C₆ alkenyl, a branched C₄-C₆ alkenyl, a cyclic C₃-C₆ alkenyl, a linear C₂-C₄ alkenyl, cyclic C₃-C₄ alkenyl, such as a linear C₂-C₁₀, C₂-C₉, C₂-C₈, C₂-C₇, C₂-C₆, C₂-C₅, C₂-C₄, C₂-C₃, C₂ alkenyl group, a branched C₃-C₉, C₃-C₉, C₃-C₈, C₃-C₇, C₃-C₆, C₃-C₅, C₃-C₄ alkenyl group, or a cyclic C₃-C₉, C₃-C₉, C₃-C₈, C₃-C₇, C₃-C₆, C₃-C₅, C₃-C₄ alkenyl group. The cyclic alkenyl can be a monocyclic or polycyclic alkenyl, such as a C₄-C₃₀, C₄-C₂₅, C₄-C₂₀, C₄-C₁₈, C₄-C₁₆, C₄-C₁₅, C₄-C₁₄, C₄-C₁₃, C₄-C₁₂, C₄-C₁₀, C₄-C₉, C₄-C₈, C₄-C₇, C₄-C₆, or C₄-C₅ monocylcic or polycyclic alkenyl group.

For any one of R-H, R-NHR', Formula VI, and Formula VII, the alkynyl can be a linear alkynyl, a branched alkynyl, or a cyclic alkynyl (either monocyclic or polycyclic). The terms "cyclic alkynyl" and "cycloalkynyl" are used interchangeably herein. Exemplary alkynyl include a linear C₂-C₃₀ alkynyl, a branched C₄-C₃₀ alkynyl, a cyclic C₃-C₃₀ alkynyl, a linear C₂-C₂₀ alkynyl, a branched C₄-C₂₀ alkynyl, a cyclic C₃-C₂₀ alkynyl, a linear C₂-C₁₀ alkynyl, a branched C₄-C₁₀ alkynyl, a cyclic C₃-C₁₀ alkynyl, a linear C₂-C₆ alkynyl, a branched C₄-C₆ alkynyl, a cyclic C₃-C₆ alkynyl, a linear C₂-C₄ alkynyl, cyclic C₃-C₄ alkynyl, such as a linear C₂-C₁₀, C₂-C₉, C₂-C₈, C₂-C₇, C₂-C₆, C₂-C₅, C₂-C₄, C₂-C₃, C₂ alkynyl group, a branched C₃-C₉, C₃-C₉, C₃-C₈, C₃-C₇, C₃-C₆, C₃-C₅, C₃-C₄ alkynyl group, or a cyclic C₃-C₉, C₃-C₉, C₃-C₈, C₃-C₇, C₃-C₆, C₃-C₅, C₃-C₄ alkynyl group. The cyclic alkynyl can be a monocyclic or polycyclic alkynyl, such as a C₄-C₃₀, C₄-C₂₅, C₄-C₂₀, C₄-C₁₈, C₄-C₁₆, C₄-C₁₅, C₄-C₁₄, C₄-C₁₃, C₄-C₁₂, C₄-C₁₀, C₄-C₉, C₄-C₈, C₄-C₇, C₄-C₆, or C₄-C₅ monocyclic or polycyclic alkynyl group.

It is understood that any of the exemplary alkyl, alkenyl, and alkynyl groups can be heteroalkyl, heteroalkenyl, and heteroalkynyl, respectively.

For any one of R-H, R-NHR', Formula VI, and Formula VII, the aryl group can be a C₅-C₃₀ aryl, a C₅-C₂₀ aryl, a C₅-C₁₂ aryl, a C₅-C₁₁ aryl, a C₅-C₉ aryl, a C₆-C₂₀ aryl, a C₆-C₁₂ aryl, a C₆-C₁₁ aryl, or a C₆-C₉ aryl. It is understood that the aryl can be a heteroaryl, such as a C₅-C₃₀ heteroaryl, a C₅-C₂₀ heteroaryl, a C₅-C₁₂ heteroaryl, a C₅-C₁₁ heteroaryl, a C₅-C₉ heteroaryl, a C₆-C₃₀ heteroaryl, a C₆-C₂₀ heteroaryl, a C₆-C₁₂ heteroaryl, a C₆-C₁₁ heteroaryl, or a C₆-C₉ heteroaryl. For any of Formulae I, Ia, II, III, and IV, the polyaryl group can be a C₁₀-C₃₀ polyaryl, a C₁₀-C₂₀ polyaryl, a C₁₀-C₁₂ polyaryl, a C₁₀-C₁₁ polyaryl, or a C₁₂-C₂₀ polyaryl. It is understood that the aryl can be a polyheteroaryl, such as a C₁₀-C₃₀ polyheteroaryl, a C₁₀-C₂₀ polyheteroaryl, a C₁₀-C₁₂ polyheteroaryl, a C₁₀-C₁₁ polyheteroaryl, or a C₁₂-C₂₀ polyheteroaryl.

In some forms of the method, the substrate used in the enantioselective C-H amination reaction can have a structure of any one of the following: 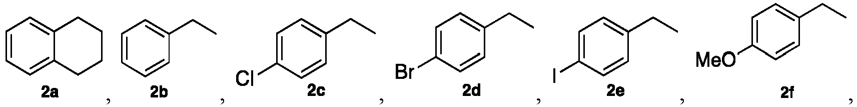 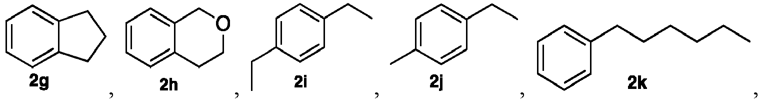 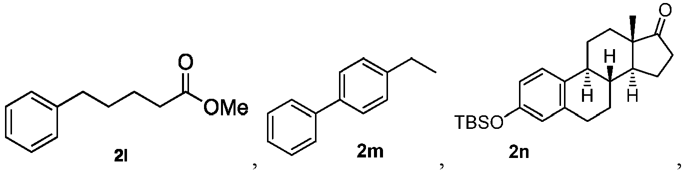 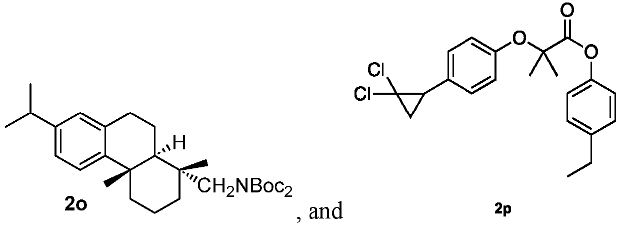 ; and the aminated product can have a structure of any one of the following:

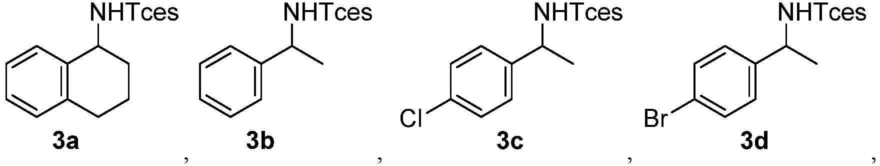

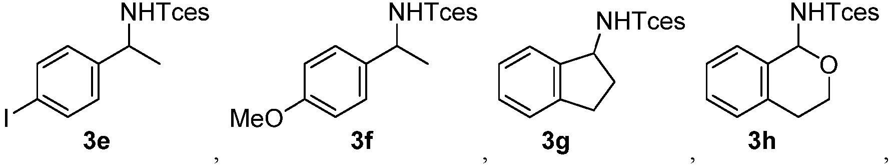

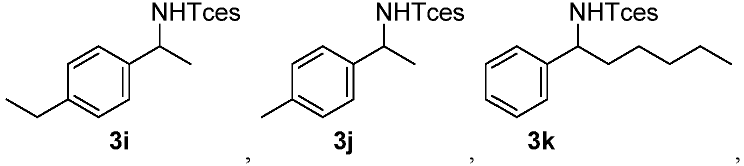

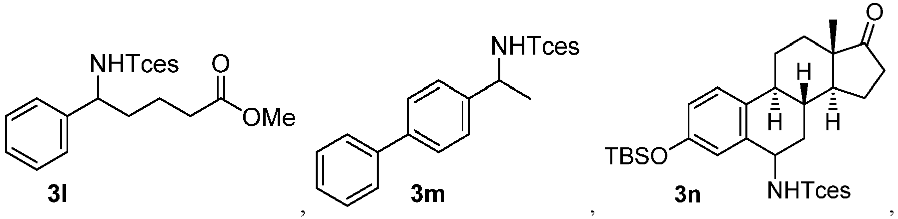

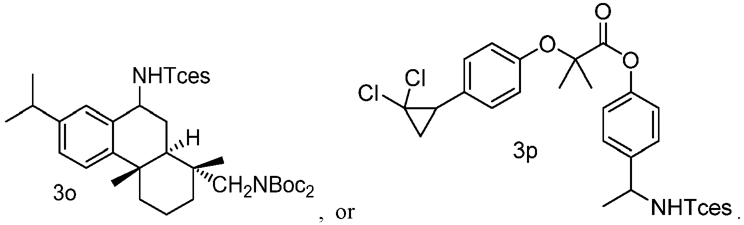

Generally, the substrate and the nitrogen-source reactant in the reaction mixture of the disclosed method can have a molar ratio in a range from 10:1 to 1:1 or from 10:1 to 5:1, such as 8:1.

Exemplary solvents suitable for use in forming the reaction mixture containing the substrate, the nitrogen-source reactant, the catalytic system disclosed herein, and the solvent include, but are not limited to, CH₃CN, THF, HFIP, and C₆H₆. For example, the solvent forming the reaction mixture is CH₃CN.

In some forms, the reaction mixture of the disclosed method further contains a drying agent, such as MgO, or a molecular sieve, such as a 3Å molecular sieve, a 4Å molecular sieve, or a 5Å molecular sieve, or a combination thereof. The use of a drying agent and/or a molecular sieve in the reaction mixture can remove residue moisture in the reaction mixture.

The reaction conditions for performing the enantioselective C-H amination reactions, such as reaction time, gas environment, stirring, etc., depend on the specific reactants and desired products of the reactions. For example, the C-H amination catalyzed by the catalytic system disclosed herein is performed at room temperature for a period of time in a range from about 30 minutes to about 24 hours, from about 1 hour to about 20 hours, or from about 2 hours to about 18 hours, such as about 16 hours, and optionally under an inert gas environment (such as under nitrogen, helium, and/or argon) and/or with stirring.

Optionally, the methods for catalyzing enantioselective C-H amination disclosed herein further includes a step of mixing the substrate, the nitrogen-source reactant, the disclosed catalytic system, and the solvent to form the reaction mixture prior to step (i), and/or a step of purifying the aminated product, optionally by column chromatography, subsequent to step (i).

In some forms, the aminated product formed from the enantioselective C-H amination reaction catalyzed by the catalytic system disclosed herein can have a yield of at least 30%, at least 40%, at least 50%, in a range from about 30% to about 70%, from about 40% to about 70%, or from about 50% to about 70%.

In some forms, the aminated product formed from the enantioselective C-H amination reaction catalyzed by the catalytic system disclosed herein can have an enantiomeric ratio of at least 2:1, such as in a range from 2:1 to 99:1, from 4:1 to 99:1, from 9:1 to 99:1, or from 19:1 to 99:1, as determined by chiral HPLC.

In some forms, the aminated product formed from the enantioselective C-H amination reaction catalyzed by the catalytic system disclosed herein can have a yield of at least 30%, at least 40%, at least 50%, in a range from about 30% to about 70%, from about 40% to about 70%, or from about 50% to about 70%; and an enantiomeric ratio of at least 2:1, such as in a range from 2:1 to 99:1, from 4:1 to 99:1, from 9:1 to 99:1, or from 19:1 to 99:1, as determined by chiral HPLC.

Specific exemplary substrates, nitrogen-source reactants, and their corresponding yields and enantiomeric ratios, are described in the Examples below.

The disclosed compositions and methods can be further understood through the following numbered paragraphs.
1. A host catalyst having a structure of: 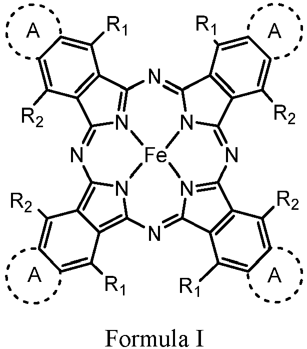 wherein:
   (i) each occurrence of A, together with the carbon atoms to which it is attached, forms a crown ether;
   (ii) each occurrence of R₁ and R₂ are independently hydrogen, a substituted or unsubstituted alkyl, a substituted or unsubstituted alkenyl, a substituted or unsubstituted alkynyl, a substituted or unsubstituted aryl, a substituted or unsubstituted polyaryl, a substituted or unsubstituted heteroaryl, a substituted or unsubstituted heteropolyaryl, a substituted or unsubstituted cyclic group, a substituted or unsubstituted heterocyclic, a substituted or unsubstituted aralkyl, a halide, a hydroxyl, an alkoxyl, an amino, an amido, a carbonyl, a nitro, a nitrile, or a thiol; and
   (iii) the substituents are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.
2. The host catalyst of paragraph 1, wherein each occurrence of A, together with the carbon atoms to which it is attached, forms a 12-crown-4 ether, a 15-crown-5-ether, an 18-crown-6 ether, a dibenzo-18-crown-6 ether, a 24-crown-8 ether, or an aza-crown ether.
3. The host catalyst of paragraph 1 or 2, wherein the host catalyst has a structure of: 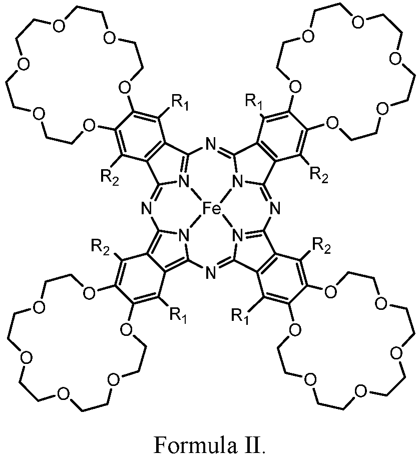
4. The host catalyst of any one of paragraphs 1-3, wherein each occurrence of R₁ and R₂ are independently hydrogen, a substituted or unsubstituted alkyl, a substituted or unsubstituted alkenyl, a substituted or unsubstituted alkynyl, a hydroxyl, an alkoxyl, or a carbonyl.
5. The host catalyst of any one of paragraphs 1-4, wherein each occurrence of R₁ and R₂ are hydrogen.
6. A guest template having a structure of: 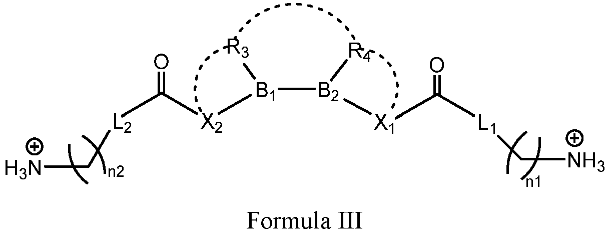 wherein:
   (i) B₁ and B₂ are independently absent, a carbon atom, a substituted or unsubstituted aryl, a substituted or unsubstituted polyaryl, a substituted or unsubstituted heteroaryl, a substituted or unsubstituted heteropolyaryl, or a substituted or unsubstituted heterocyclic;
   (ii) R₃ and R₄ are independently absent, hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic;
   (iii) ------ is absent or a bond (single, double, or triple);
   (iv) X₁ and X₂ are independently absent, oxygen atom, or NR₅, and R₅ is absent, hydrogen, or a substituted or unsubstituted alkyl;
   (v) L₁ and L₂ are independently absent or 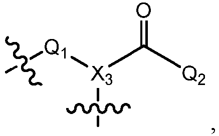
      X₃ is a nitrogen atom or CR₆, R₆ is hydrogen or a substituted or unsubstituted alkyl,
      Q₁ and Q₂ are independently a substituted or unsubstituted alkyl, a substituted or unsubstituted alkenyl, or a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, a substituted or unsubstituted cycloalkyl, a substituted or unsubstituted cycloalkenyl, or a substituted or unsubstituted cycloalkynyl;
   (vi) n₁ and n₂ are independently an integer from 0 to 20; and
   (vii) the substituents are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.
7. The guest template of paragraph 6, wherein B₁ and B₂ are independently a carbon atom, a substituted or unsubstituted aryl, or a substituted or unsubstituted polyaryl; and R₃ and R₄ are independently absent, hydrogen, a substituted or unsubstituted alkyl, a substituted or unsubstituted aryl, or a substituted or unsubstituted aralkyl.
8. The guest template of paragraph 6 or 7, wherein 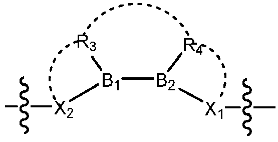 is: 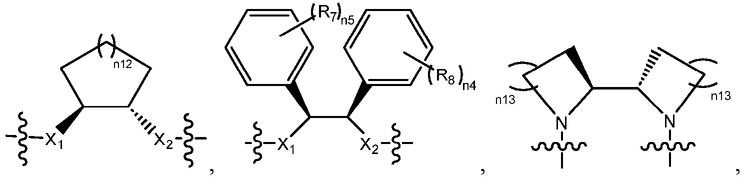 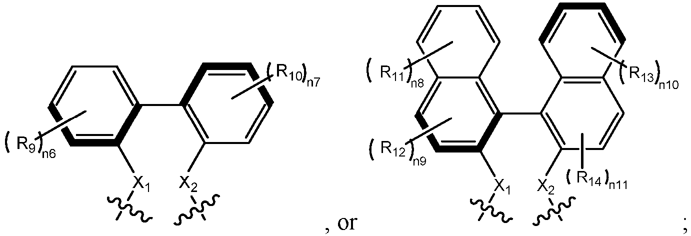
   X₁ and X₂ are independently an oxygen atom or NR₅, R₅ is absent or hydrogen;
   n₄ and n₅ are independently an integer from 0 to 5;
   n₆, n₇, n₈, and n₁₀ are independently an integer from 0 to 4;
   n₉ and n₁₁ are independently an integer from 0 to 2;
   n₁₂-n₁₄ are independently an integer from 1 to 6; and
   R₇-R₁₄ are independently hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic.
9. The guest template of any one of paragraphs 6-8, wherein L₁ and L₂ are independently 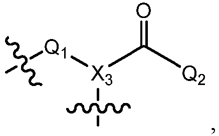 wherein X₃ is a nitrogen atom, and wherein Q₁ and Q₂ are independently a substituted or unsubstituted aryl, a substituted or unsubstituted polyaryl, a substituted or unsubstituted cycloalkyl, a substituted or unsubstituted cycloalkenyl, or a substituted or unsubstituted cycloalkynyl.
10. The guest template of any one of paragraphs 6-9, wherein Q₁ and Q₂ are unsubstituted phenyl.
11. A catalytic system comprising:
   a host catalyst; and
   a guest template,
   wherein the host catalyst has the structure of: 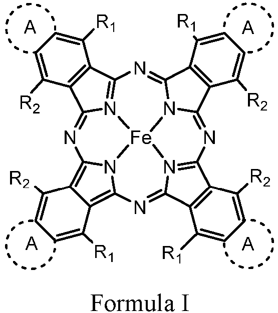 wherein:
      (i) each occurrence of A, together with the carbon atoms to which it is attached, forms a crown ether;
      (ii) each occurrence of R₁ and R₂ are independently hydrogen, a substituted or unsubstituted alkyl, a substituted or unsubstituted alkenyl, a substituted or unsubstituted alkynyl, a substituted or unsubstituted aryl, a substituted or unsubstituted polyaryl, a substituted or unsubstituted heteroaryl, a substituted or unsubstituted heteropolyaryl, a substituted or unsubstituted cyclic group, a substituted or unsubstituted heterocyclic, a substituted or unsubstituted aralkyl, a halide, a hydroxyl, an alkoxyl, an amino, an amido, a carbonyl, a nitro, a nitrile, or a thiol; and
   wherein the guest template has the structure of: 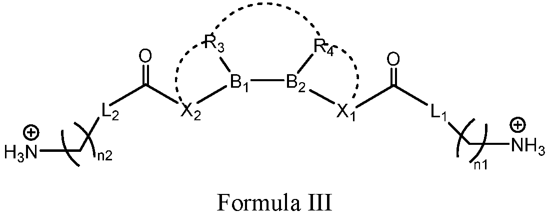 wherein:
      (i) B₁ and B₂ are independently absent, a carbon atom, a substituted or unsubstituted aryl, a substituted or unsubstituted polyaryl, a substituted or unsubstituted heteroaryl, a substituted or unsubstituted heteropolyaryl, or a substituted or unsubstituted heterocyclic;
      (ii) R₃ and R₄ are independently absent, hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic;
      (iii) ------ is absent or a bond (single, double, or triple);
      (iv) X₁ and X₂ are independently absent, oxygen atom, or NR₅, and R₅ is absent, hydrogen, or a substituted or unsubstituted alkyl;
      (v) L₁ and L₂ are independently absent or 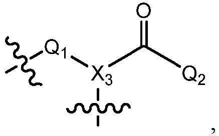
         X₃ is a nitrogen atom or CR₆, R₆ is hydrogen or a substituted or unsubstituted alkyl,
         Q₁ and Q₂ are independently a substituted or unsubstituted alkyl, a substituted or unsubstituted alkenyl, or a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, a substituted or unsubstituted cycloalkyl, a substituted or unsubstituted cycloalkenyl, or a substituted or unsubstituted cycloalkynyl;
      (vi) n₁ and n₂ are independently an integer from 0 to 20; and
      wherein the substituents are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.
12. The catalytic system of paragraph 11, wherein the host catalyst and the guest template have a molar ratio ranging from 1:10 to 1:1, from 1:5 to 1:1, such as 1:2.
13. The catalytic system of paragraph 11 or 12, wherein the host catalyst and the guest template are non-covalently bound to each other, optionally via the crown ether of the host catalyst and the ammonium group of the guest template.
14. The catalytic system of paragraph 13, wherein the binding between the host catalyst and the guest template has a log(K) of at least 4.0, such as in a range from 4.0 to about 8.0 or from 4.0 to about 6.0.
15. The catalytic system of paragraph 13 or 14, wherein the host catalyst and the guest template form a structure of: 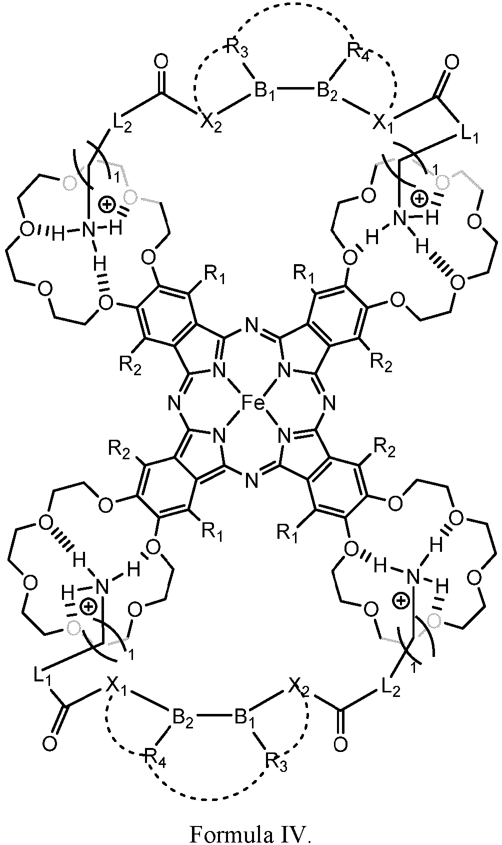
16. The catalytic system of any one of paragraphs 11-15, wherein the host catalyst has the structure of: 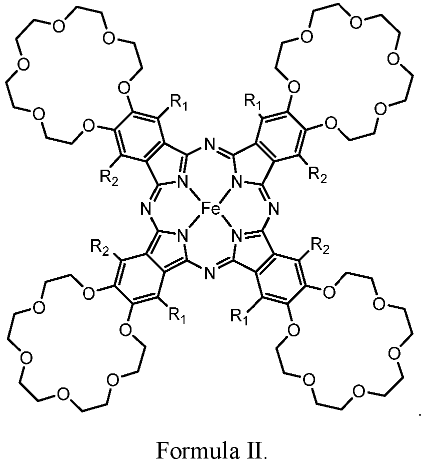
17. The catalytic system of any one of paragraphs 11-16, wherein each occurrence of R₁ and R₂ are independently hydrogen, a substituted or unsubstituted alkyl, a substituted or unsubstituted alkenyl, a substituted or unsubstituted alkynyl, a hydroxyl, an alkoxyl, or a carbonyl.
18. The catalytic system of any one of paragraphs 11-17, wherein each occurrence of R₁ and R₂ are hydrogen.
19. The catalytic system of any one of paragraphs 11-18, wherein B₁ and B₂ are independently a carbon atom, a substituted or unsubstituted aryl, or a substituted or unsubstituted polyaryl; and R₃ and R₄ are independently absent, hydrogen, a substituted or unsubstituted alkyl, a substituted or unsubstituted aryl, or a substituted or unsubstituted aralkyl.
20. The catalytic system of any one of paragraphs 11-19, wherein 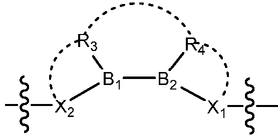 is: 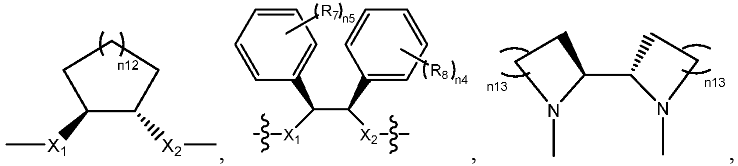 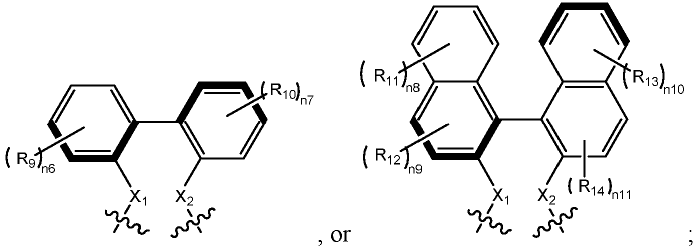
   X₁ and X₂ are independently an oxygen atom or NR₅, R₅ is absent or hydrogen;
   n₄ and n₅ are independently an integer from 0 to 5;
   n₆, n₇, n₈, and n₁₀ are independently an integer from 0 to 4;
   n₉ and n₁₁ are independently an integer from 0 to 2;
   n₁₂-n₁₄ are independently an integer from 1 to 6; and
   R₇-R₁₄ are independently hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic.
21. The catalytic system of any one of paragraphs 11-20, wherein L₁ and L₂ are independently 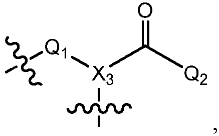 wherein X₃ is a nitrogen atom, and wherein Q₁ and Q₂ are independently a substituted or unsubstituted aryl, a substituted or unsubstituted polyaryl, a substituted or unsubstituted cycloalkyl, a substituted or unsubstituted cycloalkenyl, or a substituted or unsubstituted cycloalkynyl.
22. The catalytic system of any one of paragraphs 11-21, wherein Q₁ and Q₂ are unsubstituted phenyl.
23. The catalytic system of any one of paragraphs 13-22, wherein the host catalyst and the guest template form a complex having a structure of: 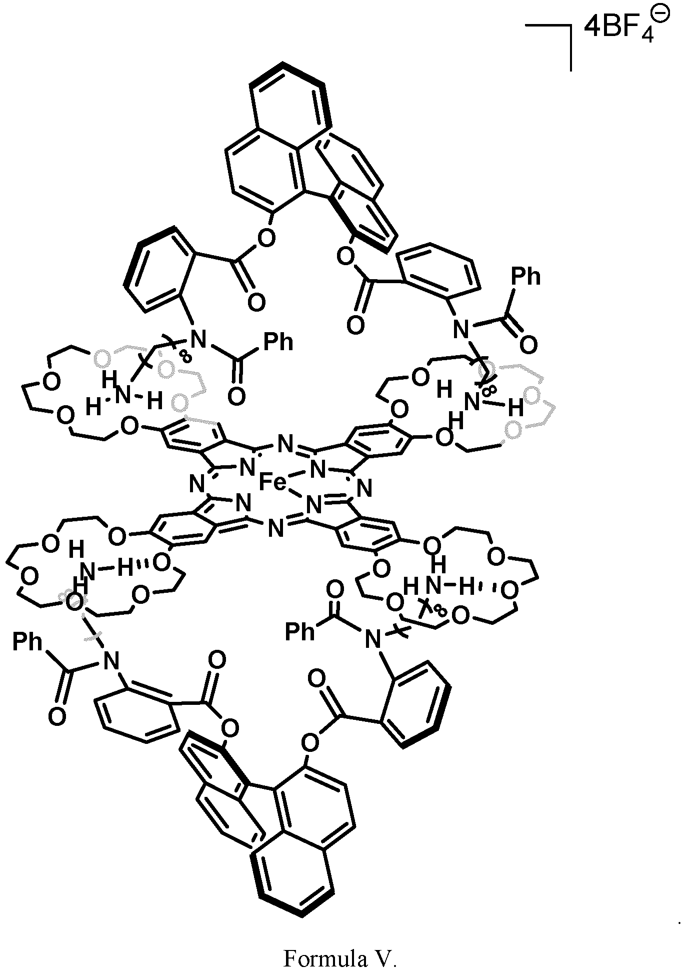
24. A method for asymmetric C-H amination of a substrate comprising:
   (i) maintaining a reaction mixture at room temperature for a period of time sufficient to form a product,
   wherein the reaction mixture comprises the substrate, a nitrogen-source reactant, the catalytic system of any one of paragraphs 11-23, and a solvent.
25. The method of paragraph 24, wherein the nitrogen-source reactant is R'-NH₂ or R''1N-R', wherein R' is -SO₂-R'₁ or -SO₃-R'₂; R'₁ and R'₂ are independently a substituted or unsubstituted phenyl or a substituted or an unsubstituted alkyl (e.g., an unsubstituted linear or branched C1-C10 alkyl, an unsubstituted linear or branched C1-C8 alkyl, an unsubstituted linear or branched C1-C6 alkyl, an unsubstituted linear or branched C1-C4 alkyl, etc., such as a tert-butyl, or a haloalkyl, such as -CH₂CCl₃, -CCl₃, -CH₂CH₂CCl₃, -CH₂CCl₂CCl₃, etc.); R'' is a substituted or unsubstituted phenyl; and the substituents, when present, are independently an unsubstituted alkyl (e.g., any one of those described above, such as a methyl), a halide (e.g., fluoride, chloride, bromide, iodide, etc.), a nitro, a cyano, a nitrile, or a carbonyl.
26. The method of paragraph 24 or 25, wherein:
   the substrate has a structure of R-H, and
   the product has a structure of R-NHR',
   R is a substituted or unsubstituted aryl (e.g., a substituted or unsubstituted tetralin, a substituted or unsubstituted indane, a substituted or unsubstituted aralkyl, etc.), a substituted or unsubstituted polyaryl, a substituted or unsubstituted heteroaryl, a substituted or unsubstituted heteropolyaryl, a substituted or unsubstituted heterocyclyl (e.g., a substituted or unsubstituted chromane, a substituted or unsubstituted isochromane, a substituted or unsubstituted thiochromane, a substituted or unsubstituted isothiochromane, dihydrobenzofuran, dihydroisobenzofuran, dihydrobenzothiophene, dihydroisobenzothiophene, etc.), a substituted or unsubstituted cycloalkyl (monocyclic or polycyclic, such as a fused cycloalkyl ring), a substituted or unsubstituted cycloalkenyl (monocyclic or polycyclic, such as a fused cycloalkenyl ring), or a substituted or unsubstituted cycloalkynyl (monocyclic or polycyclic, such as a fused cycloalkynyl ring); and
   the substituents are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a siloxy, a sulfinyl, a sulfonyl, a sulfonic acid, a phosphonium, a phosphanyl, a phosphoryl, a phosphonyl, or a thiol, or a combination thereof.
27. The method of paragraph 26, wherein:
   the substrate has a structure of: 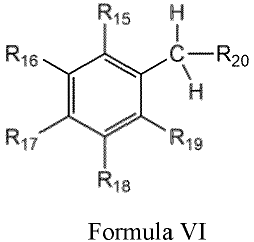 and
   the product has a structure of: 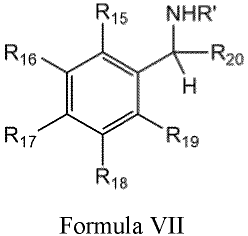
   R₁₅-R₂₀ are independently hydrogen, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted alkenyl, a substituted or unsubstituted alkynyl, a substituted or unsubstituted aryl (e.g., a substituted or unsubstituted phenyl or benzyl), an alkoxyl (e.g., a methoxyl, an ethoxyl, etc.), a halide, a hydroxyl, a carbonyl, an amino, an amido, a silyl, or a siloxyl, or R₂₀ and R₁₅ together or R₂₀ and R₁₉ together, with the carbon atoms to which they are attached, can form a substituted or unsubstituted cycloalkyl (including monocyclic, such as a substituted or unsubstituted cyclopentyl and cyclohexyl, and polycyclic, such as a substituted or unsubstituted fused cycloalkyl ring), a substituted or unsubstituted cycloalkenyl (monocyclic or polycyclic, such as a fused cycloalkenyl ring), a substituted or unsubstituted cycloalkynyl (monocyclic or polycyclic, such as a fused cycloalkynyl ring), a substituted or unsubstituted aryl, a substituted or unsubstituted polyaryl, a substituted or unsubstituted heterocyclyl (e.g., a substituted or unsubstituted oxanyl, a substituted or unsubstituted thianyl, a substituted or unsubstituted oxolanyl, a substituted or unsubstituted thiolanyl, etc.), a substituted or unsubstituted heteroaryl, or a substituted or unsubstituted heteropolyaryl; the substituents, when present, are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a siloxy, a sulfinyl, a sulfonyl, a sulfonic acid, a phosphonium, a phosphanyl, a phosphoryl, a phosphonyl, or a thiol, or a combination thereof, such as a substituted or unsubstituted alkyl, a substituted or unsubstituted aryl, a carbonyl, an oxo, an amino, or an alkoxyl.
28. The method of paragraph 27, wherein R₁₉ is hydrogen and R₂₀ is a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), or R₂₀ and R₁₉ together, with the carbon atoms to which they are attached, form a substituted or unsubstituted cycloalkyl (including monocyclic, such as a substituted or unsubstituted cyclopentyl and cyclohexyl, and polycyclic, such as a substituted or unsubstituted fused cycloalkyl ring) or a substituted or unsubstituted heterocyclyl (e.g., a substituted or unsubstituted oxanyl, a substituted or unsubstituted thianyl, a substituted or unsubstituted oxolanyl, a substituted or unsubstituted thiolanyl, etc.).
29. The method of paragraph 27 or 28, wherein R₁₅-R₁₈ are independently hydrogen, a halide, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted aryl (e.g., a substituted or unsubstituted phenyl or benzyl), an alkoxyl (e.g., a methoxyl, an ethoxyl, etc.), a carbonyl, or a siloxyl.
30. The method of any one of paragraphs 27-29, wherein R₁₅, R₁₆, and R₁₈ are hydrogen and R₁₇ is hydrogen, a halide, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted aryl (e.g., a substituted or unsubstituted phenyl or benzyl), an alkoxyl (e.g., a methoxyl, an ethoxyl, etc.), a carbonyl, or a siloxyl.
31. The method of any one of paragraphs 25-30, wherein R' is Tces, Ts, Ns, halobenzene sulfonyl, or halobenzene sulfonate (e.g., a p-chlorobenzene sulfonyl or p-chlorobenzene sulfonate); and R'' is an unsubstituted phenyl or a phenyl substituted with alkyl or halide (e.g., a chlorobenzene or alkylbenzene).
32. The method of any one of paragraphs 24-31, wherein the nitrogen-source reactant in the reaction mixture is PhINTces.
33. The method of any one of paragraphs 24-32, wherein the substrate has a structure of: 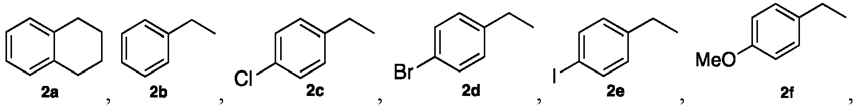 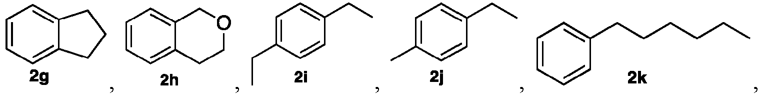 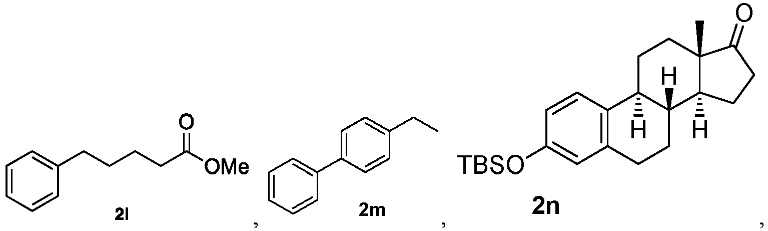 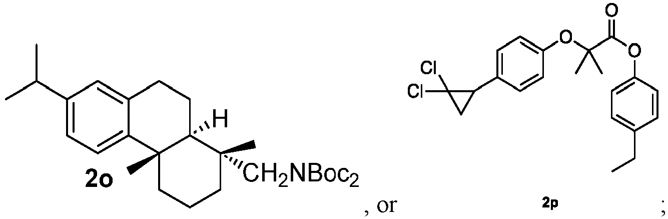 and the product has a structure of: 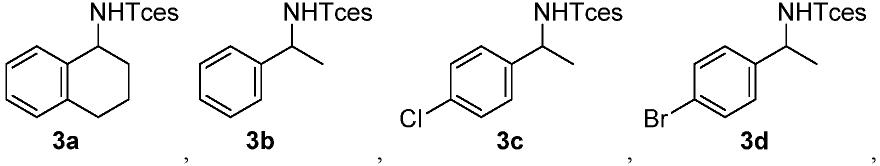 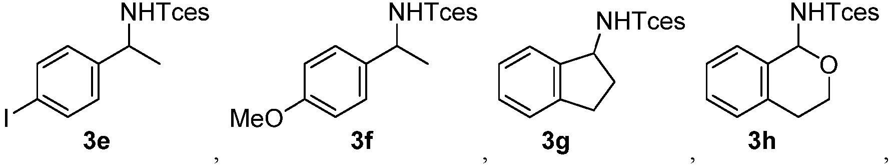 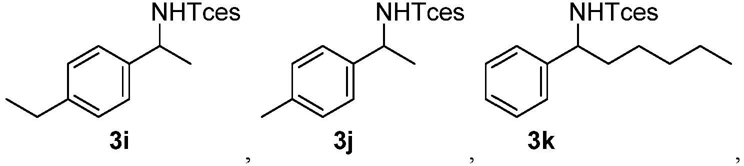 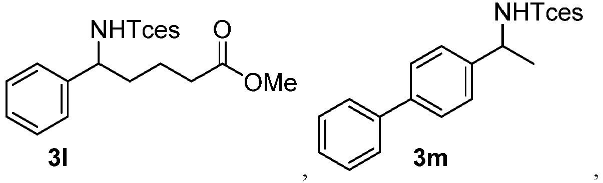 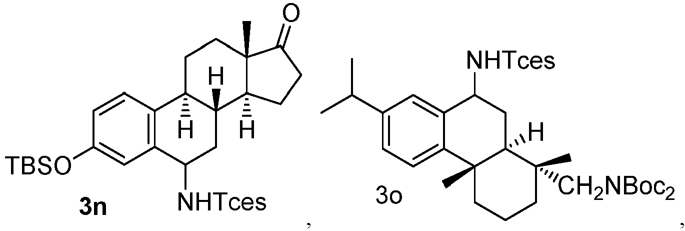 or 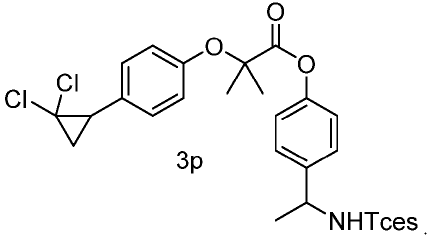
34. The method of any one of paragraphs 24 to 33, wherein the substrate and the nitrogen-source reactant have a molar ratio in a range from 10:1 to 1:1 or from 10:1 to 5:1, such as 8:1.
35. The method of any one of paragraphs 24 to 34, wherein the host catalyst has a loading in a range from about 5 mol% to about 30 mol% or from about 10 mol% to about 20 mol%, such as about 15 mol%.
36. The method of any one of paragraphs 24 to 35, wherein the solvent is CH₃CN, THF, HFIP, or C₆H₆, preferably wherein the solvent is CH₃CN.
37. The method of any one of paragraphs 24-36, wherein the reaction mixture further comprises a drying agent or a molecular sieve, such as a 3Å molecular sieve, a 4Å molecular sieve, or a 5Å molecular sieve.
38. The method of any one of paragraphs 24-37, wherein the reaction is performed under an inert gas environment, optionally wherein the inert gas is argon.
39. The method of any one of paragraphs 24-38, wherein the reaction mixture is maintained in a range from about 30 minutes to about 24 hours, from about 1 hour to about 20 hours, or from about 2 hours to about 18 hours, such as about 16 hours.
40. The method of any one of paragraphs 24-39, wherein the product has a yield of at least 30%, at least 40%, at least 50%, in a range from about 30% to about 70%, from about 40% to about 70%, or from about 50% to about 70%.
41. The method of any one of paragraphs 24-40, wherein the product has an enantiomeric ratio of at least 2:1, such as in a range from 2:1 to 99:1, from 4:1 to 99:1, from 9:1 to 99:1, or from 19:1 to 99:1, as determined by chiral HPLC.

### Examples

### Example 1: Exemplary supramolecular catalytic systems for asymmetric C-H amination of various substrate

### Materials and Methods

The following commercially obtained reagents were used as received from Sigma-Aldrich, Diekmann Chemical, Bide Pharmatech Ltd., and J&K Chemicals. All catalytic amination reactions were conducted under argon with deoxygenated anhydrous solvent and 4Å molecular sieves to exclude moisture. All other reactions were performed under a stream of argon gas with deoxygenated solvent, unless otherwise specified.

Chiral high-performance liquid chromatography (HPLC) analyses were carried out using an Agilent Technologies 1260 Infinite II Series instrument equipped with DAD detectors and OD-H, AD-H, or OD-3 columns. Thin-layer chromatography (TLC) was conducted using Merck silica gel 60 F254 precoated plates (0.25 mm) and visualized with UV light, potassium permanganate, ceric ammonium molybdate, or Vanillin staining. Flash column chromatography was performed according to the method described by Still et al. (Still, W.C.; Kahn, M.; Mitra, A. J. Org. Chem. 1978, 43, 2923) using silica gel (230-400 mesh), unless otherwise specified.

1H-NMR spectra were recorded on a Bruker 400 MHz or 500 MHz spectrometer and are reported in ppm using the solvent as an internal standard (TMS at 0 ppm). Data are reported as follows: s = singlet, d = doublet, t = triplet, q = quartet, quin = quintet, m = multiplet, b = broad, app = apparent; coupling constant(s) in Hz; integration. Proton-decoupled 13C-NMR spectra were recorded on a Bruker 400 MHz or 500 MHz spectrometer and are reported in ppm using the solvent (CDCl₃) as an internal standard at 77.0 ppm.

Low-resolution electrospray ionization-mass spectroscopy (ESI-MS) was recorded on a Finnigan LCQ quadrupole ion trap mass spectrometer (ThermoFisher Scientific), and high-resolution ESI-MS was measured on a Waters Corporation Micromass Q-TOF Premier quadrupole time-of-flight tandem mass spectrometer. MALDI-mass spectra were recorded on a Bruker ultrafleXtreme instrument equipped with built-in Flex control software, with calibration using porphyrinoid species, Sinapinic Acid, or α-Cyano-4-hydroxycinnamic acid matrices.

Circular dichroism (CD) spectra were recorded on a Mattson Galaxy Series FTIR 5000 and are reported in terms of frequency of absorption (cm). UV spectra were recorded on an Agilent Technologies Cary 8454 and are reported in terms of absorbance and wavelength (nm); kinetics mode was applied for the detection of **Fe- - -N** intermediates.

### Results

### Design and synthesis of the supramolecular catalytic system

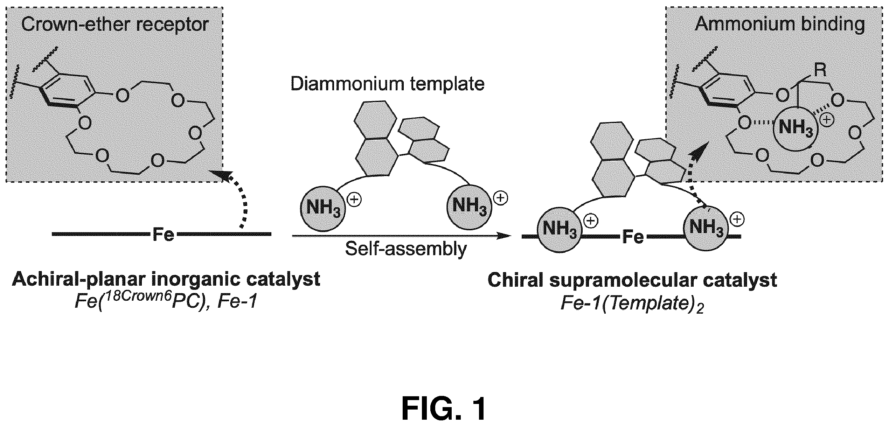

The supramolecular catalytic system is formed by the self-assembling of an 18-crown-6 substituted phthalocyanine host catalyst and a diammonium guest template (**Figure 1**). The ligand of the host catalyst, H₂(^{18-Crown-6}PC), was synthesized according to literature procedure and characterized by ¹H, ¹³C NMR, MALDI-TOF and UV-vis spectroscopies. Following a synthetic route similar to that reported in literature, Fe^{II}(PC) complexes, Fe-1 and Fe-2 were prepared. Fe-1 is formed by ^{18-Crown-6}PC (bearing 18-crown-6 substituents on the phthalocyanine moieties) and Fe-2 is formed by ^{t}BuPC (bearing *tert*-butyl substituents on the phthalocyanine moieties). The complexes of Fe-1 and Fe-2 were characterized by ¹H-NMR, MALDI-TOF and UV-vis spectroscopies which resemble those in literature. Fe-1 can be prepared at gram-scale. A chiral diammonium template with hexanoic acid linkers attached to (R)-(+)-2,2'-diamino-1,1'-binaphthyl (T1) and a series of Trost-ligand derived templates (T2a-T2i) were designed, synthesized and characterized by 1H, ¹³C NMR and ESI-MS.

### Catalytic studies

The performance of chiral diammonium templates (30 mol%) for catalytic C-H amination of tetralin (1 equiv.) was studied in anhydrous CH₃CN with 15 mol% of Fe-1 as catalyst and PhINTces 1 (3 equiv.) as nitrogen source (**Scheme 1**). The yields and e.r. values are summarized in **Table 1.** 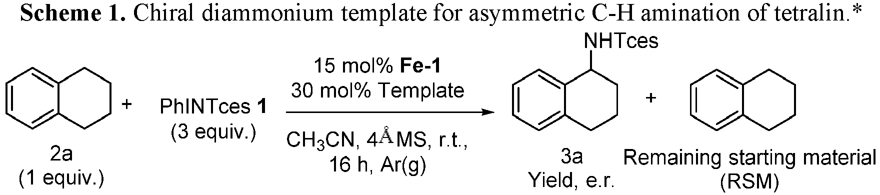 * Reaction condition: **1** (0.75 mmol), **2a** (0.25 mmol), **Fe-1** (15 mol%) or **Fe-2** (15 mol%), Template co-catalyst **T1** and **T2a-i** (30 mol%), CH₃CN (2 mL), 4Å molecular sieve (100 mg), under argon. Isolated yield calculated based on the ratio of conversion to product **3a:** the amount of **2a**; the endure yield of the reaction is remaining starting material **2a.** Enantiomeric ratio (e.r.) determined by chiral HPLC analysis.

**Table 1. Results of chiral diammonium template for asymmetric C-H amination of tetralin.**

| **Entry** | **Substrate** | **Host Catalyst** | **Guest Template** | **Yield of 3a** | **RSM** | **e.r.** |
|---|---|---|---|---|---|---|
| 1 | Tetralin 2a | **Fe-1** | **T1** | 53% | 47% | racemic |
| 2 | Tetralin 2a | **Fe-1** | **T2a** | 40% | 60% | 75:25 |
| 3 | Tetralin 2a | **Fe-1** | **T2b** | 43% | 57% | 87:13 |
| 4 | Tetralin 2a | **Fe-1** | **T2c** | 44% | 56% | 70:30 |
| 5 | Tetralin 2a | **Fe-1** | **T2d** | 45% | 55% | 94:6 |
| 6 | Tetralin 2a | **Fe-1** | **T2e** | 38% | 62% | 74:26 |
| 7 | Tetralin 2a | **Fe-1** | **T2f** | 40% | 60% | 72:28 |
| 8 | Tetralin 2a | **Fe-1** | **T2g** | 33% | 67% | 95:5 |
| 9 | Tetralin 2a | **Fe-1** | **T2h** | 50% | 50% | 95:5 |
| 10 | Tetralin 2a | **Fe-1** | **T2i** | 48% | 52% | 98:2 |

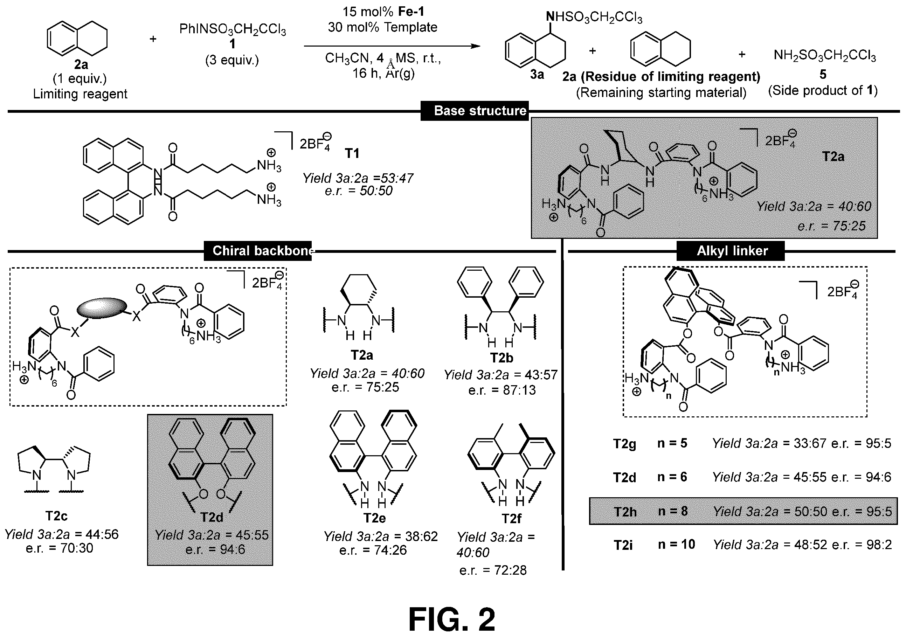

The following three features of the chiral diammonium templates may affect the enantioselective of catalysis: (1) linkers of the templates, (2) chiral environment of the backbone, and (3) hydrogen-bonding motifs. Regarding the linkers of the templates, although the same chiral backbone of 1,1-binapthalene-2,2'-diamine was installed on templates T1 and T2e (**Figure 2**), enantioselective C-H amination could only be achieved with the Trost-ligand derived T2e (**Figure 2**, e.r. =74:26). Regarding the chiral environment of the backbone, for example, the modification of the chiral backbone for 1,1'-diaminocyclohexane in T2a (**Figure 2**, e.r. = 75:25) to 1,2-diphenyl-1,2-ethylenediamne in T2b (**Figure 2**, e.r. = 87:13) was found to have significant effect on the enantioselectivity. Regarding the hydrogen-bonding motifs, templates **T2d** and **T2e** bear a similar structure, with only slight differences in the availability of hydrogen-bonding motifs adjacent to the chiral backbones (i.e. carboxylic esters in **T2d** and amides in **T2e**). The lack of hydrogen bond donors in **T2d** (**Figure 2****,** e.r. = 94:6) may lead to a higher level of enantioselectivity than in **T2e** (**Figure 2****,** e.r. = 74:26).

For the reactivity, the product yield was impacted by the diammonium template if the size of the reaction cavity is too small (as demonstrated by **T2g** in **Figure 2****,** which is more than 10% lower in product yield than **T2d**, **T2h** and **T2i**). **T2h** was selected for further catalytic studies because of its high product yield (**Table 1,** product yield = 50%) while retaining a high level of enantioselectivity (e.r. = 95:5).

The study of **Fe-1/T2h/1** catalytic system is shown in **Scheme 1** and the results are summarized in **Table 2.** The ratio for substrate: nitrogen source was varied (**Table 2,** entry 1-3, product yield = 50-60%, e.r. = 95:5-98:2), which showed a suitable ratio of substrate: nitrogen source being 8:1. The solvent effect (CH₂Cl₂, HFIP and THF, Table 2, entry 4-6, product yield = 11-32%, e.r. = 99:1-95:5) was examined. The reaction conditions of entry 3 was used except for the solvent. CH₃CN as solvent gave the highest product yield (**Table 2**, entry 3) and is comparable to non-enantioselective intermolecular C-H amination using a known catalyst **Mn(Cl₈PC)Cl** (**Table 2**, entry 9).

**Table 2. Results of Fe-1/T2h/1 catalytic system for asymmetric C-H amination of tetralin.**

| **Entry** | **Substrate (Equiv.)** | **Catalyst (Cat. Loading)** | **Solvent** | **Equiv. of 1** | **Additive** | **Yield of 3a ^{a}** | **e.r.^{b}** |
|---|---|---|---|---|---|---|---|
| 1 | Tetralin **2a** (1 equiv.) | **Fe-1** (15 mol%) | CH₃CN | 3 | N/A | 50% | 95:5 |
| 2 | Tetralin **2a** (5 equiv.) | **Fe-1** (15 mol%) | CH₃CN | 1 | N/A | 53% | 98:2 |
| 3 | Tetralin **2a** (8 equiv.) | **Fe-1** (15 mol%) | CH₃CN | 1 | N/A | 60% | 98:2 |
| 4 | Tetralin **2a** (8 equiv.) | **Fe-1** (15 mol%) | CH₂Cl₂ | 1 | N/A | 32% | 99:1 |
| 5 | Tetralin **2a** (8 equiv.) | **Fe-1** (15 mol%) | THF | 1 | N/A | 11% | 96:4 |
| 6 | Tetralin **2a** (8 equiv.) | **Fe-1** (15 mol%) | HFIP | 1 | N/A | 26% | 95:5 |
| 7 | Tetralin **2a** (8 equiv.) | **Fe-2** (15 mol%) | CH₃CN | 1 | N/A | 76% | 50:50 |
| 8 | Tetralin **2a** (8 equiv.) | **Fe-1** (15 mol%) | CH₃CN | 1 | Ba(OTf)₂ (30 mol%) | 60% | 50:50 |
| 9^{c} | 6-methoxytetralin (1 equiv.) | **Mn(Cl₈PC)Cl** (10 mol%) | C₆H₆ | 2 | AgSbF₆ (10 mol%) | 58% | 50:50 |

| | | | | | | | |
|---|---|---|---|---|---|---|---|
| ^{a}Isolated yield calculated based on the ratio of conversion to product **3a:** the amount of **2a;** the endure yield of the reaction is remaining starting material **2a.** ^{b}Enantiomeric ratio (e.r.) determined by chiral HPLC analysis.^{c}Data obtained from literature without the usage of co-catalyst template **T2h** (Nat. Chem. 2018, 10, 583-591); product is not **3a.** | | | | | | | |

Two control experiments were conducted to study the effect of host-guest interactions between 18-crown-6 substituents and diammonium templates for asymmetric catalysis (**Table 2,** entry 7-8). Firstly, the addition of a stronger binding Ba(OTf)₂ additives to the **Fe-1-T2h/1** catalytic system gave C-H aminated product **3a** with higher product yield but in a non-stereoselective manner. Secondly, replacing **Fe-1** with non-18-crown-6 substituted **Fe-2** resulted in non-stereoselective C-H aminated product of **3a.** Both results show that the host-guest interactions between 18-crown-6 substituents of **Fe-1** and diammonium templates are involved in enantioselectivity catalysis.

The amination of benzylic C-H bond substrates with the **Fe-1-T2h/1** catalytic system is shown in **Scheme 2** and the results are summarized in **Table 3.** Firstly, the treatment of *para*-substituted ethyl benzenes 2b-f (8 equiv.) with the Fe-1 (15 mol%)/T2h (30 mol%)/1 (1 equiv.) catalytic system in CH₃CN at 25°C gave C-H aminated products 3b-f with 55-70% yields and 92:8 to 96:4 e.r. (**Table 3,** entry 2-6). This **Fe-1/T2h/1** method gave a higher product yield for substrates containing electron-donating groups (**Table 3,** entry 6, 2f) and tolerates other organic functionalities (**Table 3,** entry 2-5, 2b-e) with similar results as tetralin 2a). The Fe-1/T2h/1 methodology was performed at room temperature and gave C-H aminated products at a relatively high level of enantioselectivity. In contrast, existing asymmetric C-H amination protocols with Rh₂(COOR)₄ as catalysts typically needs a reaction temperature of -10 to -35°C to give a similar level of enantioselectivities. 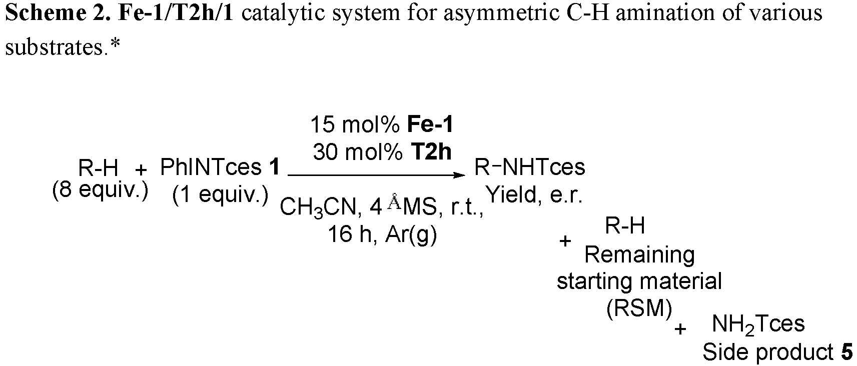 * Reaction condition: **1** (0.25 mmol), **2a-l** (2 mmol), **Fe-1** (15 mol%), Template co-catalyst **T2h** (30 mol%), CH₃CN (2 mL), 4A̅ molecular sieve (100 mg), under argon.

**Table 3. Results of Fe-1/T2h/1 catalytic system for asymmetric C-H amination of various substrate.**

| **Entry** | **Substrate** | **Product** | **Yield of 3a³** | **e.r.^{b}** |
|---|---|---|---|---|
| **1** | 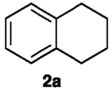 | 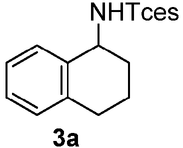 | 60% | 98:2 |
| 2 | 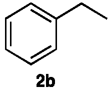 | 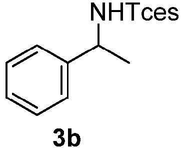 | 56% | 92:8 |
| 3 | 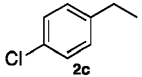 | 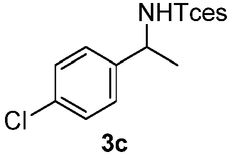 | 55% | 95:5 |
| 4 | 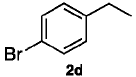 | 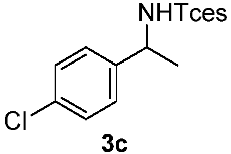 | 56% | 96:4 |
| 5 | 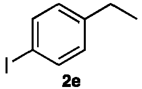 | 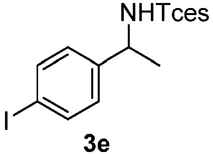 | 60% | 93:7 |
| 6 | 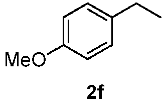 | 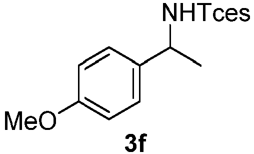 | 70% | 91:9 |
| 7 | 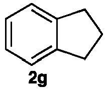 | 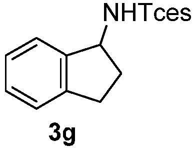 | 68% | 96:4 |
| 8 | 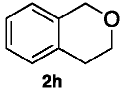 | 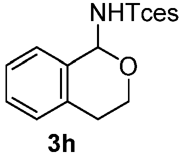 | 65% | 96:4 |
| 9 | 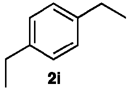 | 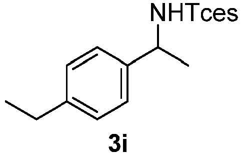 | 64% | 90:10 |
| 10 | 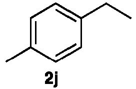 | 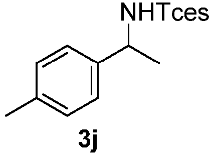 | 60% | 93:7 |
| 11 | 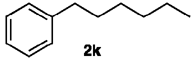 | 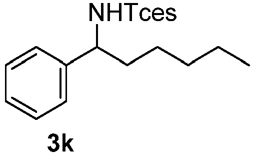 | 56% | 96:4 |
| 12 | 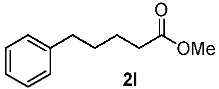 | 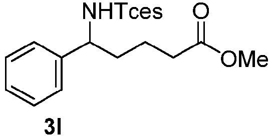 | 50% | 82:18 |
| 13 | 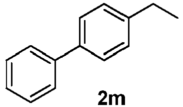 | 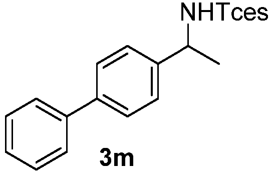 | 56% | 92:8 |
| 14 | 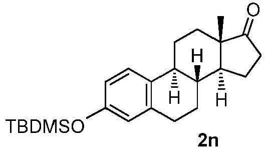 | 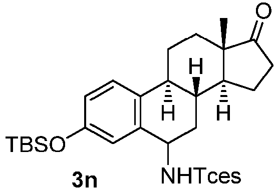 | 61% | 93:7 |
| 15 | 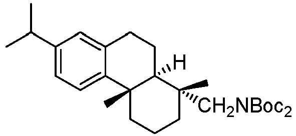 | 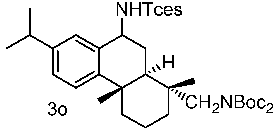 | 52% | 85:15 |
| 16 | 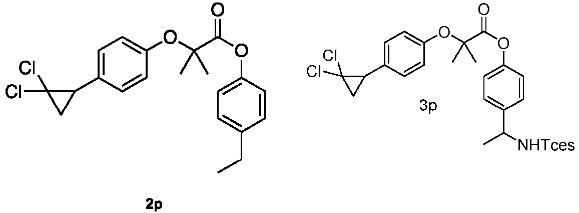 | | 50% | 92:8 |

| | | | | |
|---|---|---|---|---|
| ^{a}Isolated yield calculated based on the ratio of conversion to product **3a-3l**: the amount of **2a-2l**; the endure yield of the reaction is the remaining starting materials **2a-2l.** ^{b}Enantiomeric ratio (e.r.) determined by chiral HPLC analysis. | | | | |

The **Fe-1/T2h/1** catalytic system can also catalyze amination of other cyclic C-H bond substrates, such as indan **2g** and isochroman **2h,** with 65-68% yields and 96:4 e.r. (**Table 3**, entry 7-8, **3g-3h**). For substrates containing multiple C-H bonds, such as **2i-21,** the **Fe-1/T2h/1** catalytic system can selectively produce the benzylic C-H aminated products **3i-3p** with 50-64% yields and 82:18-96:4 e.r. (**Table 3**, entry 9-12). In contrast, literature on analogous C-H functionalization via metal-carbene intermediates reported a mixture of regio-isomers for a similar diversity of substrates.

### Mechanistic studies on C-H functionalization

The KIE for the amination of ethylbenzene 2b with PhINTces 1 was examined by conducting competitive amination of a mixture of equimolar 2b and 2b*-d₁₀* catalyzed by **Fe-1, Fe-1/T2h,** or Rh₂(esp)₂ (**Scheme 3**). The reactions with **Fe-1** and **Fe-1/T2h** as catalysts gave a *k_{H}*/*k_{D}* value of 2.6-3.0 (**Table 4**). This is larger than the *k_{H}*/*k_{D}* values obtained with Rh₂(esp)₂ as catalyst (*k_{H}*/*k_{D} =* 1.22, **Table 4**).

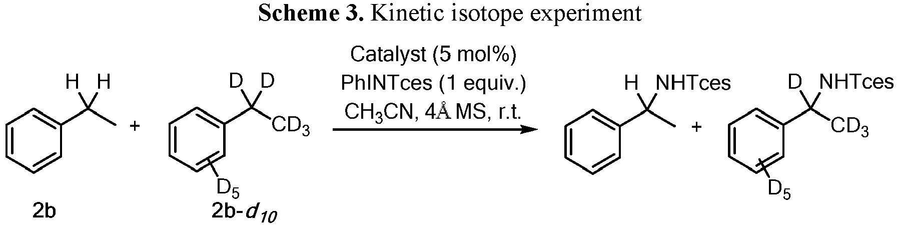

**Table 4. Results of kinetic isotope experiment**

| Entry | Catalyst | k_{H}/k_{D} |
|---|---|---|
| 1 | **Fe-1** | 2.56 |
| 2 | **Fe-1/(T2h)₂** | 3.0 |
| 3 | Rh₂(esp)₂ | 1.22 |

A tert-butyldimethylsilyl ether protected *(S)*-1-phenylethanol **4a** was synthesized according to literature procedure. This chiral tertiary C-H bond substrate was employed in the catalytic amination in CHCN₃ with **Fe-1 or** Rh₂(esp)₂ as catalysts at room temperature to give **4b** (**Scheme 4**). HPLC analysis of product **4b** obtained with **Fe-1** as catalysts showed the racemization of the chiral C-H bond center (**Table 5**). The chirality of **4b** could be retained with Rh₂(esp)₂ as catalysts (**Table 5**). This phenomenon is likely due to the generation of a short-lived organic radical during the catalytic cycle of **Fe-1,** which is not present in Rh₂(esp)₂.

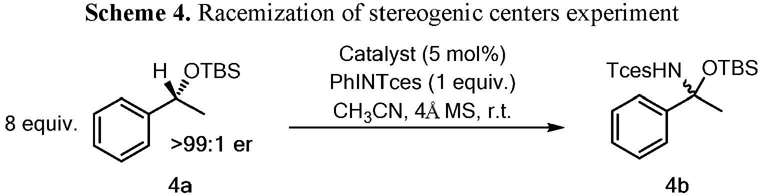

**Table 5. Results of racemization of stereogenic centers experiment**

| Entry | Catalyst | e.r. |
|---|---|---|
| 1 | **Fe-1** | 50:50 |
| 2 | Rh₂(esp)₂ | >99:1 |

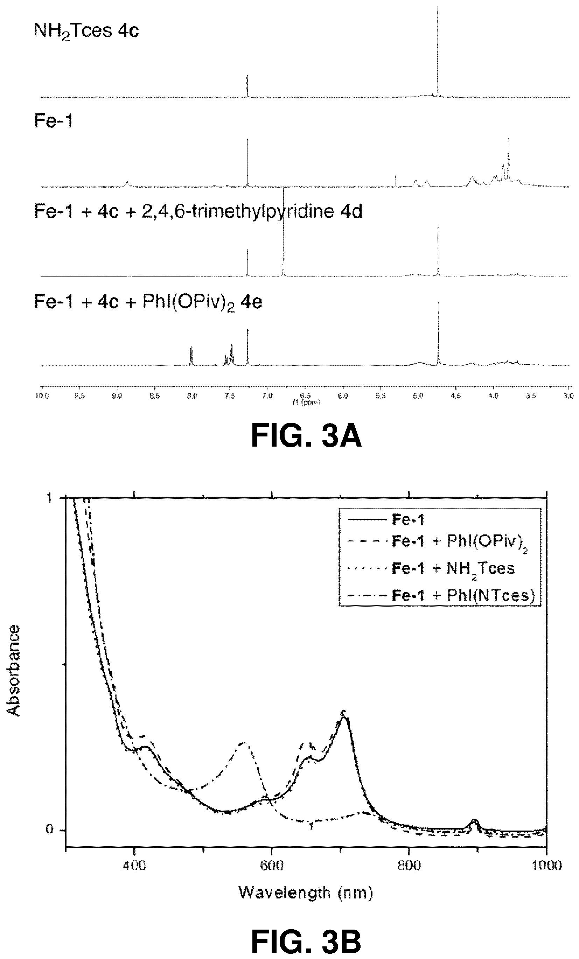

The NMR spectra of a reaction mixture of **Fe-1**/NH₂Tces **4c** with 2,4,6-trimethylpyridine **4d** or PhI(OPiv)₂ **4e** were examined (**Figure 3A**). The initial mixture of **Fe-1/4c** had no detectable paramagnetism. Following the addition of **4d** or **4e,** upfield chemical shifts and line broadening of the proton resonance of **Fe-1** in NMR spectra were observed. Since no residual magnetic moments were detected for **Fe-1/4c/4d** or **Fe-1/4c/4e,** it is likely that the **Fe-1(NTces)** species has a closed-shell character.

Reactions of **Fe-1** with **4c, 4d** or **1** were monitored by UV-vis (**Figure 3B**). Treatment of **Fe-1** in CH₃CN with **4c** and **4d** at room temperature resulted in an insignificant change in the UV-vis spectra. The addition of **1** to a CH₃CN solution of **Fe-1** resulted in prominent changes with isosbestic points. The Soret- and Q-band of **Fe-1** blue shifted gradually from 418 nm to 384 nm and from 704 nm to 561 nm, respectively.

### Mechanistic studies on the supramolecular aspects

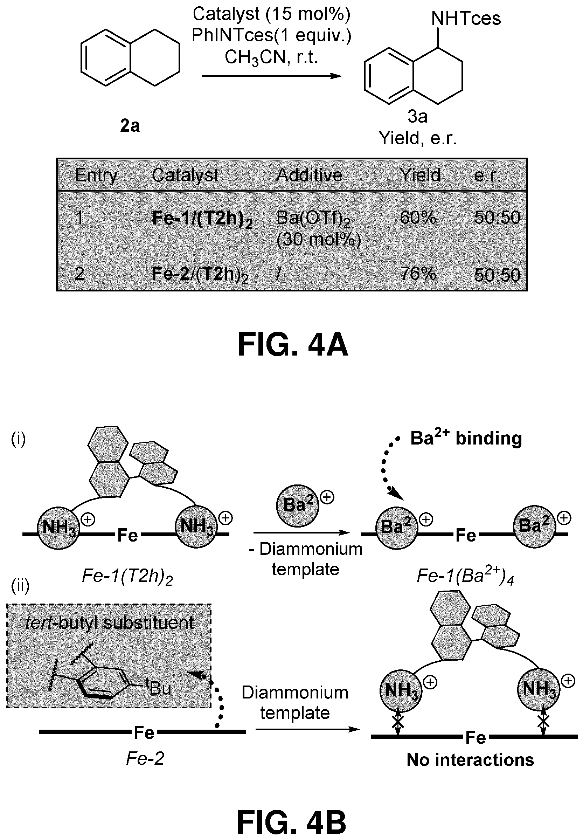

Control experiments were conducted for the catalytic C-H amination of **2a** with **1** as nitrogen source. These experiments employed a 1:2:4 ratio of **Fe-1:T2h**:Ba(OTf)₂ and a 1:2 ratio of **Fe-2:T2h** as the catalytic system (**Figure 4A**). Both reactions led to the formation of aminated product **3a** with a 50:50 e.r., accompanied by increased product yields. The rationale behind these non-enantioselective processes is attributed to two factors: (i) the exchange mechanism of barium cations with the ammonium templates, hence displacing the chiral supramolecular structure; and (ii) the absence of cation receptors upon substitution of the crown-ether group in the iron catalyst **Fe-1** with a tert-butyl substituted in **Fe-2** (**Figure 4B**).

The reactions between H₂(^{18-Crown-6}PC) and templates **T** (i.e., **T1, T2d, T2e, T2h** and **T2i)** were monitored by ¹H NMR spectroscopy (**Figures 5A and 5B**). A solution of H₂(^{18-Crown-6}PC) in CD₃CN was titrated with template **T2d** at room temperature, which resulted in a downfield shift of the 18-crown-6 signals (~3.4-4.5 ppm, **Figure 5A**). The shift in ¹H NMR signals stopped at equivalence greater than 2.0 (**Figure 5B****),** indicative of the **H₂(^{18-Crown-6}PC):T2d** = 1:2 ratio for the formation of the supramolecular system **H²(^{18-crown-6}PC)/T2d.** Similar phenomena were observed for the titrations of H₂(^{18-Crown-6}PC) with **T1, T2e, T2h** and **T2i,** respectively, under the same conditions. Templates **T1** and **T2h** in CD₃CN titrated with benzo-18-crown-6 also resulted in a downfield shift of 18-crown-6 signals (~3.4-4.5 ppm) and the change was halted at titrate equivalence greater than 2.0 (**Figure 5B**).

**Figure 5C** shows the ¹H NMR spectra for the reaction between the supramolecular system **H₂(^{18-Crown-6}PC)/T2h** and Ba(OTf)₂ (which has a stronger binding affinity than ammonium). The solution of **H²(^{18-Crown-6}PC)/T2h** in CD₃CN was titrated with Ba(OTf)₂, leading to: (1) upfield shift of the ¹H NMR signals of the N-H ammonium units, (2) further downfield shift of the ¹H NMR signals of the crown-ether units, and (3) clearance of the aromatic signals due to reduced interactions of the aromatic groups. The changes were insignificant at titrate equivalence greater than 4.0. The titration data for supramolecular system T1, T2d, T2e, T2h and T2i are shown in **Figure 5D****.**

The titration of **Fe-1** in CH₃CN with template **T1** or **T2d** at room temperature was monitored by UV-vis spectroscopy (**Figure 5E**). The addition of the templates led to an increase in absorbance at 300, 350 and 620 nm and a decrease in absorbance at 430 and 715 nm. The UV-vis spectra remain unchanged at an equivalence greater than 2.0. UV-vis spectra at varied temperatures (25-80°C) of **Fe-1/T1** and **Fe-1/T2d** in CH₃CN were also conducted with no observable changes. This demonstrates that temperature has insignificant effects on the overall supramolecular structure.

Regarding the equilibrium of the supramolecular structure, the titration data for binding between templates **T1/T2h** and crown-ether receptors (benzo-18-crown-6, H₂(^{18-Crown-6}PC) and **Fe-1** were analyzed using BindFit under the setting of Host: Guest = 1:2 (**Figure 6**). Binding constants were calculated based on the change in mole fraction (which depends on the shift in ¹H NMR signals). The Gibbs free energies are shown in **Table 6.** The log(K₁) and log(K₂) binding constants for the benzo-18-crown-6 and **T1/T2h** were calculated to be 3.65/3.41 and 2.39/2.01, respectively **(Table 6,** entry 1-2). The binding affinities (log(K₁)) and log(K₂)) for the self-assembly process between H₂(^{18-Crown-6}PC) or **Fe-1** and diammonium templates **T1/T2h** were found to be significantly larger (**Table 6,** entry 3-6, log(K1) = 4.49-5.09 and log(K2) = 4.28-5.90).

**Table 6. Binding constants between host catalyst and guest template.**

| **Entry** | **Host** | **Guest** | **log(K₁)** | **ΔG_{K1} (kJ/mol)^{c}** | **log(K₂)** | **ΔG_{K2} (kJ/mol)^{c}** |
|---|---|---|---|---|---|---|
| 1 | **T1** | Benzo-18-Crown-6 | 3.65 | -20.81 | 2.39 | -13.63 |
| 2 | **T2h** | Benzo-18-Crown-6 | 3.41 | -19.44 | 2.01 | -11.46 |
| 3 | **Fe-1** | T1 | 4.70 | -26.80 | 4.28 | -24.40 |
| 4 | H₂(^{1**8**Crown6}PC) | T1 | 5.09 | -29.02 | 4.89 | -27.88 |
| 5 | **Fe-1** | T2h | 4.99 | -28.45 | 5.90 | -33.64 |
| 6 | H₂(^{18Crown6}PC) | T2h | 4.49 | -25.60 | 5.52 | -31.48 |

| | | | | | | |
|---|---|---|---|---|---|---|
| ^{a}Determined by ¹H-NMR titrations. ^{b}Determined by UV-vis titrations. ^{c}Calculated from ΔG = -RTlnK, where T = 298K. | | | | | | |

Compared to reported host-guest catalytic systems, the log(K) for the **Fe-1/T2h**₂ and **H₂(^{18Crown6}PC)/T2h₂** are 1.2-1.9 times higher than the binding of monoammonium/18-crown-6 (logKₐ = 3.56), hydrogen bonding between two carboxylic acid groups (logKₐ = 3.51), and anion/cyclodextrin binding (logKₐ = 3.06). The use of diammonium templates has led to a significant improvement in binding constants compared to literature templates. The significant binding affinity of the diammonium templates may contribute to the selective asymmetric catalysis as the release of chiral diammonium templates would lead to non-stereoselective pathways.

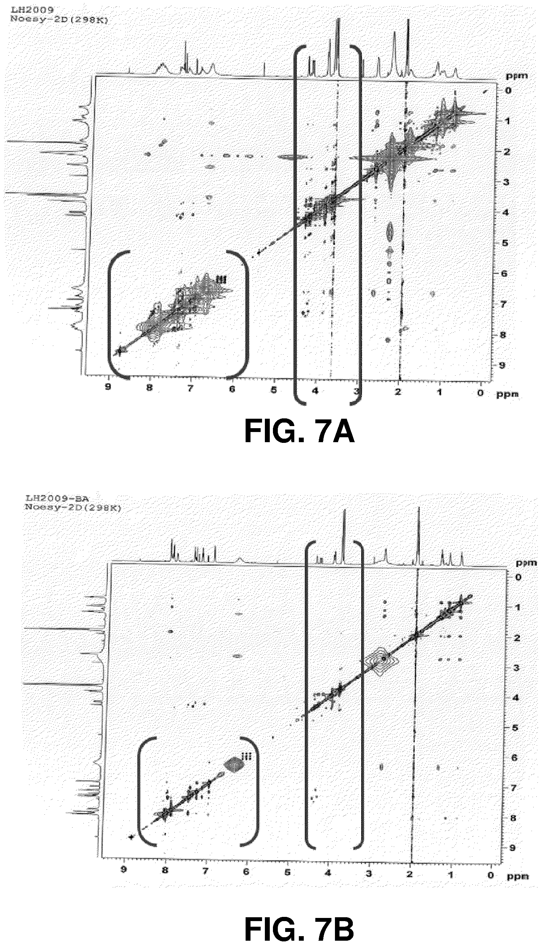

In view of the non-covalent interactions within the supramolecular catalysts, 2D-NMR spectroscopies (¹H-¹H NOSEY and ¹H DOSY) were applied to examine the titrates of H₂(^{18-Crown-6}PC)/T1₂ and H₂(^{18-Crown-6}PC)/T2h₂. The ¹H-¹H NOSEY spectra for H₂(^{18-Crown-6}PC)/T1₂ and H₂(^{18-Crown-6}PC)/T2h₂ in CD₃CN showed strong interactions between the ¹H resonances of the crown-ether component of H₂(^{18-Crown-6}PC) and the alkyl/aryl signals of T1/T2h at the aromatic regions (**Figure 7A**). The addition of Ba(OTf)₂ to the CD₃CN solutions of H₂(^{18-Crown-6}PC)/T1₂ and H₂(^{18-Crown-6}PC)/T2h₂ led to significantly reduced ¹H-¹H NOSEY NMR signals at both aromatic/crown-ether regions (**Figure 7B**).

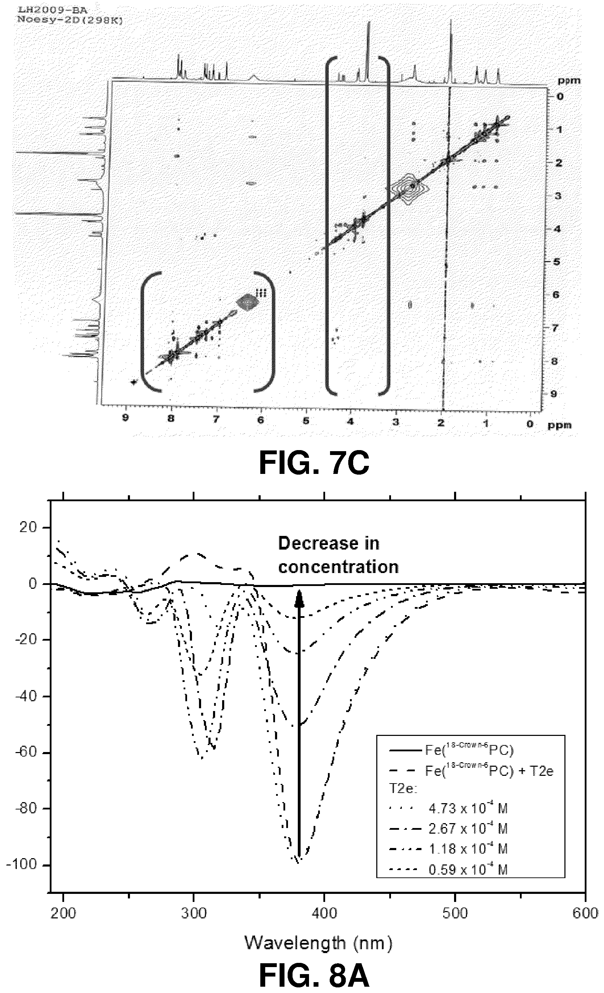

¹H DOSY NMR of **H₂(^{18-Crown-6}PC)/T2h₂** and **Fe-1/T2h₂** were conducted in CD₃CN at 298 K, which showed the same diffusion coefficient of 1.097 × 10⁻⁵ cm²/s (**Figure 7C**). The radius of the reaction cavity was calculated to be 5.79 Å by Stoke-Einstein equation.

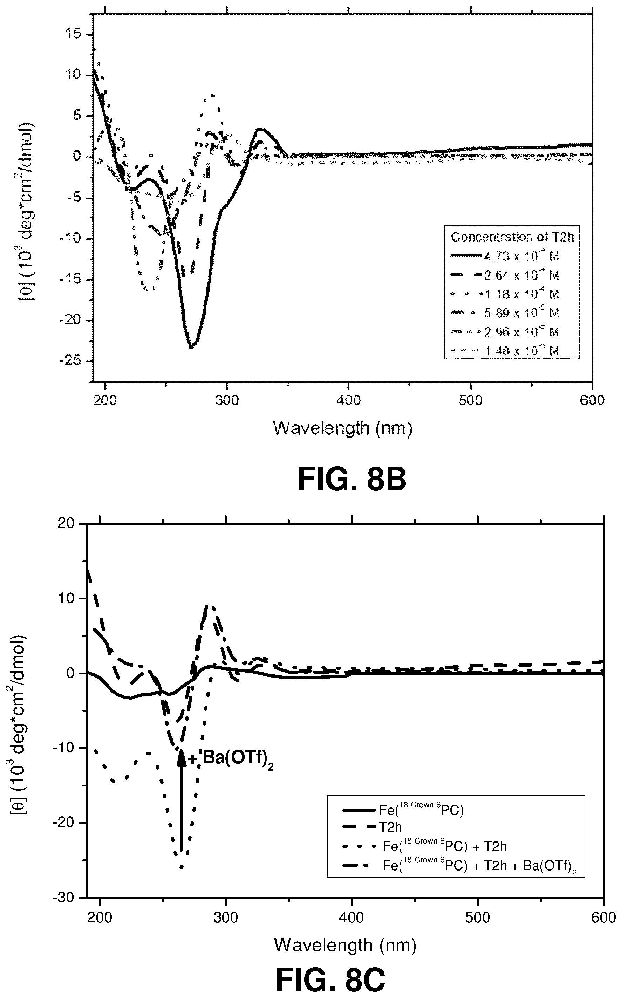

CD spectra of **T2e** and **T2h** were examined at variable concentrations (**Figures 8A** and **8B**). For spectra **of T2e,** the signals at 300 nm and 385 nm gradually increased with the increase of **T2e** concentration, without significant changes in the shape of the signal (**Figure 8A**). The addition of **Fe-1** (1 equiv.) to the solution **of T2e** resulted in the formation of a new peak at 300 nm while the peak of λₘₐₓ remained unchanged. Further addition of Ba(OTf)₂ to the solution of **Fe-1/T2e** gave a spectrum that resembled the initial spectra of **T2e** (without **Fe-1**). Similarly, CD spectra of **T2h** (**Figure 8B**) were recorded at the same concentrations as that of **T2e.** By gradually diluting the solution of **T2h,** the recorded peak of λₘₐₓ shifted within the range of ± 50 nm. Addition of **Fe-1** and **Ba(OTf)₂** to the diluted solution of **T2h** led to an insignificant change to the peak of maximum Δε and resembled the initial spectrum of **T2h,** respectively (**Figure 8C**). The differences in CD spectra recorded for **T2e** and **T2h** are likely due to the more pre-organized hydrogen bonding **T2e** scaffold, which leads to a more rigid secondary structure. The flexibility of template **T2h** may contribute to the highly enantioselective aminations.

### Synthesis of 4,5-dibromobenzo-18-crown-6

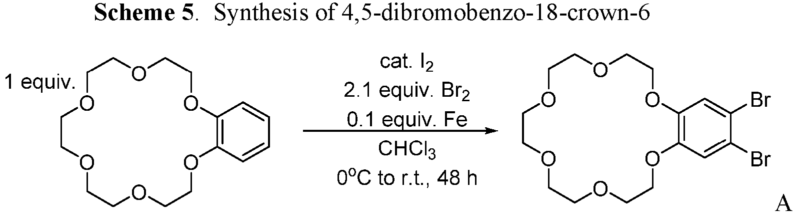

500 mL round-bottom flask was charged with a stir bar, 10 g (32 mmol) of benzo-18-crown-6, 0.25 g of iron powder, and dry dichloromethane. A catalytic amount of solid iodine was added at 0 °C, followed by the slow addition of 3.5 mL (68.5 mmol) of bromine over a period of 2 hours. The reaction mixture was stirred for 48 hours at room temperature and then filtered into another 500 mL round-bottom flask. The resulting orange-red mixture was quenched with 100 mL of 10% aqueous sodium hydroxide. The organic layer was separated, washed with deionized water (3 x 200 mL), dried over magnesium sulfate, and concentrated under vacuum to yield a yellow-brown oil. The oil was extracted with dry hexane (3 x 200 mL). The combine hexane extracts were concentrated and cooled to 0°C, yielding 8 g of a colorless solid with an isolated yield of 53%.

Appearance: White solid. ¹H NMR: (400 MHz, CDCl₃) δ 6.92 (s, 2H), 4.20-3.65 (m, 20H). HRMS: (ESI-TOF MS ES+) m/z calculated for [C₁₆H₂₂Br₂O₆ + Na]⁺: 490.96808, found 490.96810.

### Synthesis of 4,5-dicyanobenzo-18-crown-6

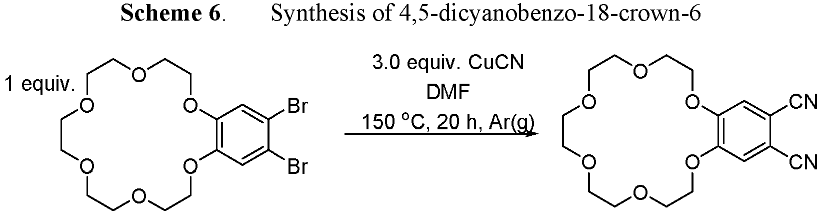

Under an argon atmosphere, a 500 mL round-bottom flask was equipped with a stir bar and charged with 2.52 g (5.25 mmol) of 4,5-dibromobenzo-18-crown-6, 1.43 g of copper(I) cyanide (16 mmol), and dry DMF (25 mL). The reaction mixture was heated to 150°C for 20 hours. Subsequently, the reaction was cooled to room temperature and quenched with 100 mL of 25% aqueous ammonia. The crude product was extracted with chloroform (3 x 200 mL). The combined organic fractions were then washed with deionized water (3 x 200 mL), dried over magnesium sulfate, and concentrated under vacuum to obtain a brown oil. This oil was subjected to purification via column chromatography (using neutral alumina 230 mesh as the stationary phase and CHCl₃ as the eluent), resulting in 1.21 g of white solid with a yield of 63%.

Appearance: White solid. ¹H NMR: (300 MHz, CDCl₃) δ 7.14 (s, 2H), 4.26-3.65 (m, 20H). HRMS: (ESI-TOF MS ES+) m/z calculated for [C₁₈H₂₂N₂O₆ + Na]⁺: 362.1478, found 362.1477.

### Synthesis of Fe(^{18-Crown-6}PC)

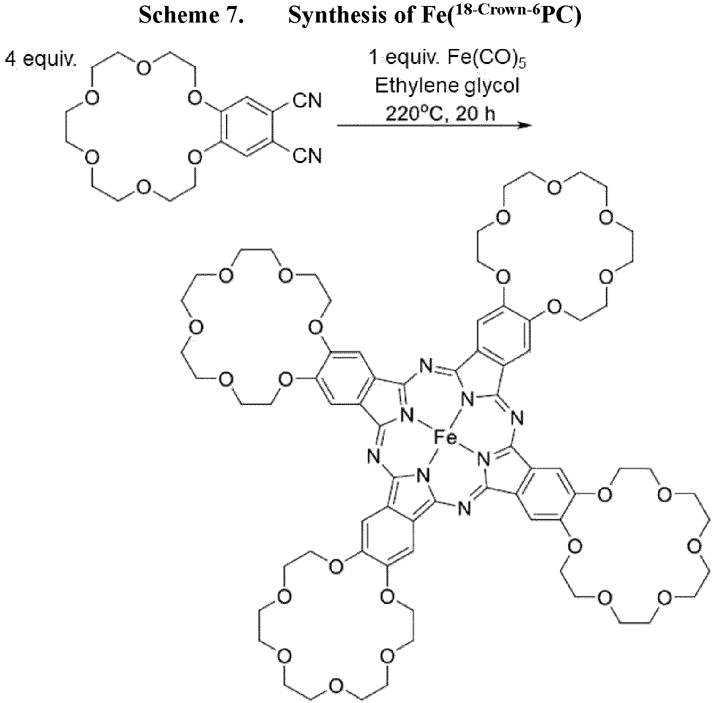

A 250 mL round bottom flask was charged with a stir bar, 2.9 g (8 mmol) of 4,5-dicyanobenzo-18-crown-6, 0.39 g of iron pentacarbonyl (2 mmol), and 100 mL ethylene glycol. The reaction mixture was stirred for 20 hours at 220 °C. After cooling to room temperature, the reaction mixture was filtered, and the ethylene glycol was removed under vacuum. The residue was purified by column chromatography on basic Al₂O₃ with CHCl₃ as eluent, to give the product as a dark green solid with an isolated yield of 53%.

Appearance: Dark green solid. MS: (MALDI-TOF MS+) m/z calculated for [C₇₂H₈₈FeN₈O₂₄]⁺: 1504.5261, found 1504.5442. UV: (UV-vis) λₘₐₓ (ACN)/nm 227 (ε/dm³ mol⁻¹ cm⁻¹ 29367347), 292 (21836735), 349 (1584694), 417 (10239796), 653 (8469389), 705.7 (12540816).

### Synthesis of N,N'-([1,1'-binaphthalene]-2,2'-diyl)bis(6-bromohexanamide)

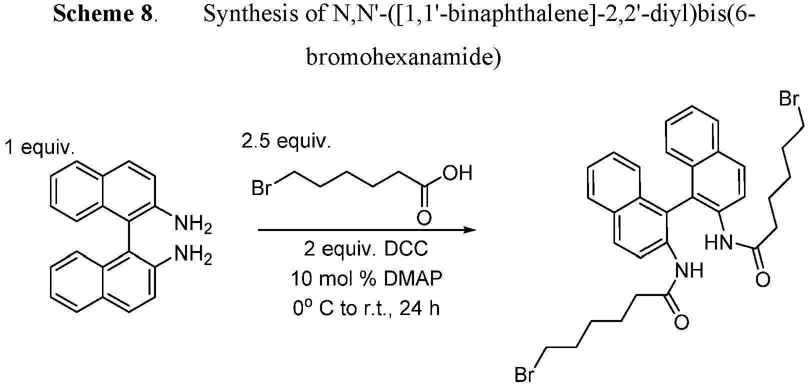

In a 250 mL round-bottom flask equipped with a stir bar, 2 g (7.04 mmol) of (R)-(+)-1,1'-Binphthyl-2,2'diamine, 2.93 g of 6-bromohexanoic acid (15 mmol), 85 mg of 4-dimethylaminopyridine (0.70 mmol), and dry dichloromethane (100 mL) were combined. Under an argon atmosphere, 3.71 g of solid N,N'-dicyclohexylcarbodiimide (18 mmol) was added in one portion at 0°C. The reaction mixture was stirred for 24 hours at room temperature and then filtered. The solid residue was washed with dichloromethane, and the resulting colorless solution was concentrated under vacuum. The resulting yellow solids were purified using column chromatography, yielding 3.22 g of white solid with an isolated yield of 72%.

Appearance: White solid. ¹H NMR: (300 MHz, CDCl₃) δ 8.10 (d, *J =* 9 Hz, 2H), 7.92 (d, *J =* 6 Hz, 2H), 7.83 (d, *J =* 9 Hz, 2H), 7.35 (t, *J =* 9 Hz, 2H), 7.13 (m, 2H), 6.96 (d, *J* = 9 Hz, 2H), 2.96 (t, *J =* 6 Hz, 4H), 1.88 (m, 4H), 1.16 (m, 8H), 0.91 (m, 4H). ¹³C NMR: (95 MHz, CDCl₃) δ 179.91., 141.3, 133.5, 127.5, 127.2, 126.9, 125.7, 121.7, 117.7, 115.8, 38.6, 33.8, 27.2, 25.0. HRMS: (ESI-TOF MS ES+) m/z calculated for [C₃₂H₃₄Br₂N₂O₂]⁺: 636.0987, found 636.0980.

### Synthesis of N,N'-([1,1'-binaphthalene]-2,2'-diyl)bis(6-azidohexanamide)

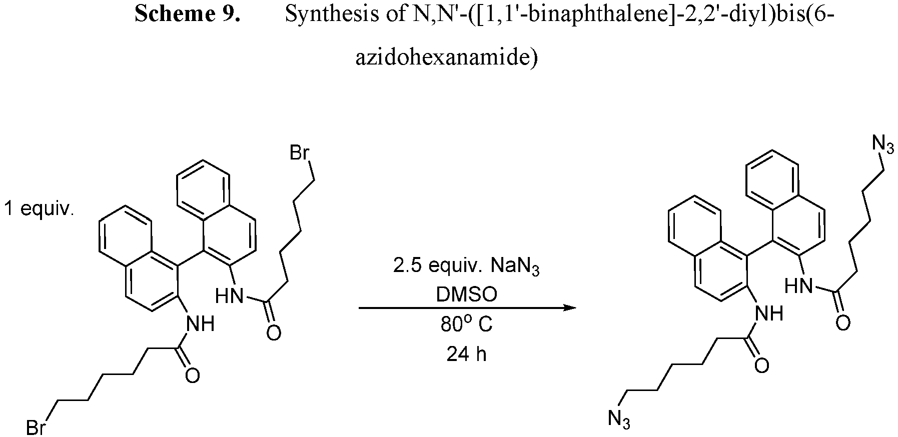

In a 100 mL round-bottom flask equipped with a stir bar, 1 g (1.57 mmol) of N,N'-([1,1'-binaphthalene]-2,2'-diyl)bis(6-bromohexanamide), 110 mg of sodium azide (1.65 mmol), and dimethyl sulfoxide (25 mL) were combined. The reaction mixture was stirred for 24 hours at 80°C. After cooling to room temperature, the organic phase was extracted with ethyl acetate (3 x 25 mL), and the combined organic phases were washed with distilled water, dried over magnesium sulfate, and concentrated under vacuum. This process yielded 750 mg of white solid with an isolated yield of 85%.

Appearance: White solid. ¹H NMR: (400 MHz, CDCl₃) δ 8.20 (d, *J =* 8 Hz, 2H), 8.03 (d, *J =* 8 Hz, 2H), 7.95 (d, *J =* 2 Hz, 2H), 7.46 (t, *J =* 4, 8 Hz, 2H), 7.26 (t, *J =* 4, 8 Hz, 2H), 7.07 (d, *J =* 4 Hz, 2H), 3.07 (t, *J =* 4, 8 Hz, 4H), 1.99 (t, *J =* 4, 8 Hz, 4H), 1.33 (m, 4H), 1.23 (m, 4H), 1.01 (m, 4H). ¹³C NMR: (126 MHz, CDCl₃) δ 179.7, 141.4, 133.3, 127.6, 127.2, 126.9, 125.5, 121.6, 117.7, 115.8, 50.1, 34.2, 27.2, 25.0. HRMS: (ESI-TOF MS ES+) m/z calculated for [C₃₂H₃₄N₈O₂]⁺: 562.2805, found 562.2812.

### Synthesis of N,N'-([1,1'-binaphthalene]-2,2'-diyl)bis(6-aminohexanamide)

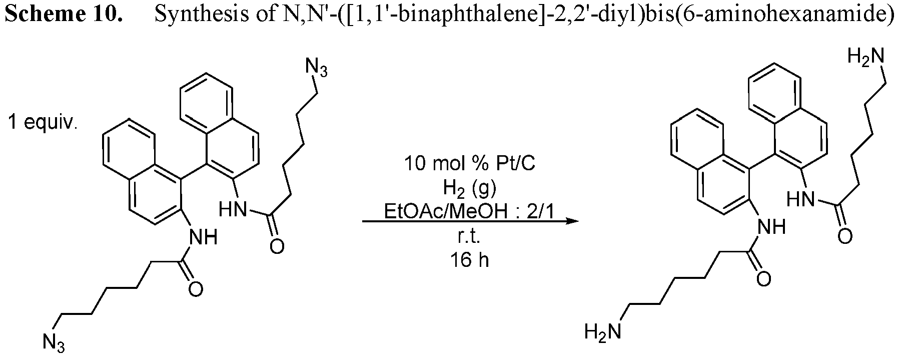

A 100 mL three-necked round-bottom flask was equipped with a stir bar and charged with 500 mg (0.617 mmol) of N,N'-([1,1'-binaphthalene]-2,2'-diyl)bis(6-azidohexanamide), along with 40 mL of ethyl acetate and 20 mL of methanol. The solution was degassed with argon for 20 minutes. To the reaction mixture, 50 mg of Pt/C was added under an argon atmosphere. The reaction mixture was then degassed with hydrogen and sealed with a hydrogen balloon. After stirring for 16 hours, the mixture was filtered through a short pad of celite and concentrated under reduced pressure. Flash column chromatography, using hexane:ethyl acetate as the eluent, was employed to purify the reaction mixture, yielding 332 mg of white solid as the product (yield = 71%).

¹H NMR: (400 MHz, CDCl₃): δ 8.31 (m, 2H), 8.06 (d, *J =* 4 Hz, 2H), 7.96 (d, *J=* 4 Hz, 2H), 7.47 (t, *J =* 4 Hz, 2H), 7.28 (m, 2H), 7.08 (d, *J =* 8 Hz, 2H), 2.53 (t, *J =* 4 Hz, 4H), 2.02 (t, *J =* 4 Hz, 4H), 1.28 (m, 8H), 1.03 (m, 4H). ¹³C NMR: (126 MHz, CDCl₃) δ 179.5, 141.3, 133.2, 127.7, 127.2, 127.0, 125.5, 121.3, 117.7, 115.5, 42.5, 34.3, 27.0, 25.2. HRMS: (ESI-TOF MS ES+) m/z calculated for [C₃₂H₄₀N₄O₂]⁺: 512.3151, found 512.3142.

### Synthesis of N-(2'-(6-(l4-azanyl)hexanamido)-[1,1'-binaphthalen]-2-yl)-6-aminohexanamide ditetrafluoroborate

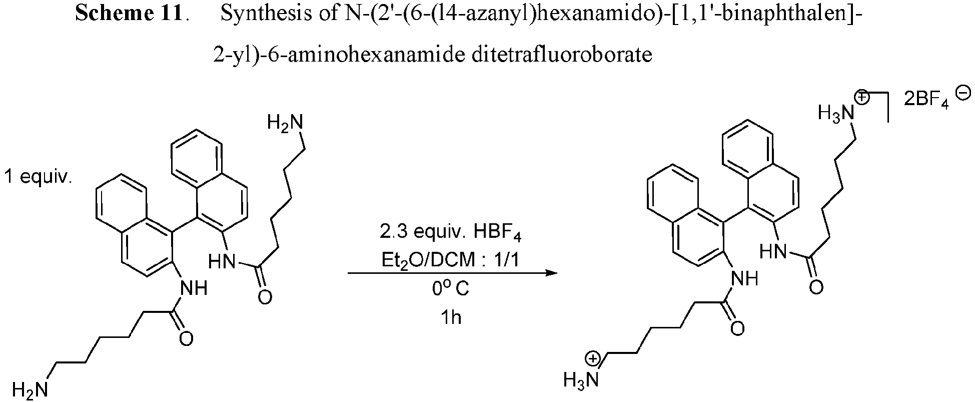

A 20 mL round-bottom flask was loaded with a stir bar, 100 mg (0.195 mmol) of N,N'-([1,1'-binaphthalene]-2,2'-diyl)bis(6-aminohexanamide), 4 mL of diethyl ether, and 4 mL of dry dichloromethane. The solution was cooled and vigorously stirred at 0°C. A solution of HBF4 (0.505 mmol) in diethyl ether was added dropwise. After 30 minutes, the mixture was concentrated to approximately 1 mL and then filtered. The resulting off-white solid was washed with diethyl ether, yielding 55 mg of product (a 41% yield).

¹H NMR: (400 MHz, CDCl₃) δ 8.12 (d, *J =* 16 Hz, 2H), 8.04 (d, *J =* 8 Hz, 2H). 7.95 (d, *J =* 8 Hz, 2H), 7.52 (t, *J =* 8 Hz, 2H), 7.32 (t, *J =* 8 Hz, 2H), 7.02 (d, *J =* 16 Hz, 2H), 6.42 (m, 2H), 2.00 (m, *J =* 8 Hz, 8H), 1.39 (quin, *J =* 8 Hz, 4H), 1.21 (m, 4H), 0.92 (m, 4H). ¹³C NMR: (126 MHz, CDCl₃) δ 179.8, 141.3, 133.2, 127.7, 127.2, 127.0, 125.5, 121.5, 117.5, 115.5, 42.3, 34.3, 27.0, 25.2. HRMS: (ESI-TOF MS ES+) m/z calculated for [C₃₂H₄₀N₄O₂]⁺: 512.3151, found 512.3156.

### Synthesis of ethyl 2-benzamidobenzoate

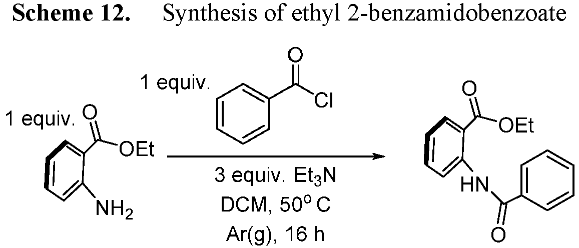

A 500 mL two-necked round bottom flask was charged with a stir bar, 10 g (60.6 mmol) of ethyl 2-aminobenzoate, and dry dichloromethane (200 mL). Under argon atmosphere, 25.8 mL of triethyl amine (182 mmol) was added at 0 °C in one potion, followed by a dropwise addition of 7.01 mL benzoyl chloride (60.6 mmol). The reaction mixture was refluxed for 16 hours at 50 °C. The reaction mixture was concentrated to around 100 mL and the white solids were collected with filtration and washed with diethyl ether yielding 13.37 g of product (yield = 82%).

¹H NMR: (400 MHz, CDCl₃) δ 8.29 (s, 1H), 8.04 (t, *J* = 8, 16 Hz, 1H), 7.38 (m, 6H), 6.70 (m, 2H), 4.39 (q, *J =* 8, 16 Hz, 2H), 1.45 (t, *J =* 8 Hz, 3H). ¹³C NMR: (126 MHz, CDCl₃) δ 168.76, 151.03, 138.97, 134.56, 131.69, 128.73, 127.19, 114.90, 111.72, 110.56, 60.33, 14.43. HRMS: (ESI-TOF MS ES+) m/z calculated for [C₁₆H₁₅NO₃]⁺: 269.1052, found 269.1058.

### Synthesis of ethyl 2-(N-(6-bromohexyl)benzamido)benzoate

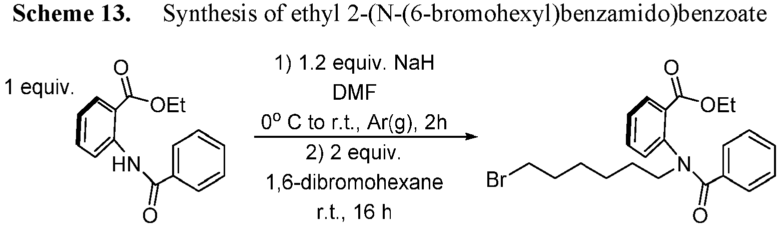

A 100 mL round-bottom flask was equipped with a stir bar and charged with 2 g (7.44 mmol) of ethyl 2-benzamidobenzoate, along with dry dimethylformamide. Under an argon atmosphere, 715 mg of 50% sodium hydride (14.88 mmol) was added all at once at 0°C. The reaction mixture was stirred for 2 hours at room temperature. A solution of 1,6-dibromohexane (14.88 mmol) in dry dimethylformamide (20 mL) was slowly added to the reaction mixture at 0°C. The resulting yellow mixture was stirred overnight (16 hours). The reaction was quenched by pouring the mixture into a 1L beaker filled with ice-water. The organic phase was then extracted with ethyl acetate (200 mL x 3), and the combined organic phases were washed with deionized water (200 mL x 5). The solution was subsequently dried over magnesium sulfate and concentrated under reduced pressure. The product was obtained as a pale-yellow oil through flash column chromatography, using hexane: ethyl acetate as the eluent (Yield = 1.35 g, 42%).

¹H NMR: (400 MHz, CDCl₃) δ 7.78 (dd, *J =* 8 Hz, 1H), 7.40 (t, *J =* 8 Hz, 1H), 7.24 (m, 3H), 7.13 (m, 4H), 4.32 (q, *J =* 8 Hz, 2H), 3.38 (t, *J =* 8 Hz, 2H), 1.84 (m, 3H), 1.69 (m, 3H), 1.46 (m, 4H), 1.36 (t, *J =* 8 Hz, 3H). ¹³C NMR: (126 MHz, CDCl₃) δ 170.02, 165.64, 143.33, 136.20, 132.65, 131.66, 130.54, 129.41, 128.28, 127.56, 127.24, 61.54, 50.82, 33.83, 32.64, 27.88, 27.42, 26.24. HRMS: (ESI-TOF MS ES+) m/z calculated for [C₂₂H₂₅BrNO₃]⁺: 430.1018, found 430.1026.

### Synthesis of ethyl 2-(N-(6-azidohexyl)benzamido)benzoate

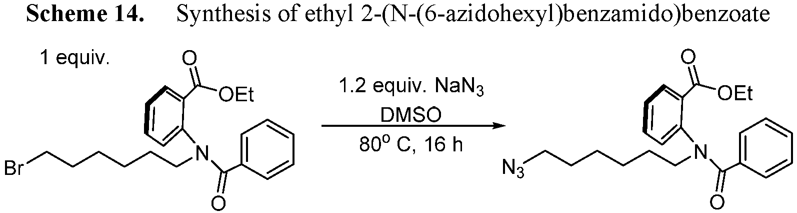

In a 100 mL round-bottom flask equipped with a stir bar, 500 mg (1.15 mmol) of ethyl 2-(N-(6-bromohexyl)benzamido)benzoate, 90 mg of sodium azide (1.39 mmol), and dimethyl sulfoxide (25 mL) were combined. The reaction mixture was stirred for 16 hours at 80°C. After cooling to room temperature, the organic phase was extracted with ethyl acetate (3 x 25 mL), and the combined organic phases were washed with distilled water, dried over magnesium sulfate, and concentrated under vacuum. This process yielded 408 mg of white solid with an isolated yield of 90%.

¹H NMR: (400 MHz, CDCl₃) δ 7.85 (d, *J =* 8 Hz, 1H), 7.49 (t, *J =* 8 Hz, 1H), 7.30 (m, 4H), 7.21 (m, 1H), 7.15 (t, *J* = 8, 16 Hz, 2H), 3.51 (q, *J =* 8 Hz, 3H), 3.29 (t, *J =* 8Hz, 2H), 1.72 (m, 2H), 1.61 (m, 4H), 1.42 (t, 4H), 1.20 (t, *J =* 8 Hz, 3H). ¹³C NMR: (126 MHz, CDCl₃) δ 171.35, 168.86, 143.00, 136.31, 132.60, 130.79, 129.15, 127.77, 127.41, 127.30, 61.41, 56.92, 50.96, 32.09, 28.38, 26.12, 25.10, 14.04. HRMS: (ESI-TOF MS ES+) m/z calculated for [C₂₂H₂₆N₄O₃]⁺: 394.2005, found 394.2011.

### Synthesis of 2-(N-(6-azidohexyl)benzamido)benzoic acid

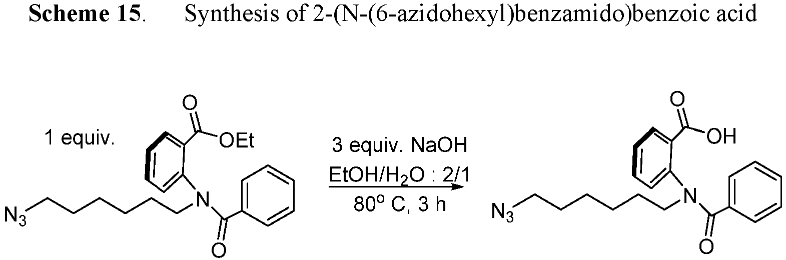

A 100 mL round-bottom flask was equipped with a stir bar and charged with 400 mg (1.02 mmol) of ethyl 2-(N-(6-azidohexyl)benzamido)benzoate, 121 mg of sodium hydroxide (3.06 mmol), 30 mL of ethanol, and 15 mL of deionized water. The reaction mixture was refluxed at 80 °C for three hours. Upon cooling to room temperature, 1M HCl was added to the reaction mixture to neutralize the solution to pH = 6. The organic phase was extracted with ethyl acetate (3 x 25 mL), and the combined organic phases were washed with distilled water, dried over sodium sulfate, and concentrated under vacuum to yield 268 mg of colorless oil with an isolated yield of 72%.

¹H NMR: (400 MHz, CD₃OD) δ 7.85 (d, *J =* 8 Hz, 1H), 7.48 (t, *J =* 8 Hz, 1H), 7.29 (m, 4H), 7.17 (m, 3H), 3.28 (t, *J =* 8 Hz, 2H), 1.71 (m, 2H), 1.59 (m, 3H), 1.41 (m, 5H). ¹³C NMR: (126 MHz, CD₃OD) δ 171.46, 168.91, 143.02, 136.31, 132.63, 131.55, 130.79, 129.17, 128.74, 127.80, 127.43, 127.33, 50.98, 50.53, 28.40, 26.89, 26.30, 26.14. HRMS: (ESI-TOF MS ES+) m/z calculated for [C₂₀H₂₁N₄O₃ + Na]⁺: 388.1511, found 388.1514.

### Synthesis of N,N'-(((((1S)-cyclohexane-1,2- diyl)bis(azanediyl))bis(carbonyl))bis(2,1-phenylene))bis(N-(6-

### azidohexyl)benzamide)

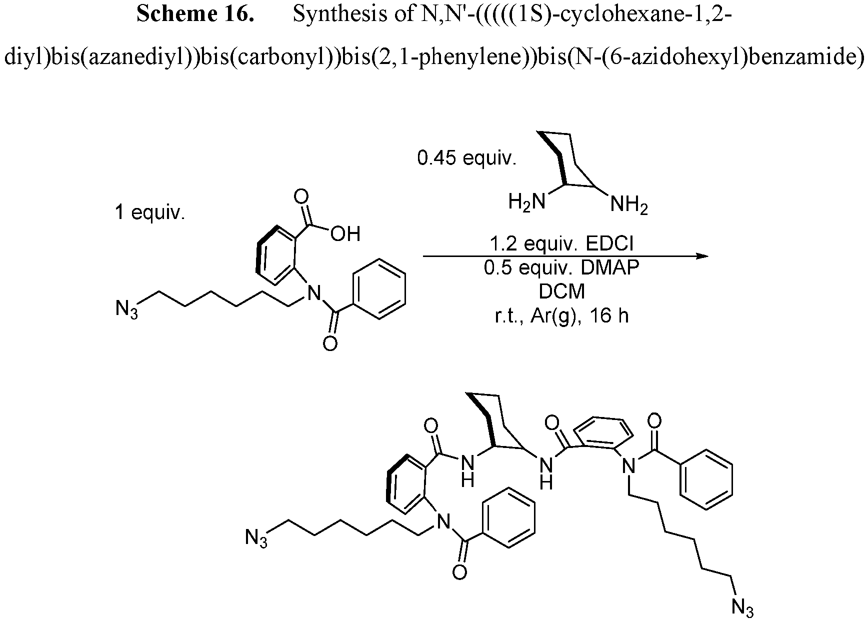

A 100 mL round bottom flask was charged with a stir bar, 1 g (2.73 mmol) of 2-(N-(6-azidohexyl)benzamido)benzoic acid, 140 mg of (1S,2S)-(-)-1,2-Diaminocyclohexane (1.23 mmol), 166 mg of 4-dimethylaminopyridine and dry dichloromethane (50 mL). Under argon atmosphere, 0.5 g of 1-Ethyl-3-(3-dimethylaminopropyl)carbodiimide (3.28 mmol) was added in one potion. The reaction mixture was stirred for 16 hours at room temperature. The solution was evaporated and the product was purified using column chromatography to give 1.77 g of pale yellow oil with an isolated yield of 80%.

¹H NMR: (400 MHz, CDCl₃) δ 7.54 (s, 1H), 7.45 (m, 5H), 7.35 (m, 2H), 7.29 (s, 1H), 7.16 (d, *J =* 8 Hz, 2H), 7.09 (t, *J =* 4, 8 Hz, 4H), 6.99 (m, 1H), 6.84 (d, *J =* 8 Hz, 2 H), 6.74 (d, *J* = 4 Hz, 0.5H), 6.33 (d, *J* = 8 Hz, 0.5H), 4.36 (q, *J* = 4, 8 Hz, 1H), 4.25 (m, 1H), 4.05 (brs, 1H), 3.90 (m, 2H), 3.32 (brs, 1H), 3.25 (m, 6H), 2.21 (m, 1H), 2.02 (m, 1H), 1.84 (m, 2H), 1.70 (m, 2H), 1.56 (m, 6H), 1.37 (m, 12H). ¹³C NMR: (126 MHz, CDCl₃) δ 170.2, 167.6, 142.2, 141.4, 136.4, 135.9, 134.5, 132.9, 131.3, 130.9, 129.5, 128.7, 128.5, 127.6, 127.5, 126.9, 126.0, 54.4, 45.6, 42.0, 33.5, 32.3, 31.6, 29.7, 27.4, 26.8, 26.0, 25.0, 24.8, 22.7, 17.0, 14.1. HRMS: (ESI-TOF MS ES+) m/z calculated for [C₄₆H₅₄N₁₀O₄]⁺: 810.4330, found 810.4336.

### Synthesis of N,N'-(((((1R)-cyclohexane-1,2-diyl)bis(azanediyl))bis(carbonyl))bis(2,1-phenylene))bis(N-(6-aminohexyl)benzamide)

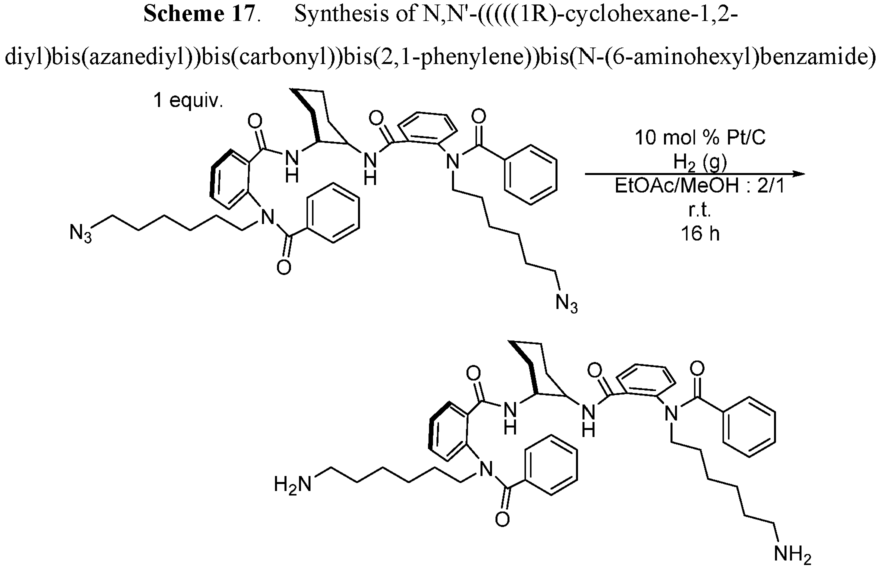

A 100 mL three-necked round-bottom flask was equipped with a stir bar and charged with 500 mg (0.617 mmol) of N,N'-(((((1 S)-cyclohexane-1,2-diyl)bis(azanediyl))bis(carbonyl))bis(2,1-phenylene))bis(N-(6-azidohexyl)benzamide), along with 40 mL of ethyl acetate and 20 mL of methanol. The solution was degassed with argon for 20 minutes. To the reaction mixture, 50 mg of Pt/C was added under an argon atmosphere. The reaction mixture was then degassed with hydrogen and sealed with a hydrogen balloon. After stirring for 16 hours, the mixture was filtered through a short pad of celite and concentrated under reduced pressure. Flash column chromatography, using hexane:ethyl acetate as the eluent, was employed to purify the reaction mixture, yielding 332 mg of white solidas the product(yield = 71%).

¹H NMR: (400 MHz, CDCl₃) δ 7.45 (m, 8H), 7.12 (m, 8H), 6.84 (m, 2H), 4.39 (m, 2H), 4.22 (t, *J =* 9 Hz, 2H), 3.91 (m, 4H), 3.56 (s, 4H), 3.19 (m, 2H), 2.61 (t, *J =* 6 Hz, 4H), 2.30 (t, *J =* 9 Hz, 4H), 1.88 (m, 12H), 1.67 (m, 4H). ¹³C NMR: (126 MHz, CDCl₃) δ 170.4, 167.2, 142.1, 141.6, 136.8, 136.0, 134.6, 133.0, 131.5, 130.9, 129.6, 128.9, 128.4, 127.5, 127.3, 126.8, 126.1, 45.8, 42.5, 42.3, 33.6, 32.1, 32.0, 29.6, 27.3, 26.9, 25.9, 24.9, 24.5, 22.5, 17.3, 14.5. HRMS: (ESI-TOF MS ES+) m/z calculated for [C₄₆H₅₈N₆O₄]⁺: 758.4520, found 758.4526.

### Synthesis of 6, 6'-((((((1R)-cyclohexane-1,2-diyl)bis(azanediyl))bis(carbonyl))bis(2,1-phenylene))bis(benzoylazanediyl))bis(hexan-1-aminium) ditetrafluoroborate

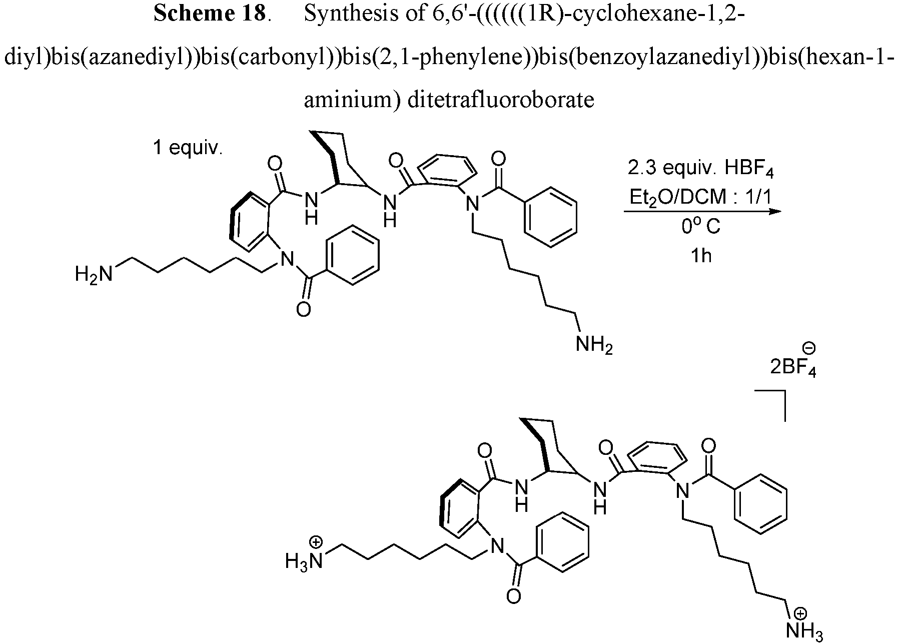

A 20 mL round-bottom flask was loaded with a stir bar, 200 mg (0.263 mmol) of N,N'-(((((1R)-cyclohexane-1,2-diyl)bis(azanediyl))bis(carbonyl))bis(2,1-phenylene))bis(N-(6-aminohexyl)benzamide), 4 mL of diethyl ether, and 4 mL of dry dichloromethane. The solution was cooled and vigorously stirred at 0°C. A solution of HBF4 (0.605 mmol) in diethyl ether was added dropwise. After 30 minutes, the mixture was concentrated to approximately 1 mL and then filtered. The resulting off-white solid was washed with diethyl ether, yielding 61 mg of product (a 25% yield).

¹H NMR: (400 MHz, CDCl₃) δ 7.17 (m, 6H), 7.00 (m, 2H), 6.87 (m, 2H), 6.59 (m, 2H), 6.04 (brs, 2H), 3.99 (m, 1H), 3.84 (m, 1H), 3.72 (m, 1H), 3.60 (m, 1H), 2.91 (m, 2H), 2.62 (m, 4H), 2.33 (t, J = 4 Hz, 2H), 2.04 (m, 2H), 1.76 (m, 2H), 1.51 (m, 2H), 1.13 (m, 16H). HRMS: (ESI-TOF MS ES+) m/z calculated for [C₄₆H₆₀N₆O₄]⁺: 760.4676, found 760.4670.

### Self-assembly of Fe-1 or H₂(^{18Crown6}PC) /T supramolecular catalysts

A 25 mL Teflon-capped Schlenk tube was charged with the following components: complex Fe-1 or H₂(^{18Crown6}PC) (15 mg, 0.01 mmol), template T (0.01 to 0.02 mmol, 0 to 2 equiv.), and CD₃CN (3 mL). The tube was placed on a stir plate and stirred vigorously at room temperature under an argon atmosphere for 30 minutes.

¹H NMR, CD, and UV-Vis spectra were recorded to determine the binding constant and the secondary supramolecular structure.

### Self-assembly of Fe-1/T supramolecular catalysts

A 25 mL Teflon-capped Schleck tube was charged with the following: complex Fe-1 (0.0375 mmol, 15 mol%), chiral template T2h (0.075 mmol, 30 mol%), substrate (0.25 mmol, 1 equiv.), CH₃CN (2 mL, 0.03125 M), 4Å MS (100 mg), and a magnetic stir bar. The tube was placed on a stir plate and stirred vigorously at room temperature under argon atmosphere. PhINTces (0.25 mmol, 1 equiv.) was added at one portion and the reaction turns purple within a minute. Notably, the reaction has to be conducted under argon atmosphere or would result in significant decrease in yield. After 16 hours, the solution was concentrated and the product was purified over flash column chromatography. The isolated organic product were characterized by ¹H NMR, ¹³C NMR, ESI-MS and chiral HPLC.

### Evaluation of the enantiomeric effect of the chiral templates

A 25 mL Teflon-capped Schleck tube was charged with the following components: complex Fe-1 (0.0375 mmol, 15 mol%), chiral template T2h (0.075 mmol, 30 mol%), substrate (0.25 mmol, 1 equiv.), CH₃CN (2 mL, 0.03125 M), and 4Å MS (100 mg), along with a magnetic stir bar. The tube was placed on a stir plate and vigorously stirred at room temperature under an argon atmosphere. PhINTces (0.75 mmol, 3 equiv.) was added all at once, and the reaction turned purple within a minute. Importantly, the reaction had to be conducted under an argon atmosphere, as not doing so resulted in a significant decrease in yield. After 16 hours, the solution was concentrated, and the product was purified via flash column chromatography.

The isolated organic products were characterized using ¹H NMR, ¹³C NMR, ESI-MS, and chiral HPLC. The data presented in **Table 1** and **Figure 2** represent the isolated yield and the enantiomeric values determined through HPLC.

### Optimization of condition for amination of tetralin

A 25 mL Teflon-capped Schleck tube was charged with the following components: complex Fe-1 (0.0375 mmol, 15 mol%), chiral template T2h (0.075 mmol, 30 mol%), tetralin **2a** (0.25 to 2 mmol, 1 to 8 equiv.), THF or HFIP or CH₂Cl₂ or CH₃CN (2 mL, 0.03125 M), and 4Å MS (100 mg), along with a magnetic stir bar. The tube was placed on a stir plate and vigorously stirred at room temperature under an argon atmosphere. PhINTces (0.25 mmol, 1 equiv.) was added all at once, and the reaction turned purple within a minute. Importantly, the reaction had to be conducted under an argon atmosphere, as not doing so resulted in a significant decrease in yield. After 16 hours, the solution was concentrated, and the product was purified via flash column chromatography.

The isolated organic products were characterized using ¹H NMR, ¹³C NMR, ESI-MS, and chiral HPLC. The data presented in Table 2 represent the isolated yield and the enantiomeric values determined through HPLC.

### Control experiments for amination of tetralin

A 25 mL Teflon-capped Schleck tube was charged with the following components: complex Fe-1 (0.0375 mmol, 15 mol%), chiral template T2h (0.075 mmol, 30 mol%), tetralin **2a** (0.25 to 2 mmol, 1 to 8 equiv.), THF or HFIP or CH₂Cl₂ or CH₃CN (2 mL, 0.03125 M), and 4Å MS (100 mg), along with a magnetic stir bar. The tube was placed on a stir plate and vigorously stirred at room temperature under an argon atmosphere. PhINTces (0.25 mmol, 1 equiv.) was added all at once, and the reaction turned purple within a minute. Importantly, the reaction had to be conducted under an argon atmosphere, as not doing so resulted in a significant decrease in yield. After 16 hours, the solution was concentrated, and the product was purified via flash column chromatography. The isolated organic products were characterized using ¹H NMR, ¹³C NMR, ESI-MS, and chiral HPLC. The data presented in Table 2 represent the isolated yield and the enantiomeric values determined through HPLC.

### Evaluation of functional group compatibility and substrate scope in amination of benzylic sp³ C-H Bonds

A 25 mL Teflon-capped Schleck tube was charged with the following components: complex Fe-1 (0.0375 mmol, 15 mol%), chiral template T1-T2h (0.075 mmol, 30 mol%), substrate (2 mmol, 8 equiv.), CH₃CN (2 mL, 0.03125 M), and 4Å MS (100 mg), along with a magnetic stir bar. The tube was placed on a stir plate and vigorously stirred at room temperature under an argon atmosphere. PhINTces (0.25 mmol, 1 equiv.) was added all at once, and the reaction turned purple within a minute. Importantly, the reaction had to be conducted under an argon atmosphere, as not doing so resulted in a significant decrease in yield. After 16 hours, the solution was concentrated, and the product was purified via flash column chromatography.

The isolated organic products were characterized using ¹H NMR, ¹³C NMR, ESI-MS, and chiral HPLC. The data presented in Table 3 represent the isolated yield and the enantiomeric values determined through HPLC.

### Conclusion

Secondary coordination spheres as synthetic catalysts are rare. Exemplary supramolecular (host catalyst-guest template) catalytic systems with **Fe-1** as host catalyst and chiral diammonium templates as guest templates were prepared and used for asymmetric C-H amination of a variety of substrates. The **Fe-1/T2h** catalytic system is applicable to benzylic C-H bond substrates with a high level of enantioselectivity and moderate product yield. The asymmetric catalysis may be attributed to the strong binding affinity of diammonium templates for the 18-crown-6 receptors, which stabilizes the overall supramolecular structure. This synthetic methodology is applicable to C-H functionalization and amination reactions of a variety of substrates.

### References

M. M. Heravi, et al., Tetrahedron Asymmetric 2015, 26, 405-495.
N. B. Johnson, et al., Acc. Chem. Res. 2007, 40, 1291-1299.
A. Doyle, et al., Chem. Rev. 2007, 107, 5713-5743.
S.-H. Xiang, et al., Nat. Commun. 2020, 11, 3786.
K. Liao, et al., Nature 2016, 533, 230-234.
K. Liao, et al., Nat. Chem. 2018, 10, 1048-1055.
R. Zhang, et al., Chem. Commun. 1999, 1791-1792.
J.-C. Wang, et al., Chem. Commun. 2012, 48, 4299-4301.
K.-H. Chan, et al., Angew. Chem. Int. Ed. 2014, 126, 3026-3031.
K. Lang, et al., J. Am. Chem. Soc. 2020, 142, 20902-20911.
Y. Wang, et al., J. Am. Chem. Soc. 2018, 140, 4792-4796.
Y. Yasutomi, et al., J. Am. Chem. Soc. 2010, 132, 4510-4511.
Y. Nishioka, et al., Angew. Chem. Int. Ed. 2013, 52, 1732-1742.
T. P. Yoon, et al., Science 2003, 299, 1691-1693.
R. Breslow, et al., J. Am. Chem. Soc. 1997, 119, 4535-4536.
S. Das, et al., Science 2006, 312, 1941-1943.
B. Xu, et al., Chem. Sci. 2014, 5, 1442-1448.
M.-L. Li, et al., Science 2019, 336, 990-994.
L. Vicens, et al., Angew. Chem. Int. Ed. 2022, 61, e202114932.
X. Gu, et al., Chem. Commun. 2014, 50, 7870-7873.
J. Wei, et al., Chem. Sci. 2020, 11, 684-693.
C. Zang, et al., Angew. Chem, Int. Ed. 2016, 55, 10253-10257.
J. Wei, et al., Angew. Chem. Int. Ed. 2020, 59, 16561-16571.
J. A. McIntosh, et al., Angew. Chem. Int. Ed. 2013, 52, 9309-9312.
C. K. Prier, et al., Nat. Chem.2017, 9, 629-634.
Y. Yang, et al., Nat. Chem. 2019, 11, 987-993.
Z. J. Jia, et al., J. Am. Chem. Soc. 2020, 142, 23, 10279-10283.
K.-P. Shing, et al., Angew. Chem. Int. Ed. 2018, 57, 37, 11947-11951.
Y. Liu, et al., Chem. Eur. J. 2010, 16, 34, 10494-10501.
C. Damiano, et al., Eur. J. Inorg. Chem. 2019, 41, 4412-4420.
J. R. Clark, et al., Nat. Chem. 2018, 10, 583-591.
S. M. Paradine, et al., J. Am. Chem. Soc. 2012, 134, 4, 2036-2039.
J. Kweon, et al., Angew. Chem. Int. Ed., 2021, 60, 2909-2914.
J. Kweon, et al., J. Am. Chem. Soc. 2022, 144, 1872-1880.
T. You, et al., Chem. Commun 2021, 57, 10711-10714.
H. Hayshi, et al., Eur. J. Org. Chem. 2020, 8, 909-916.
N. Kobayashi, et al., J. Am. Chem. Soc. 1987, 109, 24, 7433-7441.
J. Obiriai, et al., J. Porphyrin. Phthalocyanin. 2003, 7, 507-520.
B. M. Trost, et al., Chem. Rev. 2003, 103, 8, 1921-2944.
C. M. Choi, et al., Chem. Cent. J. 2012, 6, 84.
C. Liang, et al., Angew. Chem. Int. Ed. 2006, 45, 4641-4644.
C. Liang, et al., J. Am. Chem. Soc. 2008, 130, 343-350.
M. P. Doyle, et al., Chem. Rev. 2010, 110, 704-724.
E. J. Corey, et al., J. Am. Chem. Soc 1972, 94, 6190-6191.
F. Ogliaro, et al., J. Am. Chem. Soc. 2000, 122, 8977-8989.
M. E. Harvey, et al., J. Am. Chem. Soc. 2011, 133, 17207-17216.
K. P. Kornecki, et al., Chem. Eur. J. 2011, 17, 5827-2832.
C. G. Espino, et al., J. Am. Chem. Soc. 2004, 126, 47, 15378-15379.
D. N. Zalantan, et al., J. Am. Chem. Soc. 2008, 130, 29, 9220-9221.
J. L. Roizen, et al., Acc. Chem. Res. 2012, 45, 6, 911-922.
P. Thordarson, Chem. Soc. Rev. 2011, 40, 1305-1323.
R. M. Izatt, et al., Science 1978, 199, 994-996.
D. Chen, et al., Sci. Adv.2016, 2, DOI:10.1126/sciadv.1501240.
E. E. Sideris, et al., Pharm. Research. 1992, 9, 1568-1574.
C. C. Miller, Proc. R. Soc. Lond.1928, 106, 740*.*
R. C. Cammarota, et al., J. Am. Chem. Soc. 2022, 144, 1881-1898.

Unless defined otherwise, all technical and scientific terms used herein have the same meanings as commonly understood by one of skill in the art to which the disclosed invention belongs. Publications cited herein and the materials for which they are cited are specifically incorporated by reference. Further, unless otherwise indicated, use of the expression "wt%" refers to "wt/wt%."

Those skilled in the art will recognize, or be able to ascertain using no more than routine experimentation, many equivalents to the specific embodiments of the invention described herein. Such equivalents are intended to be encompassed by the following claims.

The disclosure is illustrated by the following numbered embodiments:
1. A host catalyst having a structure of: 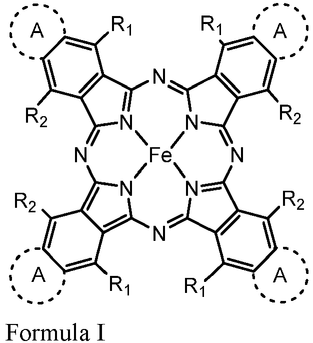 wherein:
   (i) each occurrence of A, together with the carbon atoms to which it is attached, forms a crown ether;
   (ii) each occurrence of R₁ and R₂ are independently hydrogen, a substituted or unsubstituted alkyl, a substituted or unsubstituted alkenyl, a substituted or unsubstituted alkynyl, a substituted or unsubstituted aryl, a substituted or unsubstituted polyaryl, a substituted or unsubstituted heteroaryl, a substituted or unsubstituted heteropolyaryl, a substituted or unsubstituted cyclic group, a substituted or unsubstituted heterocyclic, a substituted or unsubstituted aralkyl, a halide, a hydroxyl, an alkoxyl, an amino, an amido, a carbonyl, a nitro, a nitrile, or a thiol; and
   (iii) the substituents are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.
2. The host catalyst of embodiment **1,** wherein each occurrence of A, together with the carbon atoms to which it is attached, forms a 12-crown-4 ether, a 15-crown-5-ether, an 18-crown-6 ether, a dibenzo-18-crown-6 ether, a 24-crown-8 ether, or an aza-crown ether.
3. The host catalyst of embodiment **1,** wherein the host catalyst has a structure of: 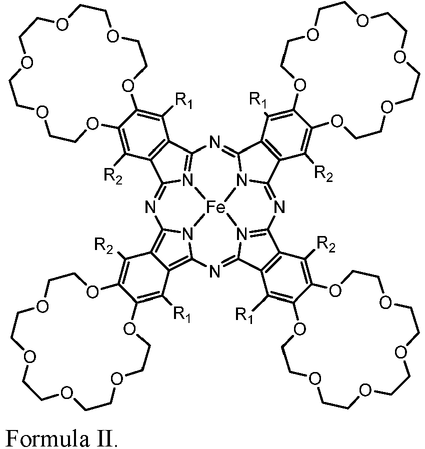
4. The host catalyst of embodiment 1, wherein each occurrence of R₁ and R₂ are independently hydrogen, a substituted or unsubstituted alkyl, a substituted or unsubstituted alkenyl, a substituted or unsubstituted alkynyl, a hydroxyl, an alkoxyl, or a carbonyl, optionally wherein each occurrence of R₁ and R₂ are hydrogen.
5. A guest template having a structure of: 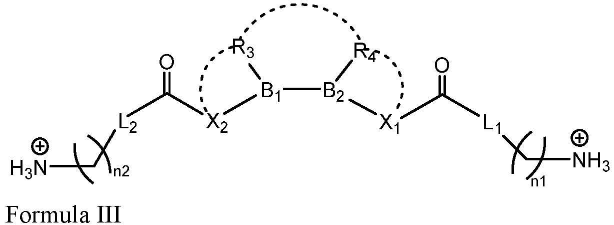 wherein:
   (i) B₁ and B₂ are independently absent, a carbon atom, a substituted or unsubstituted aryl, a substituted or unsubstituted polyaryl, a substituted or unsubstituted heteroaryl, a substituted or unsubstituted heteropolyaryl, or a substituted or unsubstituted heterocyclic, optionally B₁ and B₂ are independently a carbon atom, a substituted or unsubstituted aryl, or a substituted or unsubstituted polyaryl;
   (ii) R₃ and R₄ are independently absent, hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, optionally R₃ and R₄ are independently absent, hydrogen, a substituted or unsubstituted alkyl, a substituted or unsubstituted aryl, or a substituted or unsubstituted aralkyl;
   (iii) ------ is absent or a bond (single, double, or triple);
   (iv) X₁ and X₂ are independently absent, oxygen atom, or NR₅, and R₅ is absent, hydrogen, or a substituted or unsubstituted alkyl;
   (v) L₁ and L₂ are independently absent or 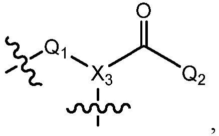
      X₃ is a nitrogen atom or CR₆, R₆ is hydrogen or a substituted or unsubstituted alkyl,
      Q₁ and Q₂ are independently a substituted or unsubstituted alkyl, a substituted or unsubstituted alkenyl, or a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, a substituted or unsubstituted cycloalkyl, a substituted or unsubstituted cycloalkenyl, or a substituted or unsubstituted cycloalkynyl;
   (vi) n₁ and n₂ are independently an integer from 0 to 20; and
   (vii) the substituents are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.
6. The guest template of embodiment 5, wherein:
   (a) 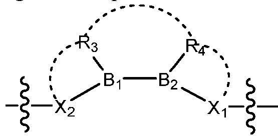 is 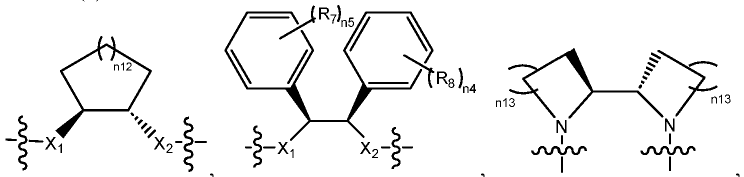 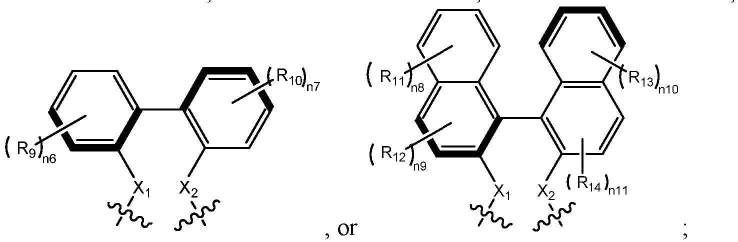
      X₁ and X₂ are independently an oxygen atom or NR₅, R₅ is absent or hydrogen;
      n₄ and n₅ are independently an integer from 0 to 5;
      n₆, n₇, n₈, and n₁₀ are independently an integer from 0 to 4;
      n₉ and n₁₁ are independently an integer from 0 to 2;
      n₁₂-n₁₄ are independently an integer from 1 to 6; and
      R₇-R₁₄ are independently hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, or
   (b) L₁ and L₂ are independently 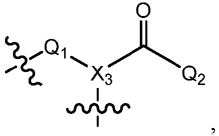 wherein X₃ is a nitrogen atom, and wherein Q₁ and Q₂ are independently a substituted or unsubstituted aryl, a substituted or unsubstituted polyaryl, a substituted or unsubstituted cycloalkyl, a substituted or unsubstituted cycloalkenyl, or a substituted or unsubstituted cycloalkynyl, optionally Q₁ and Q₂ are unsubstituted phenyl, or
   (c) a combination thereof.
7. A catalytic system comprising:
   a host catalyst; and
   a guest template,
   wherein the host catalyst has the structure of: 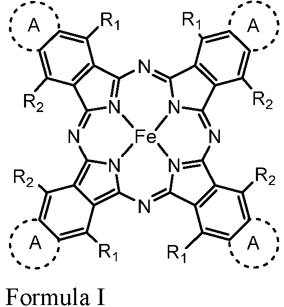 wherein:
      (i) each occurrence of A, together with the carbon atoms to which it is attached, forms a crown ether;
      (ii) each occurrence of R₁ and R₂ are independently hydrogen, a substituted or unsubstituted alkyl, a substituted or unsubstituted alkenyl, a substituted or unsubstituted alkynyl, a substituted or unsubstituted aryl, a substituted or unsubstituted polyaryl, a substituted or unsubstituted heteroaryl, a substituted or unsubstituted heteropolyaryl, a substituted or unsubstituted cyclic group, a substituted or unsubstituted heterocyclic, a substituted or unsubstituted aralkyl, a halide, a hydroxyl, an alkoxyl, an amino, an amido, a carbonyl, a nitro, a nitrile, or a thiol; and
   wherein the guest template has the structure of: 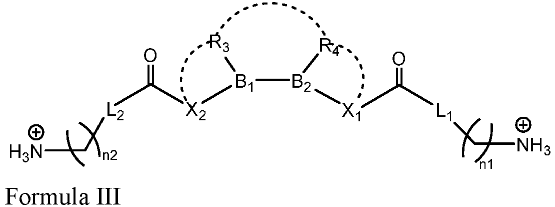
   wherein:
      (i) B₁ and B₂ are independently absent, a carbon atom, a substituted or unsubstituted aryl, a substituted or unsubstituted polyaryl, a substituted or unsubstituted heteroaryl, a substituted or unsubstituted heteropolyaryl, or a substituted or unsubstituted heterocyclic;
      (ii) R₃ and R₄ are independently absent, hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic;
      (iii) ------ is absent or a bond (single, double, or triple);
      (iv) X₁ and X₂ are independently absent, oxygen atom, or NR₅, and R₅ is absent, hydrogen, or a substituted or unsubstituted alkyl;
      (v) L₁ and L₂ are independently absent or 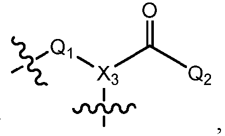
         X₃ is a nitrogen atom or CR₆, R₆ is hydrogen or a substituted or unsubstituted alkyl,
         Q₁ and Q₂ are independently a substituted or unsubstituted alkyl, a substituted or unsubstituted alkenyl, or a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, a substituted or unsubstituted cycloalkyl, a substituted or unsubstituted cycloalkenyl, or a substituted or unsubstituted cycloalkynyl;
      (vi) n₁ and n₂ are independently an integer from 0 to 20; and
   wherein the substituents are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.
8. The catalytic system of embodiment 7, wherein:
   (a) the host catalyst and the guest template have a molar ratio ranging from 1:10 to 1:1, from 1:5 to 1:1, such as 1:2; or
   (b) the host catalyst and the guest template are non-covalently bound to each other, optionally via the crown ether of the host catalyst and the ammonium group of the guest template, and optionally wherein the binding between the host catalyst and the guest template has a log(K) of at least 4.0, such as in a range from 4.0 to about 8.0 or from 4.0 to about 6.0; or
   (c) a combination thereof.
9. The catalytic system of embodiment 7, wherein the host catalyst and the guest template form a structure of: 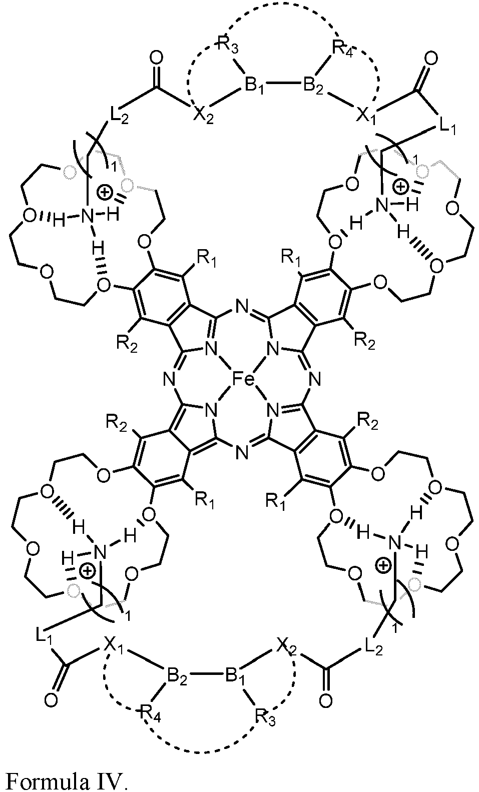
10. The catalytic system of embodiment 7, wherein:
   (a) each occurrence of R₁ and R₂ are independently hydrogen, a substituted or unsubstituted alkyl, a substituted or unsubstituted alkenyl, a substituted or unsubstituted alkynyl, a hydroxyl, an alkoxyl, or a carbonyl, optionally each occurrence of R₁ and R₂ are hydrogen; or
   (b) B₁ and B₂ are independently a carbon atom, a substituted or unsubstituted aryl, or a substituted or unsubstituted polyaryl; and R₃ and R₄ are independently absent, hydrogen, a substituted or unsubstituted alkyl, a substituted or unsubstituted aryl, or a substituted or unsubstituted aralkyl; or
   (c) a combination thereof.
11. The catalytic system of embodiment 7, wherein:
   (a) 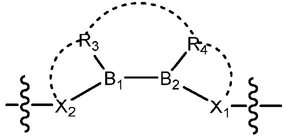 is: 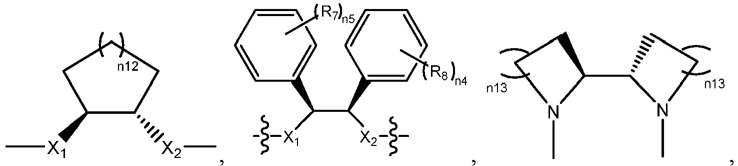 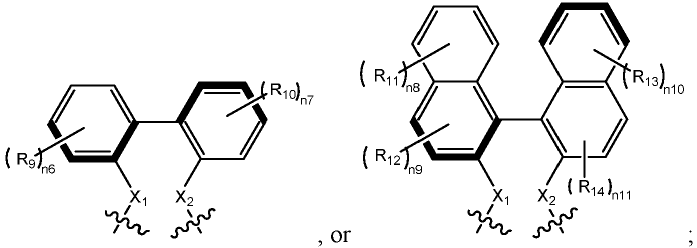
      X₁ and X₂ are independently an oxygen atom or NR₅, R₅ is absent or hydrogen;
      n₄ and n₅ are independently an integer from 0 to 5;
      n₆, n₇, n₈, and n₁₀ are independently an integer from 0 to 4;
      n₉ and n₁₁ are independently an integer from 0 to 2;
      n₁₂-n₁₄ are independently an integer from 1 to 6; and
      R₇-R₁₄ are independently hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, or
   (b) L₁ and L₂ are independently 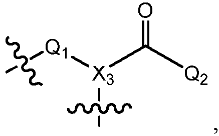 wherein X₃ is a nitrogen atom, and wherein Q₁ and Q₂ are independently a substituted or unsubstituted aryl, a substituted or unsubstituted polyaryl, a substituted or unsubstituted cycloalkyl, a substituted or unsubstituted cycloalkenyl, or a substituted or unsubstituted cycloalkynyl, optionally Q₁ and Q₂ are unsubstituted phenyl, or
   (c) a combination thereof.
12. The catalytic system of embodiment 7, wherein the host catalyst and the guest template form a complex having a structure of: 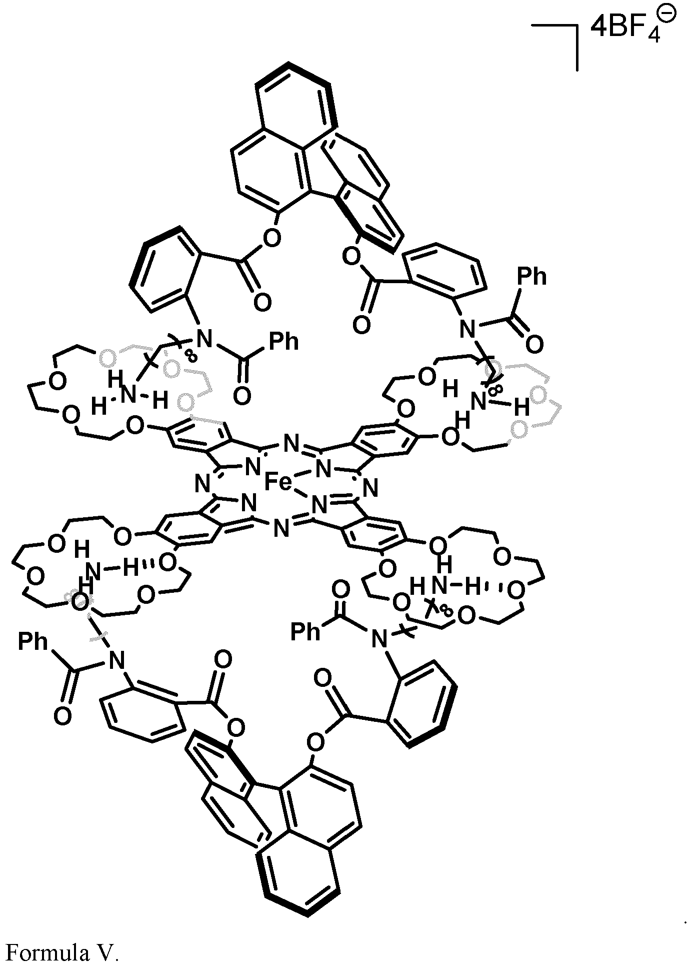
13. A method for asymmetric C-H amination of a substrate comprising:
   (i) maintaining a reaction mixture at room temperature for a period of time sufficient to form a product,
   wherein the reaction mixture comprises the substrate, a nitrogen-source reactant, the catalytic system of embodiment 7, and a solvent.
14. The method of embodiment 13, wherein the nitrogen-source reactant is R'-NH₂ or R"IN-R', wherein R' is -SO₂-R'₁ or -SO₃-R'₂; R'₁ and R'₂ are independently a substituted or unsubstituted phenyl or a substituted or an unsubstituted alkyl (e.g., an unsubstituted linear or branched C1-C10 alkyl, an unsubstituted linear or branched C1-C8 alkyl, an unsubstituted linear or branched C1-C6 alkyl, an unsubstituted linear or branched C1-C4 alkyl, etc., such as a tert-butyl, or a haloalkyl, such as -CH₂CCl₃, -CCl₃, -CH₂CH₂CCl₃, -CH₂CCl₂CCl₃, etc.); R'' is a substituted or unsubstituted phenyl; and the substituents, when present, are independently an unsubstituted alkyl (e.g., any one of those described above, such as a methyl), a halide (e.g., fluoride, chloride, bromide, iodide, etc.), a nitro, a cyano, a nitrile, or a carbonyl.
15. The method of embodiment 13, wherein:
   the substrate has a structure of R-H, and
   the product has a structure of R-NHR',
   R is a substituted or unsubstituted aryl (e.g., a substituted or unsubstituted tetralin, a substituted or unsubstituted indane, a substituted or unsubstituted aralkyl, etc.), a substituted or unsubstituted polyaryl, a substituted or unsubstituted heteroaryl, a substituted or unsubstituted heteropolyaryl, a substituted or unsubstituted heterocyclyl (e.g., a substituted or unsubstituted chromane, a substituted or unsubstituted isochromane, a substituted or unsubstituted thiochromane, a substituted or unsubstituted isothiochromane, dihydrobenzofuran, dihydroisobenzofuran, dihydrobenzothiophene, dihydroisobenzothiophene, etc.), a substituted or unsubstituted cycloalkyl (monocyclic or polycyclic, such as a fused cycloalkyl ring), a substituted or unsubstituted cycloalkenyl (monocyclic or polycyclic, such as a fused cycloalkenyl ring), or a substituted or unsubstituted cycloalkynyl (monocyclic or polycyclic, such as a fused cycloalkynyl ring); and
   the substituents are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a siloxy, a sulfinyl, a sulfonyl, a sulfonic acid, a phosphonium, a phosphanyl, a phosphoryl, a phosphonyl, or a thiol, or a combination thereof.
16. The method of embodiment 13, wherein:
   the substrate has a structure of: 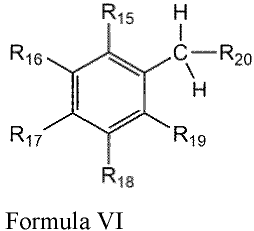 and
   the product has a structure of: 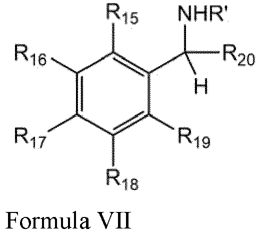
   R₁₅-R₂₀ are independently hydrogen, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted alkenyl, a substituted or unsubstituted alkynyl, a substituted or unsubstituted aryl (e.g., a substituted or unsubstituted phenyl or benzyl), an alkoxyl (e.g., a methoxyl, an ethoxyl, etc.), a halide, a hydroxyl, a carbonyl, an amino, an amido, a silyl, or a siloxyl, or R₂₀ and R₁₅ together or R₂₀ and R₁₉ together, with the carbon atoms to which they are attached, can form a substituted or unsubstituted cycloalkyl (including monocyclic, such as a substituted or unsubstituted cyclopentyl and cyclohexyl, and polycyclic, such as a substituted or unsubstituted fused cycloalkyl ring), a substituted or unsubstituted cycloalkenyl (monocyclic or polycyclic, such as a fused cycloalkenyl ring), a substituted or unsubstituted cycloalkynyl (monocyclic or polycyclic, such as a fused cycloalkynyl ring), a substituted or unsubstituted aryl, a substituted or unsubstituted polyaryl, a substituted or unsubstituted heterocyclyl (e.g., a substituted or unsubstituted oxanyl, a substituted or unsubstituted thianyl, a substituted or unsubstituted oxolanyl, a substituted or unsubstituted thiolanyl, etc.), a substituted or unsubstituted heteroaryl, or a substituted or unsubstituted heteropolyaryl; the substituents, when present, are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a siloxy, a sulfinyl, a sulfonyl, a sulfonic acid, a phosphonium, a phosphanyl, a phosphoryl, a phosphonyl, or a thiol, or a combination thereof, such as a substituted or unsubstituted alkyl, a substituted or unsubstituted aryl, a carbonyl, an oxo, an amino, or an alkoxyl.
17. The method of embodiment 16, wherein:
   (a) R₁₉ is hydrogen and R₂₀ is a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), or R₂₀ and R₁₉ together, with the carbon atoms to which they are attached, form a substituted or unsubstituted cycloalkyl (including monocyclic, such as a substituted or unsubstituted cyclopentyl and cyclohexyl, and polycyclic, such as a substituted or unsubstituted fused cycloalkyl ring) or a substituted or unsubstituted heterocyclyl (e.g., a substituted or unsubstituted oxanyl, a substituted or unsubstituted thianyl, a substituted or unsubstituted oxolanyl, a substituted or unsubstituted thiolanyl, etc.); or
   (b) R₁₅-R₁₈ are independently hydrogen, a halide, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted aryl (e.g., a substituted or unsubstituted phenyl or benzyl), an alkoxyl (e.g., a methoxyl, an ethoxyl, etc.), a carbonyl, or a siloxyl; or
   (c) a combination thereof.
18. The method of embodiment 16, wherein R₁₅, R₁₆, and R₁₈ are hydrogen and R₁₇ is hydrogen, a halide, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted aryl (e.g., a substituted or unsubstituted phenyl or benzyl), an alkoxyl (e.g., a methoxyl, an ethoxyl, etc.), a carbonyl, or a siloxyl.
19. The method of embodiment 14, wherein R' is Tces, Ts, Ns, halobenzene sulfonyl, or halobenzene sulfonate (e.g., a p-chlorobenzene sulfonyl or p-chlorobenzene sulfonate); and R'' is an unsubstituted phenyl or a phenyl substituted with alkyl or halide (e.g., a chlorobenzene or alkylbenzene).
20. The method of embodiment 13, wherein the nitrogen-source reactant in the reaction mixture is PhINTces.
21. The method of embodiment 13, wherein the substrate has a structure of: 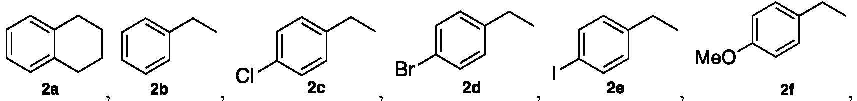 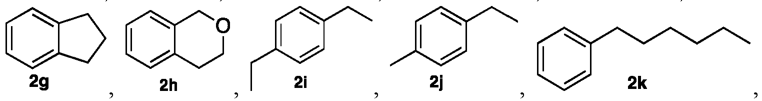 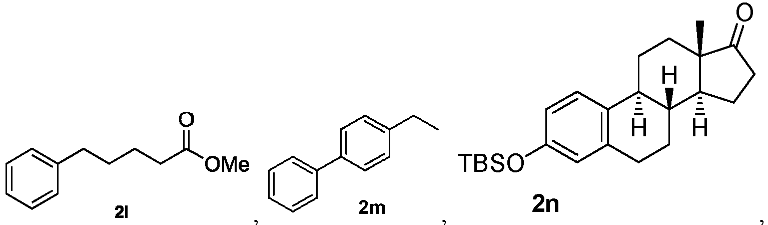 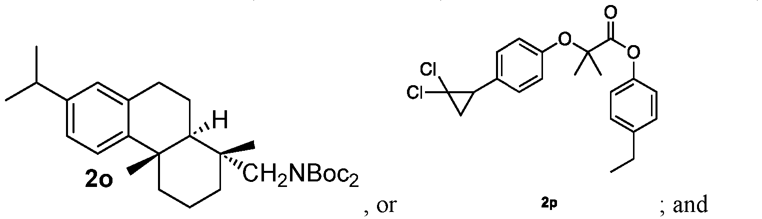 and the product has a structure of: 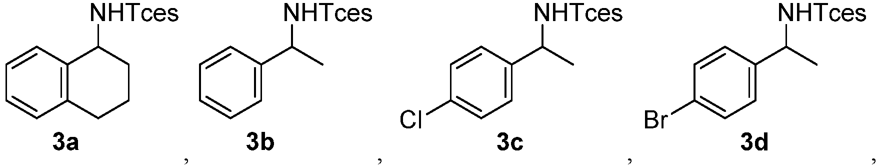 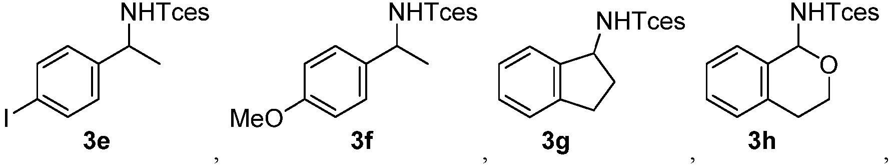 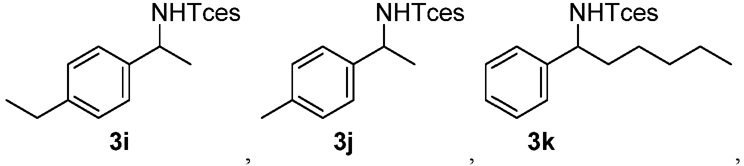 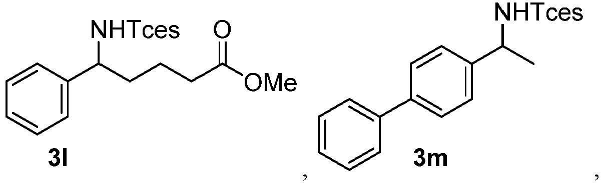 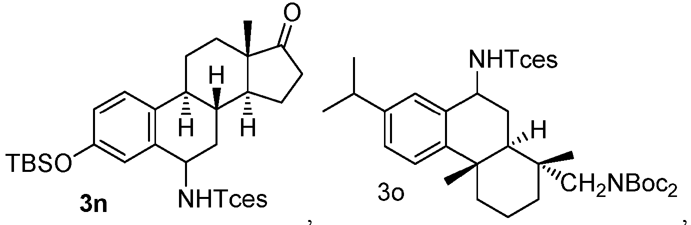 or 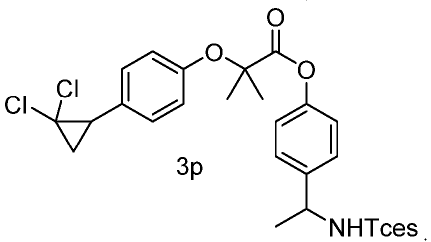
22. The method of embodiment 13, wherein the substrate and the nitrogen-source reactant have a molar ratio in a range from 10:1 to 1:1 or from 10:1 to 5:1, such as 8:1.
23. The method of embodiment 13, wherein the host catalyst has a loading in a range from about 5 mol% to about 30 mol% or from about 10 mol% to about 20 mol%, such as about 15 mol%.
24. The method of embodiment 13, wherein:
   (a) the solvent is CH₃CN, THF, HFIP, or C₆H₆, preferably wherein the solvent is CH₃CN; or
   (b) the reaction mixture further comprises a drying agent or a molecular sieve, such as a 3Å molecular sieve, a 4Å molecular sieve, or a 5Å molecular sieve; or
   (c) the reaction is performed under an inert gas environment, optionally wherein the inert gas is argon; or
   (d) a combination thereof.
25. The method of embodiment 13, wherein the reaction mixture is maintained in a range from about 30 minutes to about 24 hours, from about 1 hour to about 20 hours, or from about 2 hours to about 18 hours, such as about 16 hours.
26. The method of embodiment 13, wherein the product has a yield of at least 30%, at least 40%, at least 50%, in a range from about 30% to about 70%, from about 40% to about 70%, or from about 50% to about 70%.
27. The method of embodiment 13, wherein the product has an enantiomeric ratio of at least 2:1, such as in a range from 2:1 to 99:1, from 4:1 to 99:1, from 9:1 to 99:1, or from 19:1 to 99:1, as determined by chiral HPLC.

## Claims

1. A host catalyst having a structure of: 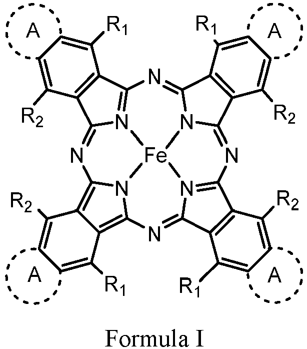 wherein:
(i) each occurrence of A, together with the carbon atoms to which it is attached, forms a crown ether;
(ii) each occurrence of R₁ and R₂ are independently hydrogen, a substituted or unsubstituted alkyl, a substituted or unsubstituted alkenyl, a substituted or unsubstituted alkynyl, a substituted or unsubstituted aryl, a substituted or unsubstituted polyaryl, a substituted or unsubstituted heteroaryl, a substituted or unsubstituted heteropolyaryl, a substituted or unsubstituted cyclic group, a substituted or unsubstituted heterocyclic, a substituted or unsubstituted aralkyl, a halide, a hydroxyl, an alkoxyl, an amino, an amido, a carbonyl, a nitro, a nitrile, or a thiol; and
(iii) the substituents are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

2. The host catalyst of claim 1, wherein:
(i) each occurrence of A, together with the carbon atoms to which it is attached, forms a 12-crown-4 ether, a 15-crown-5-ether, an 18-crown-6 ether, a dibenzo-18-crown-6 ether, a 24-crown-8 ether, or an aza-crown ether;
(ii) the host catalyst has a structure of: 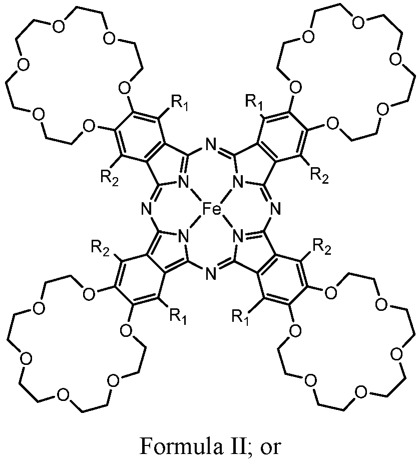
(iii) each occurrence of R₁ and R₂ are independently hydrogen, a substituted or unsubstituted alkyl, a substituted or unsubstituted alkenyl, a substituted or unsubstituted alkynyl, a hydroxyl, an alkoxyl, or a carbonyl, optionally wherein each occurrence of R₁ and R₂ are hydrogen.

3. A guest template having a structure of: 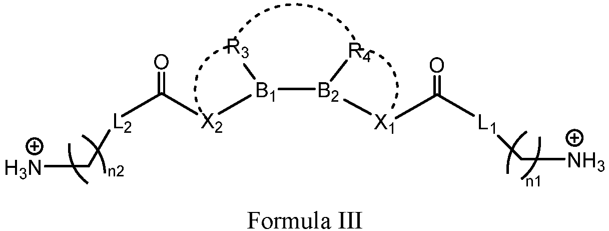 wherein:
(i) B₁ and B₂ are independently absent, a carbon atom, a substituted or unsubstituted aryl, a substituted or unsubstituted polyaryl, a substituted or unsubstituted heteroaryl, a substituted or unsubstituted heteropolyaryl, or a substituted or unsubstituted heterocyclic, optionally B₁ and B₂ are independently a carbon atom, a substituted or unsubstituted aryl, or a substituted or unsubstituted polyaryl;
(ii) R₃ and R₄ are independently absent, hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, optionally R₃ and R₄ are independently absent, hydrogen, a substituted or unsubstituted alkyl, a substituted or unsubstituted aryl, or a substituted or unsubstituted aralkyl;
(iii) ------ is absent or a bond (single, double, or triple);
(iv) X₁ and X₂ are independently absent, oxygen atom, or NR₅, and R₅ is absent, hydrogen, or a substituted or unsubstituted alkyl;
(v) L₁ and L₂ are independently absent or 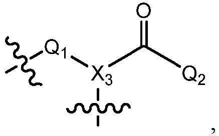
X₃ is a nitrogen atom or CR₆, R₆ is hydrogen or a substituted or unsubstituted alkyl,
Q₁ and Q₂ are independently a substituted or unsubstituted alkyl, a substituted or unsubstituted alkenyl, or a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, a substituted or unsubstituted cycloalkyl, a substituted or unsubstituted cycloalkenyl, or a substituted or unsubstituted cycloalkynyl;
(vi) n₁ and n₂ are independently an integer from 0 to 20; and
(vii) the substituents are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

4. The guest template of claim 3, wherein:
(a) 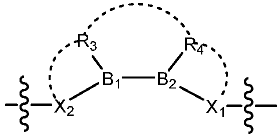 is 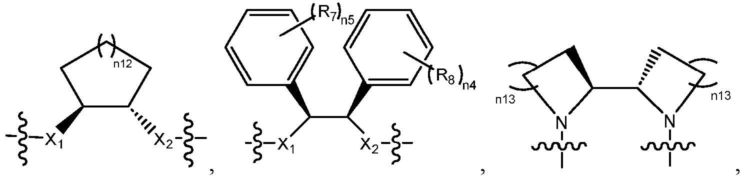 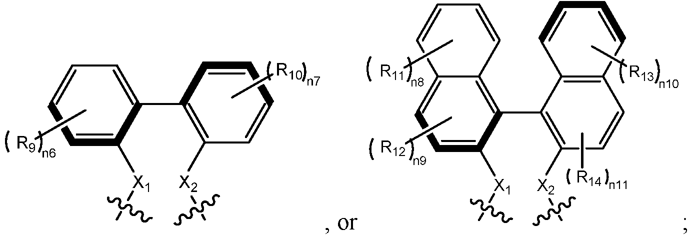
X₁ and X₂ are independently an oxygen atom or NR₅, R₅ is absent or hydrogen;
n₄ and n₅ are independently an integer from 0 to 5;
n₆, n₇, n₈, and n₁₀ are independently an integer from 0 to 4;
n₉ and n₁₁ are independently an integer from 0 to 2;
n₁₂-n₁₄ are independently an integer from 1 to 6; and
R₇-R₁₄ are independently hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, or
(b) L₁ and L₂ are independently 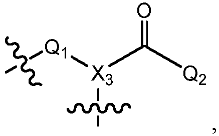 wherein X₃ is a nitrogen atom, and wherein Q₁ and Q₂ are independently a substituted or unsubstituted aryl, a substituted or unsubstituted polyaryl, a substituted or unsubstituted cycloalkyl, a substituted or unsubstituted cycloalkenyl, or a substituted or unsubstituted cycloalkynyl, optionally Q₁ and Q₂ are unsubstituted phenyl, or
(c) a combination thereof.

5. A catalytic system comprising:
a host catalyst; and
a guest template,
wherein the host catalyst has the structure of: 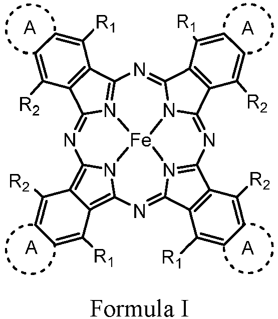 wherein:
(i) each occurrence of A, together with the carbon atoms to which it is attached, forms a crown ether;
(ii) each occurrence of R₁ and R₂ are independently hydrogen, a substituted or unsubstituted alkyl, a substituted or unsubstituted alkenyl, a substituted or unsubstituted alkynyl, a substituted or unsubstituted aryl, a substituted or unsubstituted polyaryl, a substituted or unsubstituted heteroaryl, a substituted or unsubstituted heteropolyaryl, a substituted or unsubstituted cyclic group, a substituted or unsubstituted heterocyclic, a substituted or unsubstituted aralkyl, a halide, a hydroxyl, an alkoxyl, an amino, an amido, a carbonyl, a nitro, a nitrile, or a thiol; and
wherein the guest template has the structure of: 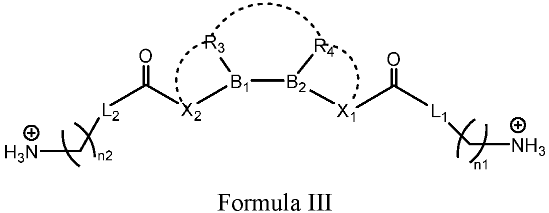 wherein:
(i) B₁ and B₂ are independently absent, a carbon atom, a substituted or unsubstituted aryl, a substituted or unsubstituted polyaryl, a substituted or unsubstituted heteroaryl, a substituted or unsubstituted heteropolyaryl, or a substituted or unsubstituted heterocyclic;
(ii) R₃ and R₄ are independently absent, hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic;
(iii) ------ is absent or a bond (single, double, or triple);
(iv) X₁ and X₂ are independently absent, oxygen atom, or NR₅, and R₅ is absent, hydrogen, or a substituted or unsubstituted alkyl;
(v) L₁ and L₂ are independently absent or 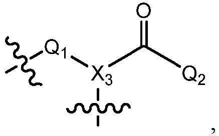
X₃ is a nitrogen atom or CR₆, R₆ is hydrogen or a substituted or unsubstituted alkyl,
Q₁ and Q₂ are independently a substituted or unsubstituted alkyl, a substituted or unsubstituted alkenyl, or a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, a substituted or unsubstituted cycloalkyl, a substituted or unsubstituted cycloalkenyl, or a substituted or unsubstituted cycloalkynyl;
(vi) n₁ and n₂ are independently an integer from 0 to 20; and
wherein the substituents are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, an carboxyl, an amino, an amido, an oxo, a silyl, a sulfinyl, a sulfonyl, a sulfonic acid, a phosphonium, a phosphanyl, a phosphoryl, a phosphonyl, or a thiol, or a combination thereof.

6. The catalytic system of claim 5, wherein:
(i)
(a) the host catalyst and the guest template have a molar ratio ranging from 1:10 to 1: 1, from 1:5 to 1: 1, such as 1:2, or
(b) the host catalyst and the guest template are non-covalently bound to each other, optionally via the crown ether of the host catalyst and the ammonium group of the guest template, and optionally wherein the binding between the host catalyst and the guest template has a log(K) of at least 4.0, such as in a range from 4.0 to about 8.0 or from 4.0 to about 6.0, or
(c) a combination thereof; or
(ii) the host catalyst and the guest template form a structure of:

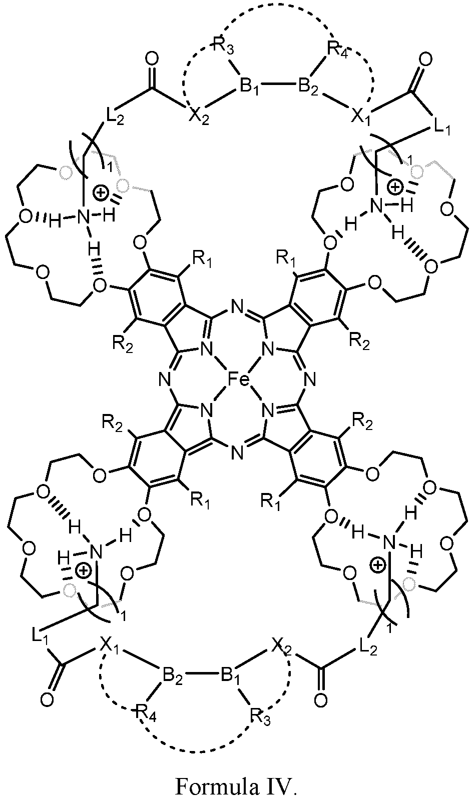

7. The catalytic system of claim 5, wherein:
(i)
(a) each occurrence of R₁ and R₂ are independently hydrogen, a substituted or unsubstituted alkyl, a substituted or unsubstituted alkenyl, a substituted or unsubstituted alkynyl, a hydroxyl, an alkoxyl, or a carbonyl, optionally each occurrence of R₁ and R₂ are hydrogen, or
(b) B₁ and B₂ are independently a carbon atom, a substituted or unsubstituted aryl, or a substituted or unsubstituted polyaryl; and R₃ and R₄ are independently absent, hydrogen, a substituted or unsubstituted alkyl, a substituted or unsubstituted aryl, or a substituted or unsubstituted aralkyl, or
(c) a combination thereof;
(ii)
(a) 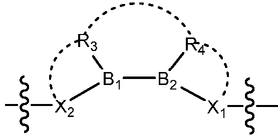 is: 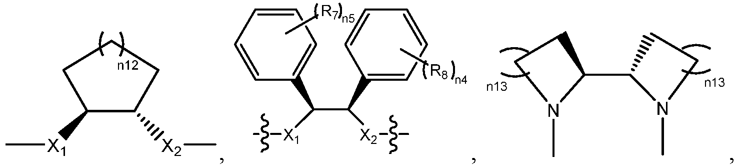 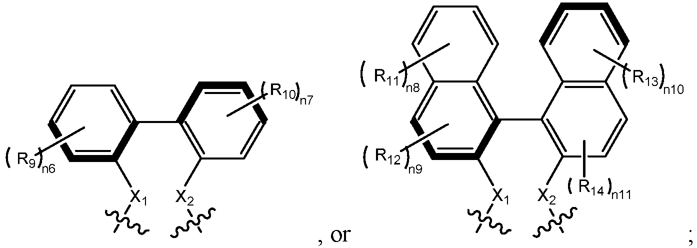
X₁ and X₂ are independently an oxygen atom or NR₅, R₅ is absent or hydrogen;
n₄ and n₅ are independently an integer from 0 to 5;
n₆, n₇, n₈, and n₁₀ are independently an integer from 0 to 4;
n₉ and n₁₁ are independently an integer from 0 to 2;
n₁₂-n₁₄ are independently an integer from 1 to 6; and
R₇-R₁₄ are independently hydrogen, a substituted or unsubstituted alkyl, a substituted or unsubstituted alkenyl, a substituted or unsubstituted alkynyl, a substituted or unsubstituted aryl, a substituted or unsubstituted aralkyl, a substituted or unsubstituted polyaryl, a substituted or unsubstituted heteroaryl, a substituted or unsubstituted heteropolyaryl, or a substituted or unsubstituted heterocyclic, or
(b) L₁ and L₂ are independently 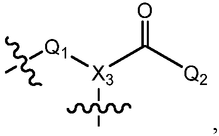 wherein X₃ is a nitrogen atom, and wherein Q₁ and Q₂ are independently a substituted or unsubstituted aryl, a substituted or unsubstituted polyaryl, a substituted or unsubstituted cycloalkyl, a substituted or unsubstituted cycloalkenyl, or a substituted or unsubstituted cycloalkynyl, optionally Q₁ and Q₂ are unsubstituted phenyl, or
(c) a combination thereof; or
(iii) the host catalyst and the guest template form a complex having a structure of:

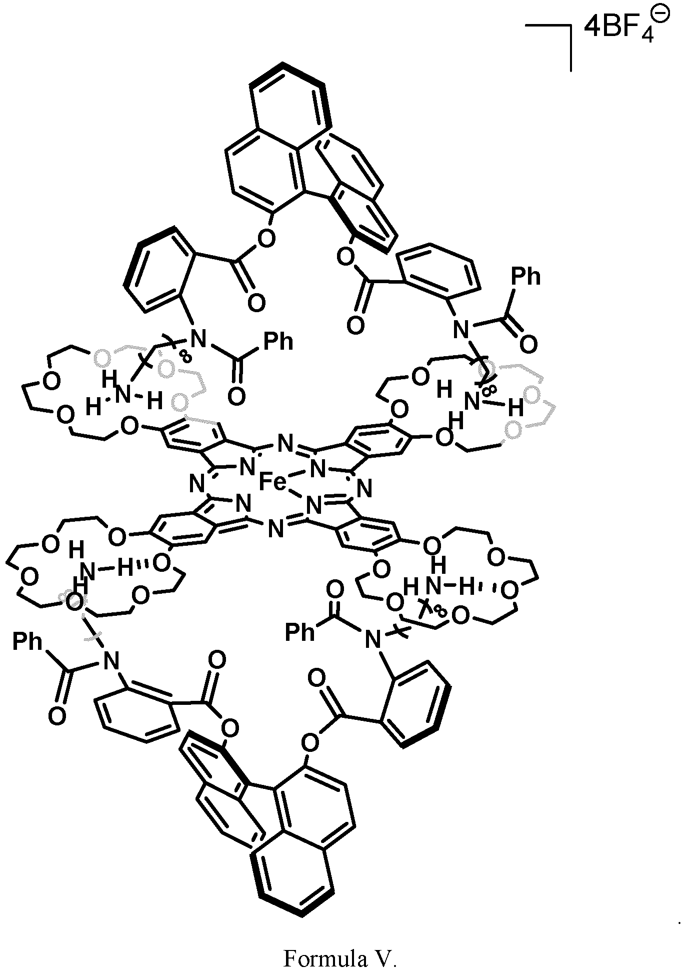

8. A method for asymmetric C-H amination of a substrate comprising:
(i) maintaining a reaction mixture at room temperature for a period of time sufficient to form a product,
wherein the reaction mixture comprises the substrate, a nitrogen-source reactant, the catalytic system of claim 5, and a solvent.

9. The method of claim 8, wherein the nitrogen-source reactant is R'-NH₂ or R''IN-R', wherein R' is -SO₂-R'₁ or -SO₃-R'₂; R'₁ and R'₂ are independently a substituted or unsubstituted phenyl or a substituted or an unsubstituted alkyl (e.g., an unsubstituted linear or branched C1-C10 alkyl, an unsubstituted linear or branched C1-C8 alkyl, an unsubstituted linear or branched C1-C6 alkyl, an unsubstituted linear or branched C1-C4 alkyl, etc., such as a tert-butyl, or a haloalkyl, such as -CH₂CCl₃, -CCl₃, -CH₂CH₂CCl₃, - CH₂CCl₂CCl₃, etc.); R'' is a substituted or unsubstituted phenyl; and the substituents, when present, are independently an unsubstituted alkyl (e.g., any one of those described above, such as a methyl), a halide (e.g., fluoride, chloride, bromide, iodide, etc.), a nitro, a cyano, a nitrile, or a carbonyl.

10. The method of claim 8, wherein:
the substrate has a structure of R-H, and
the product has a structure of R-NHR',
R is a substituted or unsubstituted aryl (e.g., a substituted or unsubstituted tetralin, a substituted or unsubstituted indane, a substituted or unsubstituted aralkyl, etc.), a substituted or unsubstituted polyaryl, a substituted or unsubstituted heteroaryl, a substituted or unsubstituted heteropolyaryl, a substituted or unsubstituted heterocyclyl (e.g., a substituted or unsubstituted chromane, a substituted or unsubstituted isochromane, a substituted or unsubstituted thiochromane, a substituted or unsubstituted isothiochromane, dihydrobenzofuran, dihydroisobenzofuran, dihydrobenzothiophene, dihydroisobenzothiophene, etc.), a substituted or unsubstituted cycloalkyl (monocyclic or polycyclic, such as a fused cycloalkyl ring), a substituted or unsubstituted cycloalkenyl (monocyclic or polycyclic, such as a fused cycloalkenyl ring), or a substituted or unsubstituted cycloalkynyl (monocyclic or polycyclic, such as a fused cycloalkynyl ring); and
the substituents are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a siloxy, a sulfinyl, a sulfonyl, a sulfonic acid, a phosphonium, a phosphanyl, a phosphoryl, a phosphonyl, or a thiol, or a combination thereof.

11. The method of claim 8, wherein:
the substrate has a structure of: 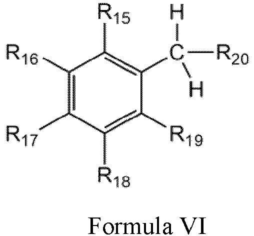 and
the product has a structure of: 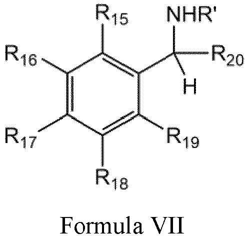
R₁₅-R₂₀ are independently hydrogen, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted alkenyl, a substituted or unsubstituted alkynyl, a substituted or unsubstituted aryl (e.g., a substituted or unsubstituted phenyl or benzyl), an alkoxyl (e.g., a methoxyl, an ethoxyl, etc.), a halide, a hydroxyl, a carbonyl, an amino, an amido, a silyl, or a siloxyl, or R₂₀ and R₁₅ together or R₂₀ and R₁₉ together, with the carbon atoms to which they are attached, can form a substituted or unsubstituted cycloalkyl (including monocyclic, such as a substituted or unsubstituted cyclopentyl and cyclohexyl, and polycyclic, such as a substituted or unsubstituted fused cycloalkyl ring), a substituted or unsubstituted cycloalkenyl (monocyclic or polycyclic, such as a fused cycloalkenyl ring), a substituted or unsubstituted cycloalkynyl (monocyclic or polycyclic, such as a fused cycloalkynyl ring), a substituted or unsubstituted aryl, a substituted or unsubstituted polyaryl, a substituted or unsubstituted heterocyclyl (e.g., a substituted or unsubstituted oxanyl, a substituted or unsubstituted thianyl, a substituted or unsubstituted oxolanyl, a substituted or unsubstituted thiolanyl, etc.), a substituted or unsubstituted heteroaryl, or a substituted or unsubstituted heteropolyaryl; the substituents, when present, are independently a substituted or unsubstituted alkyl, a substituted or unsubstituted alkenyl, a substituted or unsubstituted alkynyl, a substituted or unsubstituted cyclic group, a substituted or unsubstituted heterocyclic group, a substituted or unsubstituted aryl, a substituted or unsubstituted heteroaryl, a substituted or unsubstituted polyaryl, a substituted or unsubstituted polyheteroaryl, a substituted or unsubstituted aralkyl, a carbonyl, a halide, a hydroxyl, a phenoxy, an aroxy, an alkylthio, a phenylthio, an arylthio, a cyano, an isocyano, an alkoxyl, a nitro, a carboxyl, an amino, an amido, an oxo, a silyl, a siloxy, a sulfinyl, a sulfonyl, a sulfonic acid, a phosphonium, a phosphanyl, a phosphoryl, a phosphonyl, or a thiol, or a combination thereof, such as a substituted or unsubstituted alkyl, a substituted or unsubstituted aryl, a carbonyl, an oxo, an amino, or an alkoxyl; preferably wherein:
(i)
(a) R₁₉ is hydrogen and R₂₀ is a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), or R₂₀ and R₁₉ together, with the carbon atoms to which they are attached, form a substituted or unsubstituted cycloalkyl (including monocyclic, such as a substituted or unsubstituted cyclopentyl and cyclohexyl, and polycyclic, such as a substituted or unsubstituted fused cycloalkyl ring) or a substituted or unsubstituted heterocyclyl (e.g., a substituted or unsubstituted oxanyl, a substituted or unsubstituted thianyl, a substituted or unsubstituted oxolanyl, a substituted or unsubstituted thiolanyl, etc.); or
(b) R₁₅-R₁₈ are independently hydrogen, a halide, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted aryl (e.g., a substituted or unsubstituted phenyl or benzyl), an alkoxyl (e.g., a methoxyl, an ethoxyl, etc.), a carbonyl, or a siloxyl; or
(c) a combination thereof; or
(ii) R₁₅, R₁₆, and R₁₈ are hydrogen and R₁₇ is hydrogen, a halide, a substituted or unsubstituted alkyl (e.g., a substituted or unsubstituted C1-C10 linear or branched alkyl, a substituted or unsubstituted C1-C8 linear or branched alkyl, a substituted or unsubstituted C1-C6 linear or branched alkyl, etc.), a substituted or unsubstituted aryl (e.g., a substituted or unsubstituted phenyl or benzyl), an alkoxyl (e.g., a methoxyl, an ethoxyl, etc.), a carbonyl, or a siloxyl.

12. The method of claim 9, wherein R' is Tces, Ts, Ns, halobenzene sulfonyl, or halobenzene sulfonate (e.g., a p-chlorobenzene sulfonyl or p-chlorobenzene sulfonate); and R'' is an unsubstituted phenyl or a phenyl substituted with alkyl or halide (e.g., a chlorobenzene or alkylbenzene).

13. The method of claim 8, wherein:
(i) the nitrogen-source reactant in the reaction mixture is PhINTces;
(ii) the substrate has a structure of: 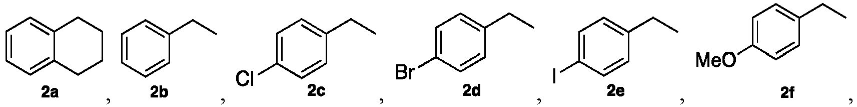 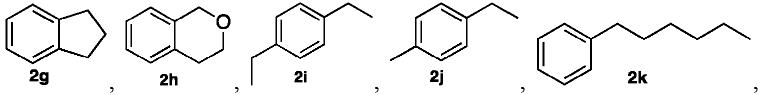 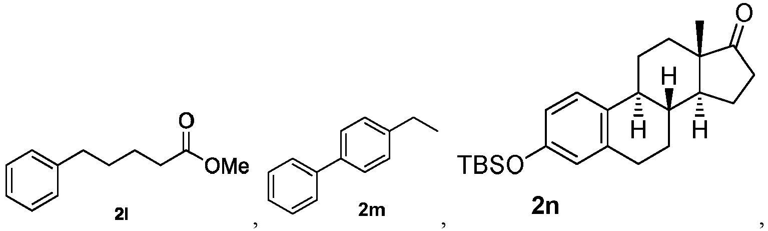 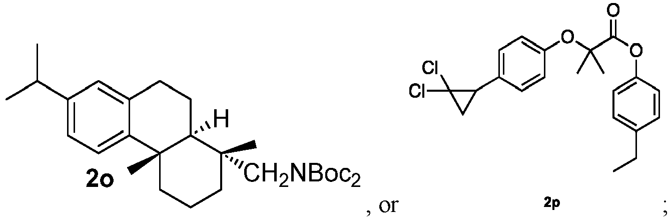 and the product has a structure of: 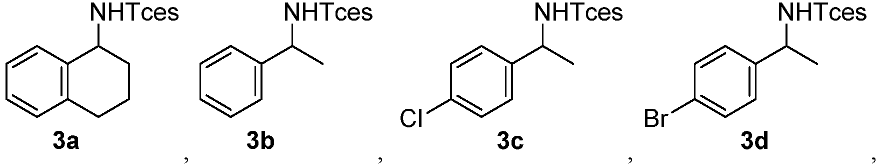 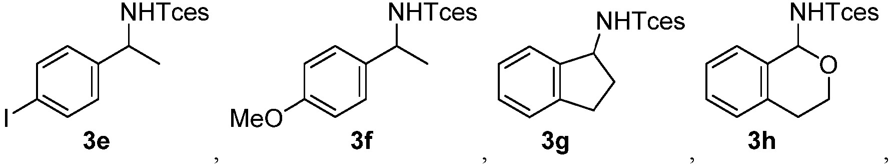 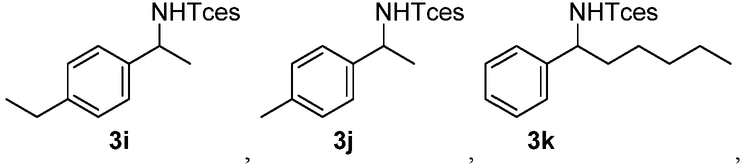 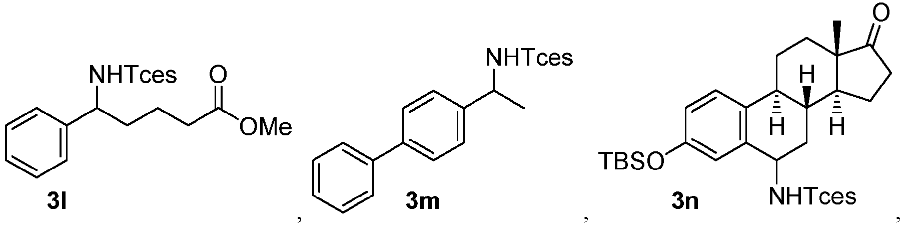 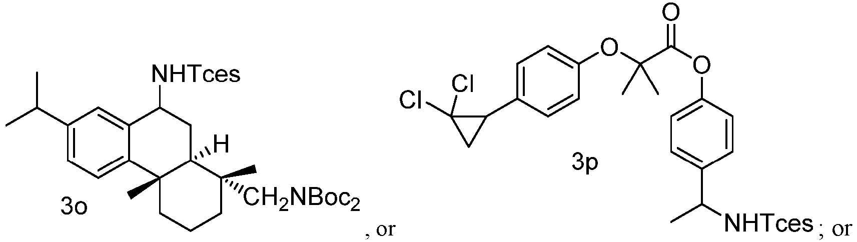
(iii) the substrate and the nitrogen-source reactant have a molar ratio in a range from 10:1 to 1:1 or from 10:1 to 5:1, such as 8:1.

14. The method of claim 8, wherein:
(i) the host catalyst has a loading in a range from about 5 mol% to about 30 mol% or from about 10 mol% to about 20 mol%, such as about 15 mol%;
(ii)
(a) the solvent is CH₃CN, THF, HFIP, or C₆H₆, preferably wherein the solvent is CH₃CN; or
(b) the reaction mixture further comprises a drying agent or a molecular sieve, such as a 3Å molecular sieve, a 4Å molecular sieve, or a 5Å molecular sieve; or
(c) the reaction is performed under an inert gas environment, optionally wherein the inert gas is argon; or
(d) a combination thereof; or
(iii) the reaction mixture is maintained in a range from about 30 minutes to about 24 hours, from about 1 hour to about 20 hours, or from about 2 hours to about 18 hours, such as about 16 hours.

15. The method of claim 8, wherein:
(i) the product has a yield of at least 30%, at least 40%, at least 50%, in a range from about 30% to about 70%, from about 40% to about 70%, or from about 50% to about 70%; or
(ii) the product has an enantiomeric ratio of at least 2:1, such as in a range from 2:1 to 99:1, from 4:1 to 99:1, from 9:1 to 99:1, or from 19:1 to 99:1, as determined by chiral HPLC.
